# EUROPEAN PATENT SPECIFICATION

(11) **EP 4 143 632 B1**
(45) Date of publication and mention of the grant of the patent: **14.10.2026**
(21) Application number: 21797591.1
(22) Date of filing: 29.04.2021
(51) Int. Cl.: G02F 1/13, G02F 1/133, G02F 1/1335, G02F 1/13357, G02F 1/13363, G02F 1/1347, G02F 1/01, G02B 5/30, G02B 30/31, G06F 21/84, F21V 8/00

(54) **DIRECTIONAL DISPLAY APPARATUS**
RICHTUNGSANZEIGEGERÄT
APPAREIL D'AFFICHAGE DIRECTIONNEL

(30) Priority: 30.04.2020 US 202063017714 P
(43) Date of publication of application: 08.03.2023
(73) Proprietor: RealD Spark, LLC, Boulder, Colorado 80301 (US)
(72) Inventor: WOODGATE, Graham J., Beverly Hills, California 90212 (US); ROBINSON, Michael G., Beverly Hills, California 90212 (US); RAMSEY, Robert A., Beverly Hills, California 90212 (US)
(74) Representative: J A Kemp LLP
(86) International application number: PCT/US2021/029944
(87) International publication number: WO 2021/222604

(56) References cited:
- US-A- 3 914 022
- US-A1- 2004 141 107
- US-A1- 2005 190 329
- US-A1- 2006 098 296
- US-A1- 2009 021 657
- US-A1- 2018 329 245
- US-A1- 2018 329 245
- US-A1- 2020 019 006
- US-A1- 2020 041 839

## Description

### TECHNICAL FIELD

This disclosure generally relates to illumination from light modulation devices, and more specifically relates to optical stacks for providing control of illumination for use in display including privacy display and night-time display.

### BACKGROUND

Privacy displays provide image visibility to a primary user that is typically in an on-axis position and reduced visibility of image content to a snooper, that is typically in an off-axis position. A privacy function may be provided by micro-louvre optical films that transmit some light from a display in an on-axis direction with low luminance in off-axis positions. However such films have high losses for head-on illumination and the micro-louvres may cause Moiré artefacts due to beating with the pixels of the spatial light modulator. The pitch of the micro-louvre may need selection for panel resolution, increasing inventory and cost.

Switchable privacy displays may be provided by control of the off-axis optical output.

Control may be provided by means of luminance reduction, for example by means of switchable backlights for a liquid crystal display (LCD) spatial light modulator. Display backlights in general employ waveguides and edge emitting sources. Certain imaging directional backlights have the additional capability of directing the illumination through a display panel into viewing windows. An imaging system may be formed between multiple sources and the respective window images. One example of an imaging directional backlight is an optical valve that may employ a folded optical system and hence may also be an example of a folded imaging directional backlight. Light may propagate substantially without loss in one direction through the optical valve while counterpropagating light may be extracted by reflection off tilted facets as described in U.S. Patent No. 9,519,153.
US 2020/019006 A1 discloses a light modulation device.
US 2020/041839 A1 discloses a light modulation device.
US 2005/190329 A1 discloses a viewing angle control element.
US 2009/021657 A1 discloses a viewing angle controllable liquid crystal display.
US 2018/329245 A1 discloses a light modulation device.

### BRIEF SUMMARY

According to a first aspect of the present disclosure there is provided a display device comprising: a spatial light modulator; a display polariser arranged on a side of the spatial light modulator, the display polariser being a linear polariser; a first additional polariser arranged on the same side of the spatial light modulator as the display polariser, the first additional polariser being a linear polariser; at least one first polar control retarder arranged between the first additional polariser and the display polariser, a second additional polariser, the second additional polariser being a linear polariser; and at least one second polar control retarder, wherein either: the second additional polariser is arranged on the same side of the spatial light modulator as the first additional polariser outside the first additional polariser, and the at least one second polar control retarder is arranged between the first additional polariser and the second additional polariser; or the display device further comprises a backlight arranged to output light, the spatial light modulator comprises a transmissive spatial light modulator arranged to receive output light from the backlight, said display polariser is an input display polariser arranged on the input side of the spatial light modulator, and the display device further comprises an output display polariser arranged on the output side of the spatial light modulator, the second additional polariser is arranged on the output side of the spatial light modulator, and the at least one second polar control retarder is arranged between the second additional polariser and the output display polariser, wherein: each of the at least one first polar control retarder and the at least one second polar control retarder comprises a respective switchable liquid crystal retarder comprising a layer of liquid crystal material and two surface alignment layers disposed adjacent to the layer of liquid crystal material and on opposite sides thereof, in respect of one of the at least one first polar control retarder and the at least one second polar control retarder, one of the surface alignment layers is arranged to provide homogenous alignment in the adjacent liquid crystal material and the other of the surface alignment layers is arranged to provide homeotropic alignment in the adjacent liquid crystal material, and in respect of the other of the at least one first polar control retarder and the at least one second polar control retarder, both of the surface alignment layers are arranged to provide homogenous alignment in the adjacent liquid crystal material or both of the surface alignment layers are arranged to provide homeotropic alignment in the adjacent liquid crystal material. Advantageously a switchable privacy display may be provided with extended polar regions over which desirable security level may be achieved.

The switchable liquid crystal retarder of said one of the at least one first polar control retarder and the at least one second polar control retarder may have a retardance for light of a wavelength of 550nm having a first retardance value in a range from 700nm to 2500nm, preferably in a range from 850nm to 1800nm. Advantageously luminance may be reduced over desirable polar regions; in embodiments comprising a reflective polariser reflectance may be increased over a wide polar area and security level may be provided at desirable levels over a wide polar region.

Said one of the at least one first polar control retarder and the at least one second polar control retarder may further comprise at least one passive compensation retarder. Advantageously the area of luminance reduction may be increased. Further the uniformity of luminance in public mode may be increased.

The spatial light modulator may comprise an emissive spatial light modulator arranged to output light, the display polariser may be an output display polariser arranged on the output side of the emissive spatial light modulator, the second additional polariser may be arranged on the output side of the spatial light modulator outside the first additional polariser, and the at least one second polar control retarder may be arranged between the first additional polariser and the second additional polariser. Advantageously a switchable privacy display with high security factor may be provided for an emissive spatial light modulator.

The display device may further comprise a backlight arranged to output light, and the spatial light modulator may comprise a transmissive spatial light modulator arranged to receive output light from the backlight. Advantageously a switchable privacy display with high security factor may be provided for a transmissive spatial light modulator.

The at least one passive compensation retarder of said one of the at least one first polar control retarder and the at least one second polar control retarder may be arranged on the same side of the switchable liquid crystal retarder as the surface alignment layers that is arranged to provide homeotropic alignment in the adjacent liquid crystal material. The at least one passive compensation retarder of said one of the at least one first polar control retarder and the at least one second polar control retarder may comprise a passive uniaxial retarder having its optical axis perpendicular to the plane of the retarder. The passive uniaxial retarder may have a retardance for light of a wavelength of 550nm in a range from -400nm to -2100nm, preferably in a range from -700nm to -1700nm. Advantageously the size of the polar region for desirable security level is increased.

The display device may further comprise a reflective polariser, the reflective polariser being a linear polariser, and either: said display polariser may be an output display polariser arranged on the output side of the spatial light modulator, the second additional polariser may be arranged on the same side of the spatial light modulator as the first additional polariser outside the first additional polariser, the at least one second polar control retarder may be arranged between the first additional polariser and the second additional polariser, and the reflective polariser may be arranged between the first additional polariser and the at least one second polar control retarder; or the display device may further comprise a backlight arranged to output light, the spatial light modulator may comprise a transmissive spatial light modulator arranged to receive output light from the backlight, said display polariser may be an input display polariser arranged on the input side of the spatial light modulator, and the display device may further comprise an output display polariser arranged on the output side of the spatial light modulator, the second additional polariser may be arranged on the output side of the spatial light modulator, the at least one second polar control retarder may be arranged between the second additional polariser and the output display polariser, and the reflective polariser may be arranged between the output display polariser and at least one second polar control retarder. Advantageously in a privacy mode of operation, increased display reflectivity may be provided. In ambient illuminance, increased security level of the display may be achieved for snooper locations.

Said one of the at least one first polar control retarder and the at least one second polar control retarder may be the at least one second polar control retarder and said other of the at least one first polar control retarder and the at least one second polar control retarder may be the at least one first polar control retarder.

The switchable liquid crystal retarder of said one of the at least one first polar control retarder and the at least one second polar control retarder may have a retardance for light of a wavelength of 550nm having a first retardance value and the switchable liquid crystal retarder of said other the at least one first polar control retarder and the at least one second polar control retarder may have a retardance for light of a wavelength of 550nm has a second retardance value, the first retardance value being greater than the second retardance value. The magnitude of the difference between half the first retardance value and the second retardance value may be at most 400 nm. The first and second polar control retarders may provide luminance reduction and reflection increase for different polar regions. Advantageously the polar region over which desirable visual security is achieved is increased.

In respect of said other of the at least one first polar control retarder and the at least one second polar control retarder, both of the surface alignment layers may be arranged to provide homogenous alignment in the adjacent liquid crystal material which has a retardance for light of a wavelength of 550nm in a range from 450nm to 900nm, preferably in a range from 550nm to 800nm, and said other of the at least one first polar control retarder and the at least one second polar control retarder may further comprise a pair of passive uniaxial retarders having optical axes in the plane of the retarders that are crossed and each having a retardance for light of a wavelength of 550nm in a range from 250nm to 800nm, preferably in a range from 400nm to 625nm. In respect of the other of the at least one first polar control retarder and the at least one second polar control retarder, both of the surface alignment layers may be arranged to provide homogenous alignment in the adjacent liquid crystal material which has a retardance for light of a wavelength of 550nm in a range from 500nm to 900nm, preferably 600nm to 850nm, and said other of the at least one first polar control retarder and the at least one second polar control retarder may further comprise a passive uniaxial retarder having its optical axis perpendicular to the plane of the retarder and having a retardance for light of a wavelength of 550nm in a range from -300nm to -700nm, preferably in a range from -350nm to - 600nm. In respect of the other of the at least one first polar control retarder and the at least one second polar control retarder, both of the surface alignment layers may be arranged to provide homeotropic alignment in the adjacent liquid crystal material which has a retardance for light of a wavelength of 550nm in a range from 500nm to 900nm, preferably in a range from 600nm to 850nm, and said other of the at least one first polar control retarder and the at least one second polar control retarder may further comprise a passive uniaxial retarder having its optical axis perpendicular to the plane of the retarder and having a retardance for light of a wavelength of 550nm in a range from - 300nm to -900nm, preferably in a range from -400nm to -800nm. Advantageously high luminance reduction and reflection may be achieved for polar regions that are complementary to the luminance reduction of one of the at least one first polar control retarder and the at least one second polar control retarder. The security level may be increased and the size of the polar region for desirable visual security may be increased.

The spatial light modulator may comprise an emissive spatial light modulator arranged to output light, the display polariser may be an output display polariser arranged on the output side of the emissive spatial light modulator, the second additional polariser may be arranged on the output side of the spatial light modulator outside the first additional polariser, and the at least one second polar control retarder is arranged between the first additional polariser and the second additional polariser. Advantageously an emissive display may be provided with desirable security level over a desirable polar range.

The emissive spatial light modulator may have an output luminance profile having a full width half maximum that is at least 40 degrees, preferably at least 50 degrees. Advantageously the public mode of operation may be provided with high image visibility over a wide polar range.

The display device may further comprise a backlight arranged to output light, and the spatial light modulator may comprise a transmissive spatial light modulator arranged to receive output light from the backlight. The backlight may have an output luminance profile having a full width half maximum that is at least 40 degrees, preferably at least 50 degrees.

The switchable liquid crystal retarder of said one of the at least one first polar control retarder and the at least one second polar control retarder may have a retardance for light of a wavelength of 550nm having a first retardance value and the switchable liquid crystal retarder of said other the at least one first polar control retarder and the at least one second polar control retarder may have a retardance for light of a wavelength of 550nm has a second retardance value, half of the first retardance value being less than the second retardance value. In respect of the other of the at least one first polar control retarder and the at least one second polar control retarder, both of the surface alignment layers may be arranged to provide homogenous alignment in the adjacent liquid crystal material which has a retardance for light of a wavelength of 550nm in a range from 700nm to 2500nm, preferably in a range from 850nm to 1800nm, and said other of the at least one first polar control retarder and the at least one second polar control retarder may further comprise a pair of passive uniaxial retarders having optical axes in the plane of the retarders that are crossed and each having a retardance for light of a wavelength of 550nm in a range from 600nm to 1600nm, preferably in a range from 750nm to 1300nm. In respect of the other of the at least one first polar control retarder and the at least one second polar control retarder, both of the surface alignment layers may be arranged to provide homeotropic alignment in the adjacent liquid crystal material which has a retardance for light of a wavelength of 550nm in a range from 700nm to 2500nm, preferably in a range from 1000nm to 1800nm, and said other of the at least one first polar control retarder and the at least one second polar control retarder may further comprise a passive uniaxial retarder having its optical axis perpendicular to the plane of the retarder and having a retardance for light of a wavelength of 550nm in a range from -700nm to -2500nm, preferably in a range from -900nm to - 1800nm. Advantageously a switchable privacy display may be provided to achieve a narrow privacy switch-on angle.

The spatial light modulator may comprise an emissive spatial light modulator arranged to output light, the display polariser may be an output display polariser arranged on the output side of the emissive spatial light modulator, the second additional polariser may be arranged on the output side of the spatial light modulator outside the first additional polariser, and the at least one second polar control retarder may be arranged between the first additional polariser and the second additional polariser. The emissive spatial light modulator may comprise an array of pixels arranged in a pixel layer, and the display device may further comprise a parallax barrier forming an array of apertures, wherein the parallax barrier is separated from the pixel layer by a parallax distance along an axis along a normal to the plane of the pixel layer, each pixel being aligned with an aperture. The emissive spatial light modulator and the parallax barrier may have an output luminance profile having a full width half maximum that is at most 40 degrees. Advantageously a switchable privacy display may be provided with increased security level for off-axis snooper locations. An emissive display may be provided to operate in a privacy mode for both landscape and portrait operation.

The display device may comprise a backlight arranged to output light, and the spatial light modulator may comprise a transmissive spatial light modulator arranged to receive output light from the backlight. The backlight may have an output luminance profile having a full width half maximum that is at most 40 degrees. Advantageously a privacy display may be provided for a transmissive displays. The backlight may be provided with reduced cone angle. The polar area for desirable security level may be increased.

Said display polariser may be an input display polariser arranged on the input side of the spatial light modulator; the first additional polariser may be arranged between the backlight and the input display polariser; and the second additional polariser may be arranged on the same side of the spatial light modulator as the first additional polariser between the backlight and the first additional polariser, and the at least one second polar control retarder may be arranged between the first additional polariser and the second additional polariser. Advantageously the visibility of frontal reflections from the front surface of the display device may be reduced.

Said surface alignment layers of said one of the at least one first polar control retarder and the at least one second polar control retarder may have pretilts having pretilt directions with components in the plane of the layer of liquid crystal material in a first pair of anti-parallel directions, and said surface alignment layers of said other of the at least one first polar control retarder and the at least one second polar control retarder may have pretilts having pretilt directions with components in the plane of the layer of liquid crystal material in a second pair of anti-parallel directions, the first pair of antiparallel directions being crossed with the second pair of anti-parallel directions. The first pair of antiparallel directions may be at 90 degrees to the second pair of anti-parallel directions, as viewed normal the planes of the layers of liquid crystal material of the at least one first polar control retarder and the at least one second polar control retarder. Advantageously polar regions with desirable security level may be achieved in both lateral and elevation directions. A switchable privacy display may be provided in landscape and portrait directions. In an automotive use, reflections from windscreens may be reduced.

The switchable liquid crystal retarder of said one of the at least one first polar control retarder and the at least one second polar control retarder may have a retardance for light of a wavelength of 550nm having a first retardance value and the switchable liquid crystal retarder of said other the at least one first polar control retarder and the at least one second polar control retarder may have a retardance for light of a wavelength of 550nm has a second retardance value, the first retardance value being greater than the second retardance value. The magnitude of the difference between half the first retardance value and the second retardance value is at most 400nm. Advantageously the size of the polar region for desirable security level is increased.

In respect of the other of the at least one first polar control retarder and the at least one second polar control retarder, both of the surface alignment layers may be arranged to provide homogenous alignment in the adjacent liquid crystal material which has a retardance for light of a wavelength of 550nm in a range from 450nm to 900nm, preferably in a range from 550nm to 800nm, and said other of the at least one first polar control retarder and the at least one second polar control retarder further comprises a pair of passive uniaxial retarders having optical axes in the plane of the retarders that are crossed and each having a retardance for light of a wavelength of 550nm in a range from 250nm to 800nm, preferably in a range from 400nm to 625nm. In respect of the other of the at least one first polar control retarder and the at least one second polar control retarder, both of the surface alignment layers may be arranged to provide homogenous alignment in the adjacent liquid crystal material which has a retardance for light of a wavelength of 550nm in a range from 500nm to 900nm, preferably in a range from 600nm to 850nm, and said other of the at least one first polar control retarder and the at least one second polar control retarder may further comprise a passive uniaxial retarder having its optical axis perpendicular to the plane of the retarder and having a retardance for light of a wavelength of 550nm in a range from -300nm to -700nm, preferably in a range from - 350nm to -600nm. In respect of the other of the at least one first polar control retarder and the at least one second polar control retarder, both of the surface alignment layers may be arranged to provide homeotropic alignment in the adjacent liquid crystal material which has a retardance for light of a wavelength of 550nm in a range from 500nm to 900nm, preferably in a range from 600nm to 850nm, and said other of the at least one first polar control retarder and the at least one second polar control retarder may further comprise a passive uniaxial retarder having its optical axis perpendicular to the plane of the retarder and having a retardance for light of a wavelength of 550nm in a range from - 300nm to -800nm, preferably in a range from -400nm to -800nm.

The spatial light modulator may comprises an emissive spatial light modulator arranged to output light, the display polariser is an output display polariser arranged on the output side of the emissive spatial light modulator, the second additional polariser is arranged on the output side of the spatial light modulator outside the first additional polariser, and the at least one second polar control retarder is arranged between the first additional polariser and the second additional polariser. Said other of the at least one first polar control retarder and the at least one second polar control retarder further may comprise at least one passive compensation retarder.

The at least one passive compensation retarder of said other of the at least one first polar control retarder and the at least one second polar control retarder may comprise a passive uniaxial retarder having its optical axis perpendicular to the plane of the retarder. Advantageously thickness and cost may be reduced. Advantageously the polar region over which desirable security level is achieved is increased in the case that the polar control retarder further comprises two homeotropic alignment layers.

The at least one passive compensation retarder of said other of the at least one first polar control retarder and the at least one second polar control retarder may comprise a pair of passive uniaxial retarders having optical axes in the plane of the retarders that are crossed. Advantageously the polar region over which desirable security level is achieved is increased in the case that the polar control retarder further comprises two homogeneous alignment layers.

In respect of said other of the at least one first polar control retarder and the at least one second polar control retarder, both of the surface alignment layers may be arranged to provide homeotropic alignment in the adjacent liquid crystal material. Advantageously power consumption in public mode of operation is reduced.

The display device may further comprise a backlight arranged to output light, the spatial light modulator comprises a transmissive spatial light modulator arranged to receive output light from the backlight, and said other of the at least one first polar control retarder and the at least one second polar control retarder may be between the backlight and the transmissive spatial light modulator. The thickness of components arranged on the front of the display is reduced. Increased front surface diffusion may be provided with low pixel blurring, increasing image fidelity and reducing the visibility of specular reflections.

In respect of said other of the at least one first polar control retarder and the at least one second polar control retarder, both of the surface alignment layers may be arranged to provide homogeneous alignment in the adjacent liquid crystal material. Advantageously the visibility of artefacts under applied pressure may be reduced. The polar area for desirable security level may be increased.

Any of the aspects of the present disclosure may be applied in any combination.

Embodiments of the present disclosure may be used in a variety of optical systems. The embodiments may include or work with a variety of projectors, projection systems, optical components, displays, microdisplays, computer systems, processors, self-contained projector systems, visual and/or audio-visual systems and electrical and/or optical devices. Aspects of the present disclosure may be used with practically any apparatus related to optical and electrical devices, optical systems, presentation systems or any apparatus that may contain any type of optical system. Accordingly, embodiments of the present disclosure may be employed in optical systems, devices used in visual and/or optical presentations, visual peripherals and so on and in a number of computing environments.

These and other advantages and features of the present disclosure will become apparent to those of ordinary skill in the art upon reading this disclosure in its entirety.

### BRIEF DESCRIPTION OF THE DRAWINGS

Embodiments are illustrated by way of example in the accompanying FIGURES, in which like reference numbers indicate similar parts, and in which:
**FIGURE 1A** is a schematic diagram illustrating in side perspective view a switchable privacy display for use in ambient illumination comprising an emissive spatial light modulator, a first polar control retarder arranged between the display polariser of the emissive spatial light modulator and a first additional polariser; and a reflective polariser and second polar control retarder arranged between the first additional polariser and a second additional polariser;
**FIGURE 1B** is a schematic diagram illustrating in front perspective view an arrangement polarisers and polar control retarders for the embodiment of FIGURE 1A;
**FIGURE 1C** is a schematic diagram illustrating in side perspective view the switchable privacy display of FIGURE 1A wherein the reflective polariser is omitted and the first additional polariser is a reflective polariser;
**FIGURE 2** is a schematic diagram illustrating in side perspective view of an alternative structure of spatial light modulator for use in the arrangement of FIGURE 1A further comprising a parallax barrier;
**FIGURE 3** is a schematic diagram illustrating in side perspective view of an alternative structure of spatial light modulator for use in the arrangement of FIGURE 1A comprising a transmissive spatial light modulator and a backlight;
**FIGURE 4A** is a schematic diagram illustrating in side perspective view a switchable privacy display for use in ambient illumination comprising the transmissive spatial light modulator and backlight of FIGURE 3; a reflective polariser and a first polar control retarder arranged between the output display polariser of the spatial light modulator and a first additional polariser; and a second polar control retarder arranged between the input display polariser of the spatial light modulator and a second additional polariser;
**FIGURE 4B** is a schematic diagram illustrating in front perspective view an arrangement polarisers and polar control retarders for the embodiment of FIGURE 4A;
**FIGURE 5A** is a schematic diagram illustrating in side perspective view a switchable privacy display comprising the transmissive spatial light modulator and backlight of FIGURE 3; a first polar control retarder arranged between the input display polariser of the spatial light modulator and a first additional polariser; and a second polar control retarder arranged between the first additional polariser and a second additional polariser;
**FIGURE 5B** is a schematic diagram illustrating in front perspective view an arrangement polarisers and polar control retarders for the embodiment of FIGURE 1A;
**FIGURE 6A** is a schematic diagram illustrating in side perspective view a structure of a polar control retarder wherein the polar control retarder comprises a passive C plate and an active liquid crystal layer comprising a homeotropic alignment layer and a homogeneous alignment layer, wherein the pretilt directions of the alignment layers have a component in the plane of the alignment layers that are antiparallel, and the components are oriented in a first direction in the plane of the alignment layers;
**FIGURE 6B** is a schematic diagram illustrating in side perspective view a structure of a polar control retarder wherein the polar control retarder comprises a passive C plate and an active liquid crystal layer comprising two homogeneous alignment layers, wherein pretilt directions of the alignment layers have a component in the plane of the alignment layers that are antiparallel;
**FIGURE 6C** is a schematic diagram illustrating in side perspective view a structure of a polar control retarder and an active liquid crystal layer comprising two homogeneous alignment layers wherein the polar control retarder comprises crossed A-plates;
**FIGURE 6D** is a schematic diagram illustrating in side perspective view a structure of a polar control retarder wherein the polar control retarder comprises a passive C plate and an active liquid crystal layer comprising two homeotropic alignment layers, wherein pretilt directions of the alignment layers have a component in the plane of the alignment layers that are antiparallel;
**FIGURE 6E** is a schematic diagram illustrating in side perspective view a structure of a polar control retarder and an active liquid crystal layer comprising two homogeneous alignment layers wherein the polar control retarder comprises crossed A-plates;
**FIGURE 7A** is a schematic diagram illustrating in side view the operation of the arrangement of FIGURE 1A for transmitted light from the spatial light modulator in the public mode of operation;
**FIGURE 7B** is a schematic diagram illustrating in side view the operation of the arrangement of FIGURE 1A for ambient light in the public mode of operation;
**FIGURE 7C** is a schematic diagram illustrating in side view the operation of the arrangement of FIGURE 1A for transmitted light from the spatial light modulator in a privacy mode of operation with high reflectivity of ambient light;
**FIGURE 7D** is a schematic diagram illustrating in side view the operation of the arrangement of FIGURE 1A for ambient light in a privacy mode of operation with high reflectivity of ambient light;
**FIGURE 8A** is a schematic diagram illustrating in front perspective view an arrangement polarisers and polar control retarders for the embodiment of FIGURE 1A wherein the first polar control retarder comprises a homeotropic alignment layer and a homogeneous alignment layer and C-plate; and the second polar control retarder comprises two homogeneous alignment layers and crossed A-plates;
**FIGURE 8B** is a graph illustrating a simulated polar profile of luminance output of an emissive spatial light modulator;
**FIGURE 8C** is a graph illustrating a simulated polar profile of transmission of the second polar control retarder of FIGURE 8A arranged between the first and second additional polarisers wherein the electric vector transmission directions of the polarisers are parallel;
**FIGURE 8D** is a graph illustrating a simulated polar profile of reflectivity of the second polar control retarder of FIGURE 8A arranged between a reflective polariser and the second additional polariser wherein the electric vector transmission directions of the polarisers are parallel;
**FIGURE 8E** is a graph illustrating a simulated polar profile of the total reflectivity comprising the reflectivity of FIGURE 8D and the Fresnel reflectivity from the front surface of the display device;
**FIGURE 8F** is a graph illustrating a simulated polar profile of transmission of the first polar control retarder of FIGURE 8A arranged between the display polariser and the first additional polariser wherein the electric vector transmission directions of the polarisers are parallel and wherein the pretilt directions of the first polar control retarder are parallel or anti-parallel to the pretilt directions of the second polar control retarder;
**FIGURE 8G** is a graph illustrating a simulated polar profile of the logarithm of total output luminance of the spatial light modulator and first and second polar control retarders of FIGURE 8A;
**FIGURE 8H** is a graph illustrating a simulated polar profile of the security level, S of the arrangement of FIGURE 8A for an ambient illuminance measured in lux that is twice the head-on display luminance measured in nits;
**FIGURE 8I** is a graph illustrating a simulated lateral profile for zero degrees elevation of the visual security factor of the arrangement of FIGURE 8A for an ambient illuminance measured in lux that is twice the head-on display luminance measured in nits;
**FIGURE 8J** is a graph illustrating a simulated polar profile of the security level, S of the arrangement of FIGURE 8A for an ambient illuminance measured in lux that is twice the head-on display luminance measured in nits and operated in public mode;
**FIGURE 9A** is a graph illustrating a simulated polar profile of luminance output of a transmissive spatial light modulator that is illuminated by a collimated backlight;
**FIGURE 9B** is a graph illustrating a simulated polar profile of transmission of the second polar control retarder;
**FIGURE 9C** is a graph illustrating a simulated polar profile of reflectivity of the second polar control retarder;
**FIGURE 9D** is a graph illustrating a simulated polar profile of the total reflectivity comprising the reflectivity of FIGURE 9C and the Fresnel reflectivity from the front surface of the display device;
**FIGURE 9E** is a graph illustrating a simulated polar profile of transmission of the first polar control retarder wherein the pretilt directions of the first polar control retarder are parallel or antiparallel to the pretilt directions of the second polar control retarder;
**FIGURE 9F** is a graph illustrating a simulated polar profile of the logarithm of total output luminance of the spatial light modulator and first and second polar control retarders;
**FIGURE 9G** is a graph illustrating a simulated polar profile of the security level, S of the arrangement for an ambient illuminance measured in lux that is twice the head-on display luminance measured in nits;
**FIGURE 9H** is a graph illustrating a simulated lateral profile for zero degrees elevation of the visual security factor of the arrangement for an ambient illuminance measured in lux that is twice the head-on display luminance measured in nits;
**FIGURE 9I** is a graph illustrating a simulated polar profile of the security level, S for an ambient illuminance measured in lux that is twice the head-on display luminance measured in nits and operated in public mode;
**FIGURE 10A** is a graph illustrating a simulated polar profile of luminance output of a transmissive spatial light modulator that is illuminated by a collimated backlight;
**FIGURE 10B** is a graph illustrating a simulated polar profile of transmission of the second polar control retarder;
**FIGURE 10C** is a graph illustrating a simulated polar profile of reflectivity of the second polar control retarder for no reflective polariser;
**FIGURE 10D** is a graph illustrating a simulated polar profile of the total reflectivity comprising the reflectivity of FIGURE 10C and the Fresnel reflectivity from the front surface of the display device for no reflective polariser;
**FIGURE 10E** is a graph illustrating a simulated polar profile of transmission of the first polar control retarder wherein the pretilt directions of the first polar control retarder are parallel or antiparallel to the pretilt directions of the second polar control retarder;
**FIGURE 10F** is a graph illustrating a simulated polar profile of the logarithm of total output luminance of the spatial light modulator and first and second polar control retarders;
**FIGURE 10G** is a graph illustrating a simulated polar profile of the security level, S of the arrangement with no reflective polariser for an ambient illuminance measured in lux that is twice the head-on display luminance measured in nits;
**FIGURE 10H** is a graph illustrating a simulated lateral profile for zero degrees elevation of the visual security factor of the arrangement for an ambient illuminance measured in lux that is twice the head-on display luminance measured in nits;
**FIGURE 11A** is a graph illustrating a simulated polar profile of luminance output of a transmissive spatial light modulator that is illuminated by a collimated backlight;
**FIGURE 11B** is a graph illustrating a simulated polar profile of transmission of the second polar control retarder;
**FIGURE 11C** is a graph illustrating a simulated polar profile of reflectivity of the second polar control retarder;
**FIGURE 11D** is a graph illustrating a simulated polar profile of the total reflectivity comprising the reflectivity of FIGURE 11C and the Fresnel reflectivity from the front surface of the display device;
**FIGURE 11E** is a graph illustrating a simulated polar profile of transmission of the first polar control retarder wherein the pretilt directions of the first polar control retarder are orthogonal to the pretilt directions of the second polar control retarder;
**FIGURE 11F** is a graph illustrating a simulated polar profile of the logarithm of total output luminance of the spatial light modulator and first and second polar control retarders;
**FIGURE 11G** is a graph illustrating a simulated polar profile of the security level, S of the arrangement with no reflective polariser for an ambient illuminance measured in lux that is twice the head-on display luminance measured in nits for the polar profiles of FIGURES 11A-F;
**FIGURE 12A** is a graph illustrating a simulated polar profile of luminance output of an emissive spatial light modulator with the barrier structure of FIGURE 2;
**FIGURE 12B** is a graph illustrating a simulated polar profile of transmission of the barrier structure of FIGURE 2 of light from the pixels of the emissive spatial light modulator;
**FIGURE 12C** is a graph illustrating a simulated polar profile of transmission of the second polar control retarder arranged between the first and second additional polarisers wherein the electric vector transmission directions of the polarisers are parallel;
**FIGURE 12D** is a graph illustrating a simulated polar profile of reflectivity of the second polar control retarder arranged between a reflective polariser and the second additional polariser wherein the electric vector transmission directions of the polarisers are parallel;
**FIGURE 12E** is a graph illustrating a simulated polar profile of the total reflectivity comprising the reflectivity and the Fresnel reflectivity from the front surface of the display device;
**FIGURE 12F** is a graph illustrating a simulated polar profile of transmission of the first polar control retarder arranged between the display polariser and the first additional polariser wherein the electric vector transmission directions of the polarisers are parallel;
**FIGURE 12G** is a graph illustrating a simulated polar profile of the logarithm of total output luminance of the spatial light modulator and first and second polar control retarders;
**FIGURE 12H** is a graph illustrating a simulated polar profile of the security level, S of the arrangement for an ambient illuminance measured in lux that is twice the head-on display luminance measured in nits;
**FIGURE 12I** is a graph illustrating a simulated polar profile of the security level, S wherein the first polar control retarder is the second polar control retarder of FIGURE 12H and the second polar control retarder is the first polar control retarder of FIGURE 11H;
**FIGURE 12J** is a graph illustrating a simulated polar profile of the security level, S of the arrangement for an ambient illuminance measured in lux that is twice the head-on display luminance measured in nits and operated in public mode;
**FIGURE 13** is a schematic diagram illustrating in side perspective view a switchable privacy display component for use with a spatial light modulator comprising a first polar control retarder and a first additional polariser, a reflective polariser; and a second polar control retarder arranged between the first additional polariser and a second additional polariser;
**FIGURE 14** is a key for the alternative stacking arrangements of FIGURES 15A-F, FIGURES 16A-F, FIGURES 17A-C and FIGURES 18A-F;
**FIGURE 15A, FIGURE 15B, FIGURE 15C, FIGURE 15D, FIGURE 15E, and FIGURE 15F** are schematic diagrams illustrating in side view alternatives for optical component stackings for a switchable privacy display wherein the first and second polar control retarders are arranged to receive light from a transmissive spatial light modulator and backlight;
**FIGURE 16A, FIGURE 16B, FIGURE 16C, FIGURE 16D, FIGURE 16E, and FIGURE 16F** are schematic diagrams illustrating in side view alternatives for optical component stackings for a switchable privacy display wherein one of the first and second polar control retarders is arranged to receive light from the spatial light modulator and the transmissive spatial light modulator is arranged to receive light from the other of the first and second polar control retarders and a backlight;
**FIGURE 17A, FIGURE 17B,** and **FIGURE 17C** are schematic diagrams illustrating in side view alternatives for optical component stackings for a switchable privacy display wherein the transmissive spatial light modulator is arranged to receive light from the first and second polar control retarders and a backlight; and
**FIGURE 18A, FIGURE 18B, FIGURE 18C, FIGURE 18D, FIGURE 18E, and FIGURE 18F** are schematic diagrams illustrating in side view alternatives for optical component stackings for a switchable privacy display wherein the first and second polar control retarders are arranged to receive light from an emissive spatial light modulator.

### DETAILED DESCRIPTION

Terms related to optical retarders for the purposes of the present disclosure will now be described.

In a layer comprising a uniaxial birefringent material there is a direction governing the optical anisotropy whereas all directions perpendicular to it (or at a given angle to it) have equivalent birefringence.

The optical axis of an optical retarder refers to the direction of propagation of a light ray in the uniaxial birefringent material in which no birefringence is experienced. This is different from the optical axis of an optical system which may for example be parallel to a line of symmetry or normal to a display surface along which a principal ray propagates.

For light propagating in a direction orthogonal to the optical axis, the optical axis is the slow axis when linearly polarized light with an electric vector direction parallel to the slow axis travels at the slowest speed. The slow axis direction is the direction with the highest refractive index at the design wavelength. Similarly the fast axis direction is the direction with the lowest refractive index at the design wavelength.

For positive dielectric anisotropy uniaxial birefringent materials the slow axis direction is the extraordinary axis of the birefringent material. For negative dielectric anisotropy uniaxial birefringent materials the fast axis direction is the extraordinary axis of the birefringent material.

The terms half a wavelength and quarter a wavelength refer to the operation of a retarder for a design wavelength λ₀ that may typically be between 500nm and 570nm. In the present illustrative embodiments exemplary retardance values are provided for a wavelength of 550nm unless otherwise specified.

The retarder provides a phase shift between two perpendicular polarization components of the light wave incident thereon and is characterized by the amount of relative phase, Γ, that it imparts on the two polarization components; which is related to the birefringence Δn and the thickness d of the retarder by $Γ = 2 . π . Δn . d / {λ}_{0}$ eqn. 1

In eqn. 1, Δn is defined as the difference between the extraordinary and the ordinary index of refraction, i.e. $Δn = {n}_{e} - {n}_{o}$ eqn. 2

For a half-wave retarder, the relationship between *d*, Δn, and λ₀ is chosen so that the phase shift between polarization components is Γ = π. For a quarter-wave retarder, the relationship between *d,* Δn, and λ₀ is chosen so that the phase shift between polarization components is Γ = π/2.

The term half-wave retarder herein typically refers to light propagating normal to the retarder and normal to the spatial light modulator.

Some aspects of the propagation of light rays through a transparent retarder between a pair of polarisers will now be described.

The state of polarisation (SOP) of a light ray is described by the relative amplitude and phase shift between any two orthogonal polarization components. Transparent retarders do not alter the relative amplitudes of these orthogonal polarisation components but act only on their relative phase. Providing a net phase shift between the orthogonal polarisation components alters the SOP whereas maintaining net relative phase preserves the SOP. In the current description, the SOP may be termed the polarisation state.

A linear SOP has a polarisation component with a non-zero amplitude and an orthogonal polarisation component which has zero amplitude.

A linear polariser transmits a unique linear SOP that has a linear polarisation component parallel to the electric vector transmission direction of the linear polariser and attenuates light with a different SOP. The term "electric vector transmission direction" refers to a non-directional axis of the polariser parallel to which the electric vector of incident light is transmitted, even though the transmitted "electric vector" always has an instantaneous direction. The term "direction" is commonly used to describe this axis.

Absorbing polarisers are polarisers that absorb one polarisation component of incident light and transmit a second orthogonal polarisation component. Examples of absorbing linear polarisers are dichroic polarisers.

Reflective polarisers are polarisers that reflect one polarisation component of incident light and transmit a second orthogonal polarisation component. Examples of reflective polarisers that are linear polarisers are multilayer polymeric film stacks such as DBEF^{™} or APF^{™} from 3M Corporation, or wire grid polarisers such as ProFlux^{™} from Moxtek. Reflective linear polarisers may further comprise cholesteric reflective materials and a quarter waveplate arranged in series.

A retarder arranged between a linear polariser and a parallel linear analysing polariser that introduces no relative net phase shift provides full transmission of the light other than residual absorption within the linear polariser.

A retarder that provides a relative net phase shift between orthogonal polarisation components changes the SOP and provides attenuation at the analysing polariser.

In the present disclosure an 'A-plate' refers to an optical retarder utilizing a layer of birefringent material with its optical axis parallel to the plane of the layer.

A 'positive A-plate' refers to positively birefringent A-plates, i.e. A-plates with a positive Δn.

In the present disclosure a 'C-plate' refers to an optical retarder utilizing a layer of birefringent material with its optical axis perpendicular to the plane of the layer. A 'positive C-plate' refers to positively birefringent C-plate, i.e. a C-plate with a positive Δn. A 'negative C-plate' refers to a negatively birefringent C-plate, i.e. a C-plate with a negative Δn.

'O-plate' refers to an optical retarder utilizing a layer of birefringent material with its optical axis having a component parallel to the plane of the layer and a component perpendicular to the plane of the layer. A 'positive O-plate' refers to positively birefringent O-plates, i.e. O-plates with a positive Δn.

Achromatic retarders may be provided wherein the material of the retarder is provided with a retardance Δn . *d* that varies with wavelength λ as $Δn . d / λ = κ$ eqn. 3
where κ is substantially a constant.

Examples of suitable materials include modified polycarbonates from Teijin Films. Achromatic retarders may be provided in the present embodiments to advantageously minimise color changes between polar angular viewing directions which have low luminance reduction and polar angular viewing directions which have increased luminance reductions as will be described below.

Various other terms used in the present disclosure related to retarders and to liquid crystals will now be described.

A liquid crystal cell has a retardance given by Δn . d where Δn is the birefringence of the liquid crystal material in the liquid crystal cell and d is the thickness of the liquid crystal cell, independent of the alignment of the liquid crystal material in the liquid crystal cell.

Homogeneous alignment refers to the alignment of liquid crystals in switchable liquid crystal displays where molecules align substantially parallel to a substrate. Homogeneous alignment is sometimes referred to as planar alignment. Homogeneous alignment may typically be provided with a small pre-tilt such as 2 degrees, so that the molecules at the surfaces of the alignment layers of the liquid crystal cell are slightly inclined as will be described below. Pretilt is arranged to minimise degeneracies in switching of cells.

In the present disclosure, homeotropic alignment is the state in which rod-like liquid crystalline molecules align substantially perpendicularly to the substrate. In discotic liquid crystals homeotropic alignment is defined as the state in which an axis of the column structure, which is formed by disc-like liquid crystalline molecules, aligns perpendicularly to a surface. In homeotropic alignment, pretilt is the tilt angle of the molecules that are close to the alignment layer and is typically close to 90 degrees and for example may be 88 degrees.

In a twisted liquid crystal layer a twisted configuration (also known as a helical structure or helix) of nematic liquid crystal molecules is provided. The twist may be achieved by means of a nonparallel alignment of alignment layers. Further, cholesteric dopants may be added to the liquid crystal material to break degeneracy of the twist direction (clockwise or anti-clockwise) and to further control the pitch of the twist in the relaxed (typically undriven) state. A supertwisted liquid crystal layer has a twist of greater than 180 degrees. A twisted nematic layer used in spatial light modulators typically has a twist of 90 degrees.

Liquid crystal molecules with positive dielectric anisotropy are switched from a homogeneous alignment (such as an A-plate retarder orientation) to a homeotropic alignment (such as a C-plate or O-plate retarder orientation) by means of an applied electric field.

Liquid crystal molecules with negative dielectric anisotropy are switched from a homeotropic alignment (such as a C-plate or O-plate retarder orientation) to a homogeneous alignment (such as an A-plate retarder orientation) by means of an applied electric field.

Rod-like molecules have a positive birefringence so that nₑ > nₒ as described in eqn. 2. Discotic molecules have negative birefringence so that nₑ < nₒ.

Positive retarders such as A-plates, positive O-plates and positive C-plates may typically be provided by stretched films or rod-like liquid crystal molecules. Negative retarders such as negative C-plates may be provided by stretched films or discotic like liquid crystal molecules.

Parallel liquid crystal cell alignment refers to the alignment direction of homogeneous alignment layers being parallel or more typically antiparallel. In the case of pre-tilted homeotropic alignment, the alignment layers may have components that are substantially parallel or antiparallel. Hybrid aligned liquid crystal cells may have one homogeneous alignment layer and one homeotropic alignment layer. Twisted liquid crystal cells may be provided by alignment layers that do not have parallel alignment, for example oriented at 90 degrees to each other.

Transmissive spatial light modulators may further comprise retarders between the input display polariser and the output display polariser for example as disclosed in U.S. Patent No. 8,237,876. Such retarders (not shown) are in a different place to the passive retarders of the present embodiments. Such retarders compensate for contrast degradations for off-axis viewing locations, which is a different effect to the luminance reduction for off-axis viewing positions of the present embodiments.

A private mode of operation of a display is one in which an observer sees a low contrast sensitivity such that an image is not clearly visible. Contrast sensitivity is a measure of the ability to discern between luminances of different levels in a static image. Inverse contrast sensitivity may be used as a measure of visual security, in that a high visual security level (VSL) corresponds to low image visibility.

For a privacy display providing an image to an observer, visual security may be given as: $V = \left(Y+R\right) / \left(Y-K\right)$ eqn. 4
where V is the visual security level (VSL), Y is the luminance of the white state of the display at a snooper viewing angle, K is the luminance of the black state of the display at the snooper viewing angle and R is the luminance of reflected light from the display.

Panel contrast ratio is given as: $C = Y / K$ eqn. 5
so the visual security level may be further given as: $V = \left(P{. Y}_{max}+I.ρ/π\right) / \left(P.\left({Y}_{max}-{Y}_{max}/C\right)\right)$ eqn. 6
where: Yₘₐₓ is the maximum luminance of the display; P is the off-axis relative luminance typically defined as the ratio of luminance at the snooper angle to the maximum luminance Yₘₐₓ C is the image contrast ratio; ρ is the surface reflectivity; and I is the illuminance. The units of Yₘₐₓ are the units of I divided by solid angle in units of steradian.

The luminance of a display varies with angle and so the maximum luminance of the display Yₘₐₓ occurs at a particular angle that depends on the configuration of the display.

In many displays, the maximum luminance Yₘₐₓ occurs head-on, i.e. normal to the display. Any display device disclosed herein may be arranged to have a maximum luminance Yₘₐₓ that occurs head-on, in which case references to the maximum luminance of the display device Yₘₐₓ may be replaced by references to the luminance normal to the display device.

Alternatively, any display described herein may be arranged to have a maximum luminance Yₘₐₓ that occurs at a polar angle to the normal to the display device that is greater than 0°. By way of example, the maximum luminance Yₘₐₓ may occur may at a non-zero polar angle and at an azimuth angle that has for example zero lateral angle so that the maximum luminance is for an on-axis user that is looking down on to the display device. The polar angle may for example be 10 degrees and the azimuthal angle may be the northerly direction (90 degrees anti-clockwise from easterly direction). The viewer may therefore desirably see a high luminance at typical non-normal viewing angles.

The off-axis relative luminance, P is sometimes referred to as the privacy level. However, such privacy level P describes relative luminance of a display at a given polar angle compared to head-on luminance, and in fact is not a measure of privacy appearance.

The illuminance, I is the luminous flux per unit area that is incident on the display and reflected from the display towards the observer location. For Lambertian illuminance, and for displays with a Lambertian front diffuser illuminance I is invariant with polar and azimuthal angles. For arrangements with a display with non-Lambertian front diffusion arranged in an environment with directional (non-Lambertian) ambient light, illuminance I varies with polar and azimuthal angle of observation.

Thus in a perfectly dark environment, a high contrast display has VSL of approximately 1.0. As ambient illuminance increases, the perceived image contrast degrades, VSL increases and a private image is perceived.

For typical liquid crystal displays the panel contrast C is above 100:1 for almost all viewing angles. allowing the visual security level to be approximated to: $V = 1 + I . ρ / \left(π.P{. Y}_{max}\right)$ eqn. 7

In the present embodiments, in addition to the exemplary definition of eqn. 4, other measurements of visual security level, V may be provided, for example to include the effect on image visibility to a snooper of snooper location, image contrast, image colour and white point and subtended image feature size. Thus the visual security level may be a measure of the degree of privacy of the display but may not be restricted to the parameter V.

The perceptual image security may be determined from the logarithmic response of the eye, such that $S = {log}_{10} \left(V\right)$ eqn. 8

Desirable limits for S were determined in the following manner. In a first step a privacy display device was provided. Measurements of the variation of privacy level, P(θ) of the display device with polar viewing angle and variation of reflectivity p(θ) of the display device with polar viewing angle were made using photopic measurement equipment. A light source such as a substantially uniform luminance light box was arranged to provide illumination from an illuminated region that was arranged to illuminate the privacy display device along an incident direction for reflection to a viewer positions at a polar angle of greater than 0° to the normal to the display device. The variation I(θ) of illuminance of a substantially Lambertian emitting lightbox with polar viewing angle was determined by and measuring the variation of recorded reflective luminance with polar viewing angle taking into account the variation of reflectivity ρ(θ). The measurements of P(θ), r(θ) and I(θ) were used to determine the variation of Security Factor S(θ) with polar viewing angle along the zero elevation axis.

In a second step a series of high contrast images were provided on the privacy display including (i) small text images with maximum font height 3mm, (ii) large text images with maximum font height 30mm and (iii) moving images.

In a third step each observer (with eyesight correction for viewing at 1000mm where appropriate) viewed each of the images from a distance of 1000mm, and adjusted their polar angle of viewing at zero elevation until image invisibility was achieved for one eye from a position near on the display at or close to the centre-line of the display. The polar location of the observer's eye was recorded. From the relationship S(θ), the security factor at said polar location was determined. The measurement was repeated for the different images, for various display luminance Yₘₐₓ, different lightbox illuminance I(θ=0), for different background lighting conditions and for different observers.

From the above measurements S < 1.0 provides low or no visual security, 1.0 ≤ S < 1.5 provides visual security that is dependent on the contrast, spatial frequency and temporal frequency of image content, 1.5 ≤ S < 1.8 provides acceptable image invisibility (that is no image contrast is observable) for most images and most observers and S ≥ 1.8 provides full image invisibility, independent of image content for all observers.

In practical display devices, this means that it is desirable to provide a value of S for an off-axis viewer who is a snooper that meets the relationship S ≥ *Sₘᵢₙ*, where: *Sₘᵢₙ* has a value of 1.0 or more to achieve the effect that the off-axis viewer cannot perceive the displayed image; *Sₘᵢₙ* has a value of 1.5 or more to achieve the effect that the displayed image is invisible, i.e. the viewer cannot perceive even that an image is being displayed, for most images and most observers; or *Sₘᵢₙ* has a value of 1.8 or more to achieve the effect that the displayed image is invisible independent of image content for all observers.

In comparison to privacy displays, desirably wide angle displays are easily observed in standard ambient illuminance conditions. One measure of image visibility is given by the contrast sensitivity such as the Michelson contrast which is given by: $M = \left({I}_{max}-{I}_{min}\right) / \left({I}_{max}+{I}_{min}\right)$ eqn. 9
and so: $M = \left(\left(Y+R\right)-\left(K+R\right)\right) / \left(\left(Y+R\right)+\left(K+R\right)\right) = \left(Y-K\right) / \left(Y+K+2.R\right)$ eqn. 10

Thus the visual security level (VSL), V is equivalent (but not identical to) 1/M. In the present discussion, for a given off-axis relative luminance, P the wide angle image visibility, W is approximated as $W = 1 / V = 1 / \left(1+I.ρ/\left(π.P{. Y}_{max}\right)\right)$ eqn. 11

The above discussion focusses on reducing visibility of the displayed image to an off-axis viewer who is a snooper, but similar considerations apply to visibility of the displayed image to the intended user of the display device who is typically on-axis. In this case, decrease of the level of the visual security level (VSL) V corresponds to an increase in the visibility of the image to the viewer. During observation S < 0.1 may provide acceptable visibility of the displayed image. In practical display devices, this means that it is desirable to provide a value of S for an on-axis viewer who is the intended user of the display device that meets the relationship S ≤ *Sₘₐₓ*, where *Sₘₐₓ* has a value of 0.1.

In the present discussion the colour variation Δε of an output colour (u_{w}' + Δu', v_{w}' +Δv') from a desirable white point (u_{w}', v_{w}') may be determined by the CIELUV colour difference metric, assuming a typical display spectral illuminant and is given by: $Δε = {\left({Δu}^{′ 2}+{Δv}^{′ 2}\right)}^{1 / 2}$ eqn. 12

The structure and operation of various directional display devices will now be described. In this description, common elements have common reference numerals. It is noted that the disclosure relating to any element applies to each device in which the same or corresponding element is provided. Accordingly, for brevity such disclosure is not repeated.

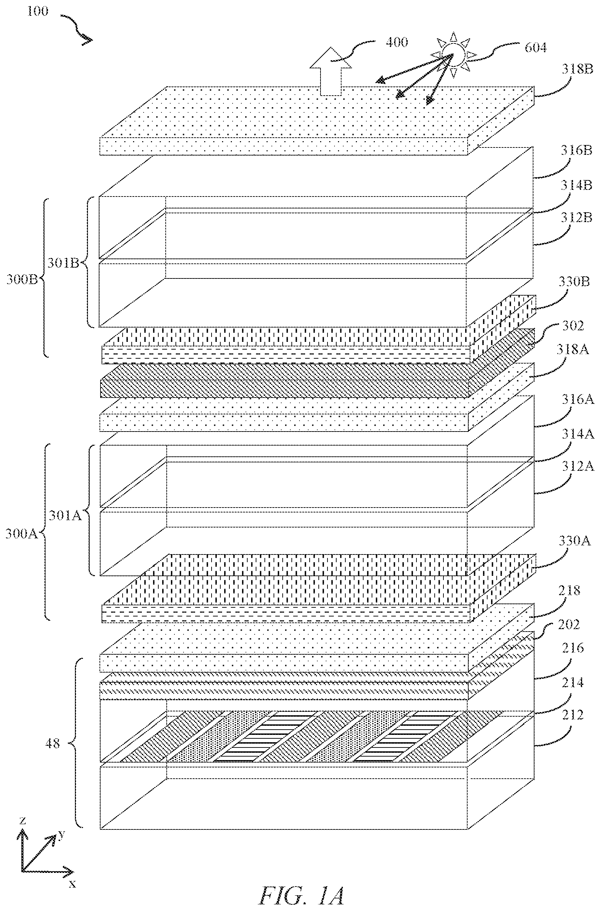

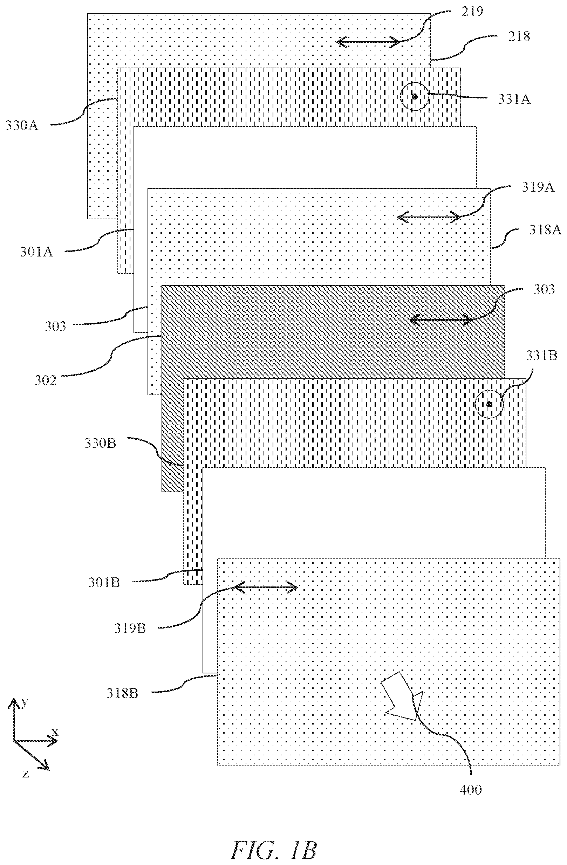

**FIGURE** 1A is a schematic diagram illustrating in side perspective view a switchable privacy display device 100 for use in ambient illumination 604 comprising an emissive spatial light modulator 48, a first polar control retarder 300A arranged between the display polariser 218 of the emissive spatial light modulator 48 and a first additional polariser 318A; and a reflective polariser 302 and second polar control retarder 300B arranged between the first additional polariser 318A and a second additional polariser 318B; and **FIGURE 1B** is a schematic diagram illustrating in front perspective view an arrangement polarisers and polar control retarders for the embodiment of FIGURE 1A.

The display device 100 comprises a spatial light modulator 48; wherein the spatial light modulator 48 comprises an emissive spatial light modulator 48 arranged to output light, the display polariser 218 is an output display polariser arranged on the output side of the emissive spatial light modulator 48, the display polariser 218 being a linear polariser.

A quarter waveplate 202 is arranged between the display polariser 218 and the pixel plane 214 to reduce frontal reflections from the pixel plane 214. Substrates 212, 216 are arranged to provide support of the pixel plane 214.

A first additional polariser 318A is arranged on the same side of the spatial light modulator 48 as the display polariser 218, the first additional polariser 318 being a linear polariser. The first additional polariser 318A is an absorbing polariser such as an iodine polariser on stretched PVA.

At least one first polar control retarder 300A is arranged between the first additional polariser 318A and the display polariser 218.

The display device 100 further comprises a second additional polariser 318B, the second additional polariser being a linear polariser; and at least one second polar control retarder 300B. The second additional polariser 318B is arranged on the output side of the spatial light modulator 48 outside the first additional polariser 318A, and the at least one second polar control retarder 318B is arranged between the first additional polariser 318A and the second additional polariser 31B.

Said display polariser 218 is an output display polariser arranged on the output side of the spatial light modulator 48, and the display device further comprises a reflective polariser 302 arranged between the first additional polariser 318A and at least one second polar control retarder 300B, the reflective polariser being a linear polariser.

Each of the at least one first polar control retarder 300A and the at least one second polar control retarder 300B comprises a respective switchable liquid crystal retarder 301A, 301B comprising a layer of liquid crystal material 314A, 314B, arranged between transparent substrates 312A, 312B and 316A, 316B respectively.

Each of the at least one first polar control retarder 300A and at least one second polar control retarder 300B further comprises at least one passive compensation retarder 330A, 330B respectively.

In an alternative embodiment (not shown), reflective polariser 302 may be omitted.

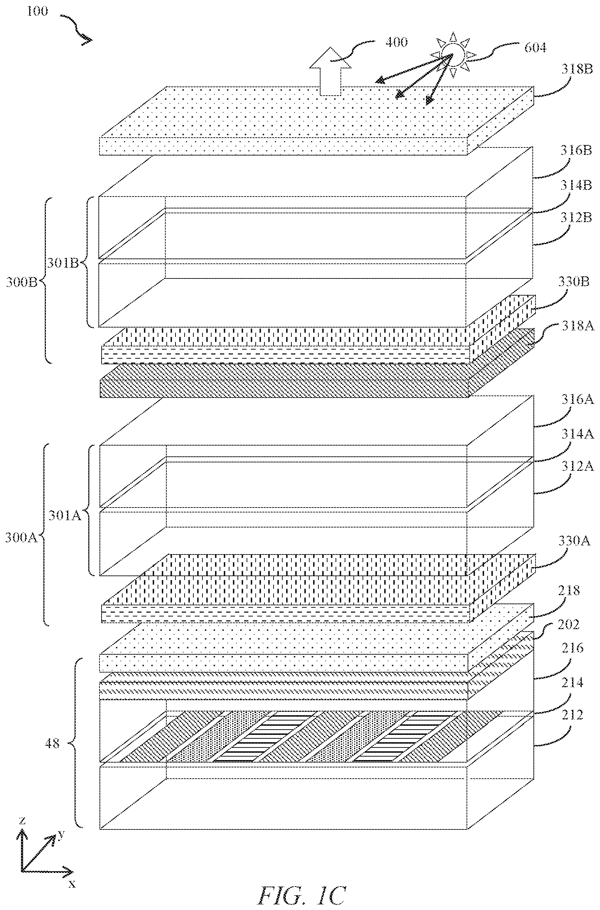

**FIGURE 1C** is a schematic diagram illustrating in side perspective view the switchable privacy display device 100 of FIGURE 1A wherein the reflective polariser 302 is omitted and the first additional polariser 318A is a reflective polariser. Advantageously thickness and cost may be reduced. Features of the embodiment of FIGURE 1A not discussed in further detail may be assumed to correspond to the features with equivalent reference numerals as discussed above, including any potential variations in the features.

The spatial light modulator 48 may take any suitable form. Some possible alternatives are as follows.

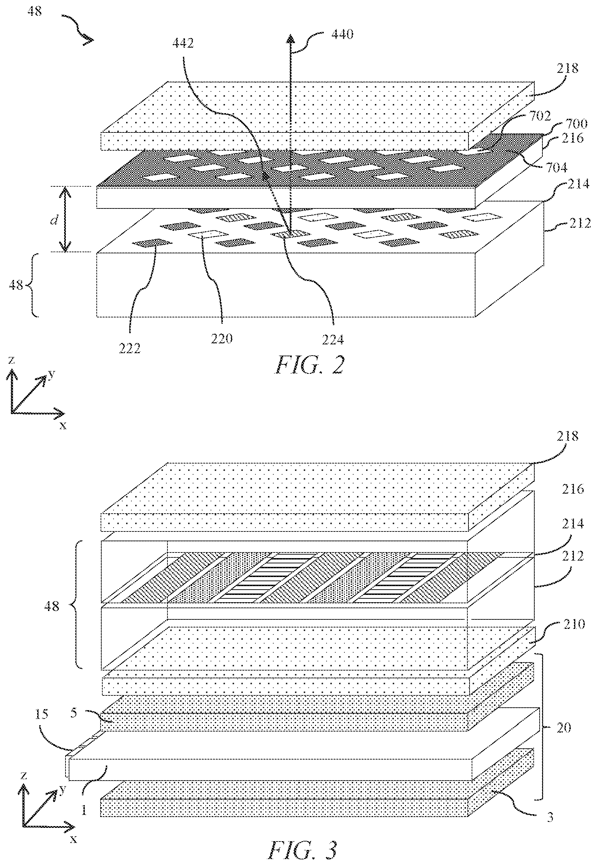

**FIGURE 2** is a schematic diagram illustrating in side perspective view of an alternative for the structure of emissive spatial light modulator 48 for use in the arrangement of FIGURE 1A. The spatial light modulator 48 further comprising a parallax barrier 700 comprising light absorbing region 704 and apertures 702 that are aligned with the pixels 220, 222, 224 of the pixel plane 214. The parallax barrier 700 is separated by distance d from the pixel plane 214 and is aligned to the pixels so that the pixels have high luminance on axis and reduced luminance off-axis.

In operation the parallax barrier 700 is arranged to provide transmission of light ray 440 from pixel 224 in the normal direction to the spatial light modulator 48, and the aligned aperture 702 is arranged with an aperture size to provide high transmission. By comparison light rays 442 that are inclined at a non-zero polar angle, may be absorbed in the absorbing region 704. The separation d is provided to achieve a minimum transmission at a desirable polar angle in at least one azimuthal direction. Advantageously off-axis luminance is reduced, achieving increased security factor.

Further, reflectivity of the pixel plane may be reduced as incident ambient light is absorbed at the absorbing region 704. Quarter waveplate 202 of FIGURES 1A-1B may be omitted achieving reduced cost and complexity.

Features of the embodiment of FIGURE 2 not discussed in further detail may be assumed to correspond to the features with equivalent reference numerals as discussed above, including any potential variations in the features.

Another alternative for the emissive spatial light modulator 48 for use in the arrangement of FIGURES 1A-B will now be described.

**FIGURE 3** is a schematic diagram illustrating in side perspective view of an alternative structure of spatial light modulator for use in the arrangement of FIGURE 1A comprising a transmissive spatial light modulator 48 and a backlight 20 arranged to output light. The spatial light modulator 48 comprises a transmissive spatial light modulator arranged to receive output light from the backlight 20. Features of the embodiment of FIGURE 1A not discussed in further detail may be assumed to correspond to the features with equivalent reference numerals as discussed above, including any potential variations in the features.

The backlight may comprise a light guide plate (LGP) 1, light extraction layers 5 and rear reflector 3. The light extraction layers may comprise diffusers, light turning films or prism films. Light may be provided from an array of light sources such as LEDs 15 arranged at the edge of the LGP 1.

The output may be provide a wide angle luminance profile such as achieved using crossed BEF^{™} films from 3M corporation and may have a full width half maximum of greater than 50 degrees. The output may provide a narrow angle profile, such backlights may be termed collimated backlights and have a full width half maximum luminance of less than 50 degrees, for example 30 degrees. Examples of collimated backlights are illustrated in U.S. Patent No. 10,935,714. The backlight may comprise other types of structure including mini-LED arrays and known light distribution optics to achieve desirable uniformity. The backlight 20 may be further provided with a micro-louvre array arranged to reduce off-axis luminance output from the backlight 20. Advantageously security factor, S may be improved in comparison to wide angle backlights.

Alternative arrangements of polar control retarders and additional polarisers will now be described for display devices 100 comprising backlights 20.

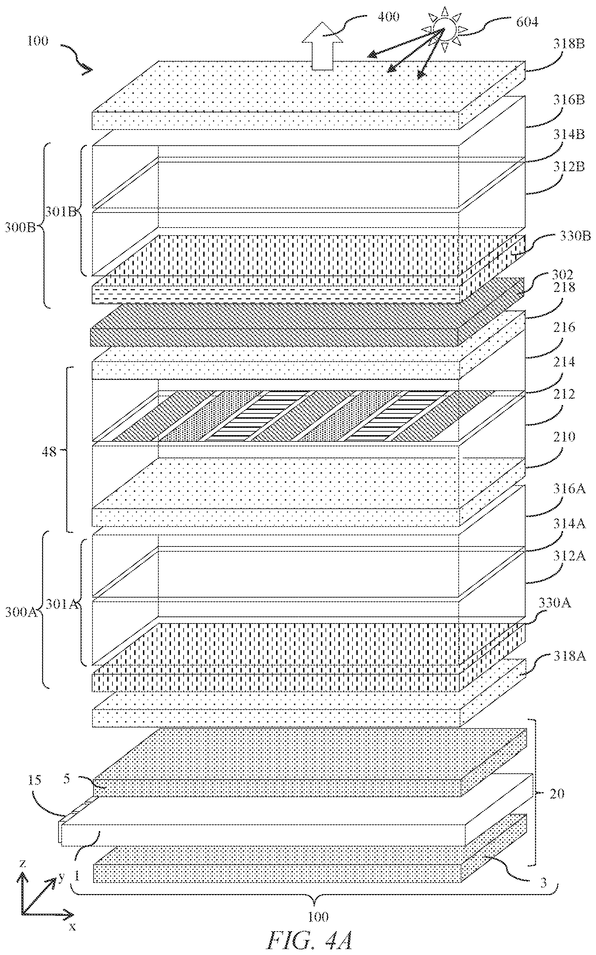

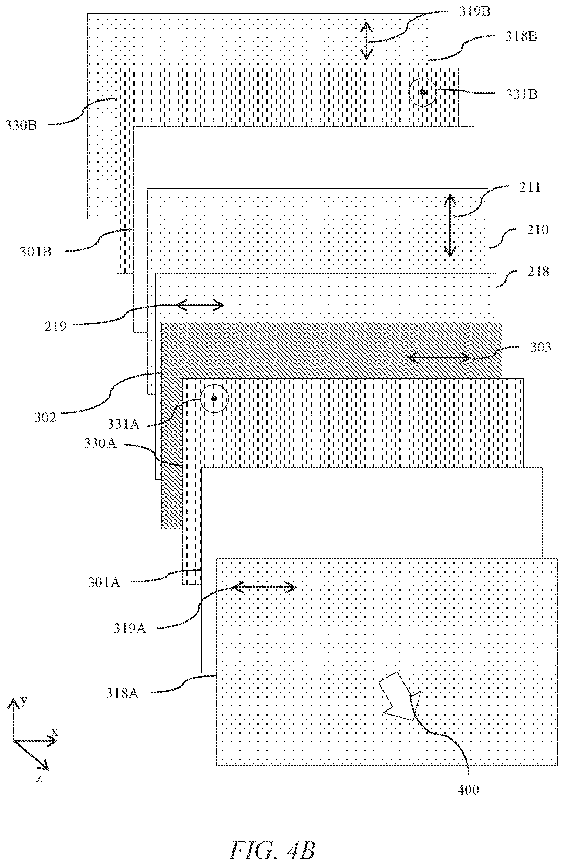

**FIGURE 4A** is a schematic diagram illustrating in side perspective view a switchable privacy display device 100 for use in ambient illumination 604 comprising the transmissive spatial light modulator 48 and backlight 20 of FIGURE 3; and **FIGURE 4B** is a schematic diagram illustrating in front perspective view an arrangement polarisers and polar control retarders for the embodiment of FIGURE 4A.

The display device 100 further comprises an input display polariser 210 arranged on the input side of the spatial light modulator 48, and the display device 100 further comprises an output display polariser 218 arranged on the output side of the spatial light modulator 48, the first additional polariser 318A is arranged on the input side of the spatial light modulator 48 and the first polar control retarder 300A is arranged between the first additional polariser 318A and the input display polariser 210. The second additional polariser 318B is arranged on the output side of the spatial light modulator 48, and the at least one second polar control retarder 300B is arranged between the second additional polariser 318B and the output display polariser 218.

Second polar control retarder 300B is arranged between the input display polariser 210 of the spatial light modulator 48 and a second additional polariser 318B. Reflective polariser 302 is arranged between the output display polariser 218 and the second polar control retarder 318B. In an alternative embodiment (not shown), reflective polariser 302 may be omitted.

Advantageously the separation of the output of the second additional polariser 318B to the pixel plane 214 is reduced in comparison to the arrangements of FIGURES 1A-B. Contrast of the image seen may be increased due to the reduced number of layers. An air gap may be provided between the input polariser 210 and second polar retarder 300B, advantageously reducing assembly cost and complexity.

In the present embodiments, said one of the at least one first polar control retarder 300A and the at least one second polar control retarder 300B is the at least one second polar control retarder and said other of the at least one first polar control retarder and the at least one second polar control retarder is the at least one first polar control retarder.

Features of the embodiment of FIGURE 4A not discussed in further detail may be assumed to correspond to the features with equivalent reference numerals as discussed above, including any potential variations in the features.

The embodiments of FIGURES 1A-B and FIGURE 4A may alternatively be provided with no reflective polariser 302. Advantageously frontal reflections are reduced in privacy mode in environments where increased reflection is considered undesirable. Another alternative arrangement with no reflective polariser will now be described.

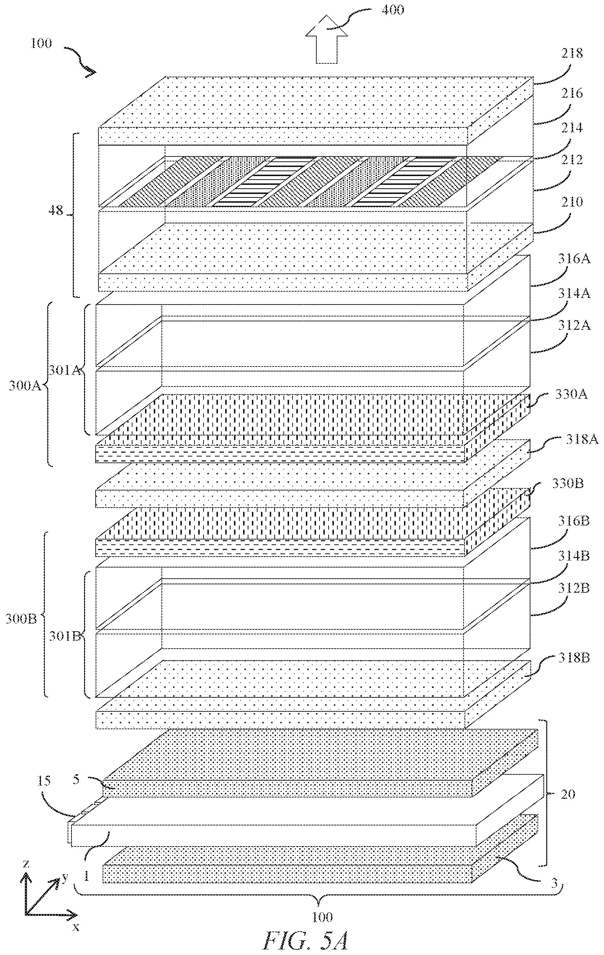

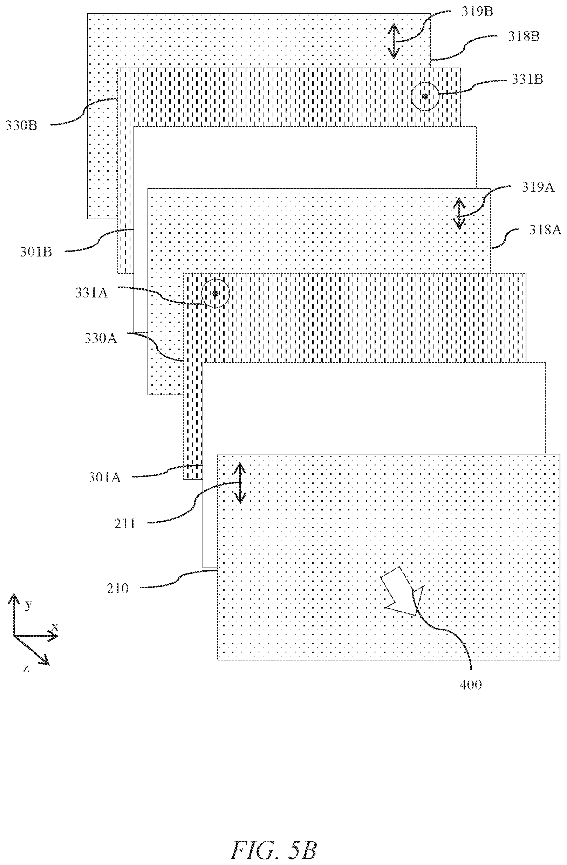

**FIGURE 5A** is a schematic diagram illustrating in side perspective view a switchable privacy display device 100 comprising the transmissive spatial light modulator 48 and backlight 20 of FIGURE 3; and **FIGURE 5B** is a schematic diagram illustrating in front perspective view an arrangement polarisers and polar control retarders for the embodiment of FIGURE 5A.

A first polar control retarder 300A is arranged between the input display polariser 210 of the spatial light modulator 48 and a first additional polariser 318A; and a second polar control retarder 300B is arranged between the first additional polariser 318A and a second additional polariser 318B.

Reflective polariser 302 is omitted. In some environments such as certain automotive environments, reflective operation may be undesirable and front of display reflectivity may be reduced. Further cost may be reduced.

In comparison to the arrangements of FIGURE 1 and FIGURE 4A the output display polariser 218 is the display device 100 output polariser. Advantageously diffusers may be arranged on the polariser 218 to provide increased image haze with reduced image blurring. Air gaps may be provided between the spatial light modulator input polariser 210 and plural retarders 300A, 300B. Advantageously image contrast is not degraded and assembly cost and complexity is reduced.

Features of the embodiment of FIGURE 5A not discussed in further detail may be assumed to correspond to the features with equivalent reference numerals as discussed above, including any potential variations in the features.

Arrangements of liquid crystal alignment for use in the retarders 300A, 300B of FIGURE 1, FIGURE 4A and FIGURE 5A will now be described.

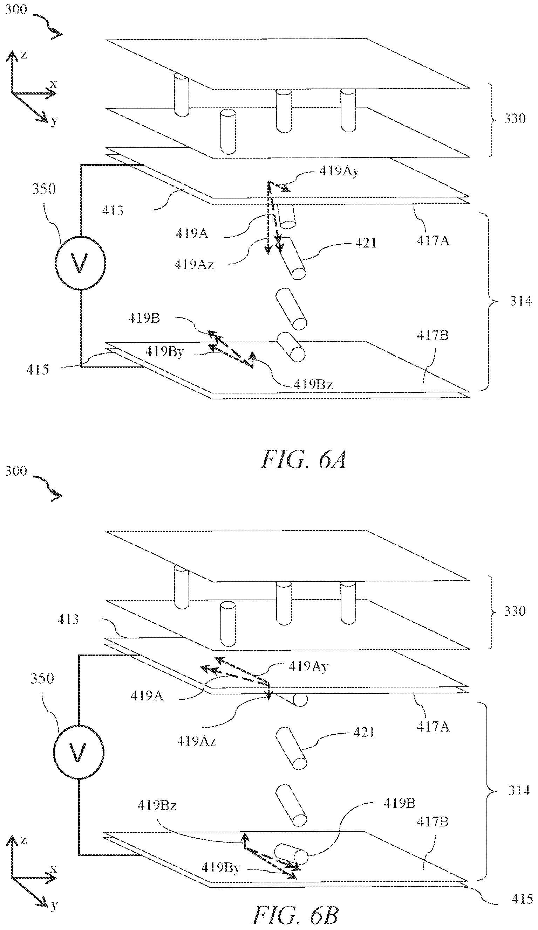

**FIGURE** 6A is a schematic diagram illustrating in side perspective view a structure of a polar control retarder 300 wherein the polar control retarder 300 comprises a passive C plate retarder 330 and an active liquid crystal layer 314.

Electrodes 413, 415 are arranged to apply a voltage from driver 350 across the liquid crystal material 421 in the layer 314. In a first driven state the liquid crystal molecules are arranged to provide no phase modification to input polarisation state in a normal direction to the polar control retarder and modified phase to an input polarisation state in directions at an angle to the normal direction to the polar control retarder 300. Such a driven state may be provided for privacy mode operation.

In a second driven state the liquid crystal molecules are arranged to provide no phase modification to input polarisation state in a normal direction to the polar control retarder and modified phase to an input polarisation state in directions at an angle to the normal direction to the polar control retarder 300. Such a driven state may be provided for public (or share) mode operation.

Two surface alignment layers are disposed adjacent to the layer of liquid crystal material and on opposite sides thereof. One of the surface alignment layers being arranged to provide homogenous alignment in the adjacent liquid crystal material and the other of the surface alignment layers being arranged to provide homeotropic alignment in the adjacent liquid crystal material. The alignment layers thus comprise a homeotropic alignment layer 417A and a homogeneous alignment layer 417B.

The pretilt directions 419A, 419B of the alignment layers have a component in the plane of the alignment layers 417A, 417B that are antiparallel. The pretilt directions 419A, 419B refer to the alignment of the liquid crystal molecules 421 that are adjacent to said layers. The components 419Ay and 419By are the in-plane components and are anti-parallel to each other. Component 419Az at the homeotropic alignment layer 417A is much greater than component 419Ay while component 419Bz at the homogeneous alignment layer 417B is much smaller than component 41By. The pretilt angle is the angle between the directions 419A and 419Ay, and between directions 419B and 419By respectively.

The components 419Ay, 419By are oriented in a first direction in the plane of the alignment layers, that is parallel to the y-axis.

In the present illustrative embodiments and as illustrated in FIGURE 6A, the at least one passive compensation retarder 330 of said one of the at least one first polar control retarder 330A and the at least one second polar control retarder 330B is arranged on the same side of the switchable liquid crystal retarder 314 as the surface alignment layers 417A that is arranged to provide homeotropic alignment in the adjacent liquid crystal material 421. The at least one second polar control retarder 330 comprises a passive uniaxial retarder having its optical axis perpendicular to the plane of the retarder 330, that is a C-plate.

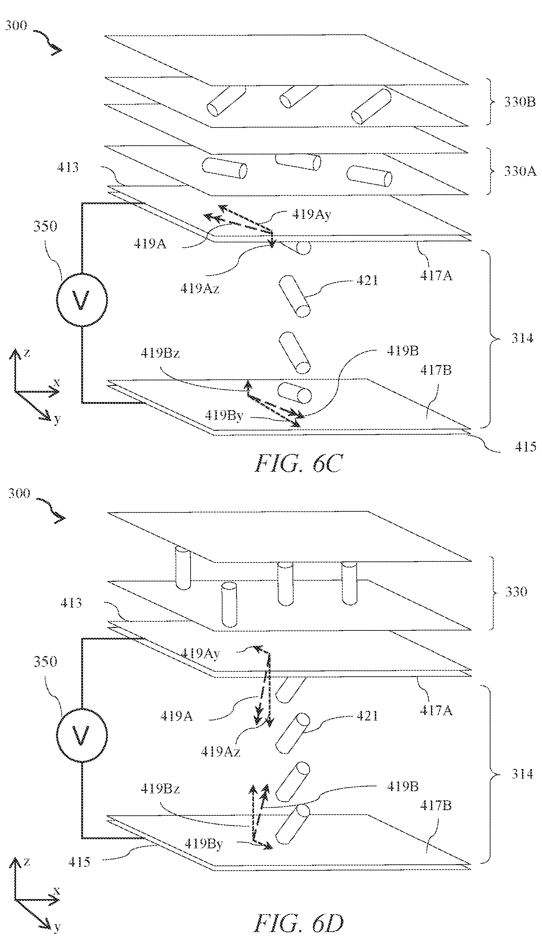

In alternative embodiments, the passive retarder 330 may comprise 'crossed' A-plates. In the present disclosure crossed A-plates refers to a pair of passive uniaxial retarders having optical axes in the plane of the retarders that are crossed, as illustrated by retarders 330A, 330B in FIGURE 6C.

**FIGURE 6B** is a schematic diagram illustrating in side perspective view a structure of a polar control retarder wherein the polar control retarder comprises a passive C plate and an active liquid crystal layer comprising two homogeneous alignment layers, wherein pretilt directions of the alignment layers have a component in the plane of the alignment layers that are antiparallel.

**FIGURE 6C** is a schematic diagram illustrating in side perspective view a structure of a polar control retarder and an active liquid crystal layer comprising two homogeneous alignment layers wherein the polar control retarder comprises crossed A-plates.

**FIGURE 6D** is a schematic diagram illustrating in side perspective view a structure of a polar control retarder wherein the polar control retarder comprises a passive C plate and an active liquid crystal layer comprising two homeotropic alignment layers, wherein pretilt directions of the alignment layers have a component in the plane of the alignment layers that are antiparallel.

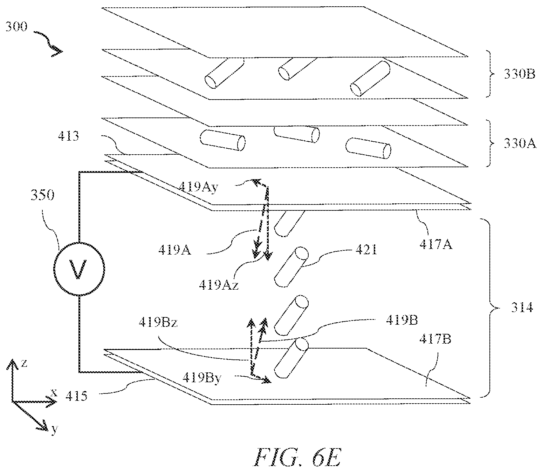

**FIGURE 6E** is a schematic diagram illustrating in side perspective view a structure of a polar control retarder and an active liquid crystal layer comprising two homogeneous alignment layers wherein the polar control retarder comprises crossed A-plates. Advantageously higher retardances of the passive retarder 330A, 330B may be provided at lower cost in comparison to a C-plate 330 embodiment of FIGURE 6D.

In the present embodiments one of the polar control retarders 300A, 300B may comprise the polar control retarder 300 of FIGURE 6A and the other of the polar control retarders 300A, 300B may comprise one of the polar control retarders 300 of FIGURES 6B-E. The at least one passive compensation retarder of said other of the at least one first polar control retarder and the at least one second polar control retarder comprises either: a passive uniaxial retarder having its optical axis perpendicular to the plane of the retarder; or a pair of passive uniaxial retarders having optical axes in the plane of the retarders that are crossed.

In respect of said other (with alignment layers that are of the same type) of the at least one first polar control retarder and the at least one second polar control retarder, both of the surface alignment layers may be arranged to provide homeotropic alignment in the adjacent liquid crystal material. Advantageously reduced voltage and power consumption may be provided in public mode in comparison to arrangements in which both alignment layers have homogeneous alignment.

In respect of said other (with alignment layers that are of the same type) of the at least one first polar control retarder and the at least one second polar control retarder, both of the surface alignment layers may be arranged to provide homogeneous alignment in the adjacent liquid crystal material. Advantageously the visibility of defects to applied pressure may be reduced in comparison to arrangements in which both alignment layers have homeotropic alignment.

Features of the embodiment of FIGURES 6A-C not discussed in further detail may be assumed to correspond to the features with equivalent reference numerals as discussed above, including any potential variations in the features.

Referring to the arrangements of FIGURES 1A-B, FIGURES 4A-B and FIGURES 5A-B, in respect of one of the at least one first polar control retarder 300A and the at least one second polar control retarder 300B, one of the surface alignment layers 417A or 417B is arranged to provide homogenous alignment in the adjacent liquid crystal material and the other of the surface alignment layers 417B or 417A is arranged to provide homeotropic alignment in the adjacent liquid crystal material 421, and in respect of the other of the at least one first polar control retarder 300A and the at least one second polar control retarder 300B, both of the surface alignment layers 417A, 417B are arranged to provide homogenous alignment in the adjacent liquid crystal material or both of the surface alignment layers 417A, 417B are arranged to provide homeotropic alignment in the adjacent liquid crystal material.

Operation of polar control retarders between parallel polarisers is described further in U.S. Patent No. 10,126,575 and in U.S. Patent Publ. No. 2019-0086706. The operation of the plural polar control retarders of the present embodiments in a public mode of operation will now be described.

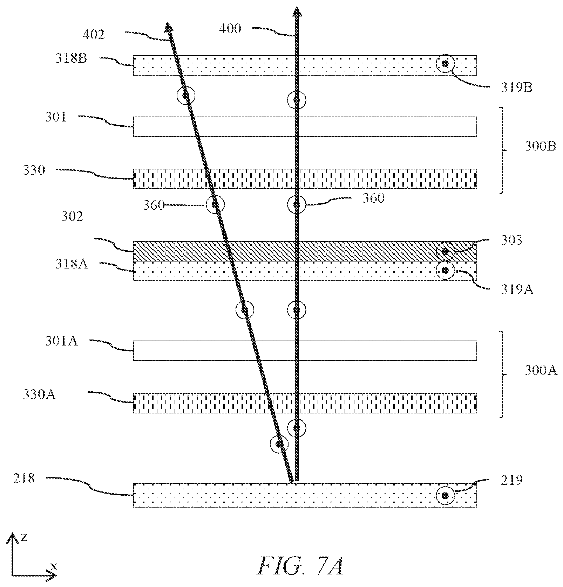

**FIGURE** 7A is a schematic diagram illustrating in side view the operation of the arrangement of FIGURE 1A for transmitted light from the spatial light modulator in the public mode of operation. In the embodiments that will be described below, light ray 400 that is normal to the display (or in a head-on direction) is transmitted by the display polariser 219 with a polarisation state 360 that is unmodified by the polar control retarders 300A, 300B and polarisers 318A, 302 and 318B. Such light is transmitted with high luminance.

In public mode, rays 402 with a non-zero polar angle to the normal direction are also transmitted with the same polarisation state 360 that is substantially not modified by the polar control retarders 300A, 300B and polarisers 318A, 302 and 318B. The polar profile of luminance from the spatial light modulator may be substantially unmodified. Advantageously the display may be visible from a wide range of polar viewing positions and viewable by multiple display users.

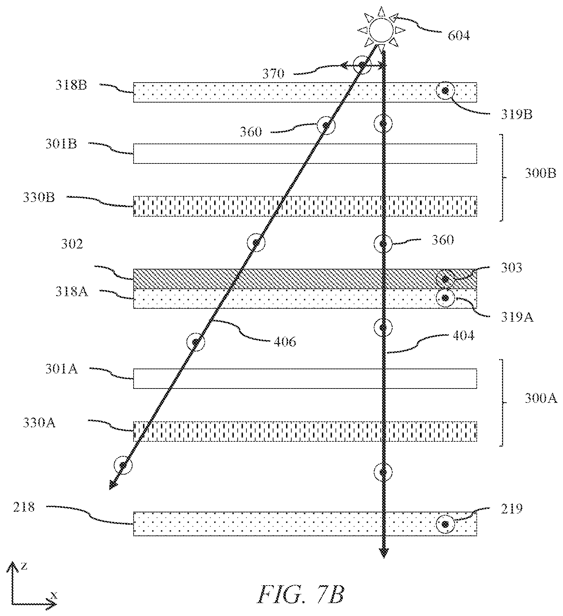

**FIGURE 7B** is a schematic diagram illustrating in side view the operation of the arrangement of FIGURE 1A for incident ambient light 604 in the public mode of operation. Light rays 404, 406 are incident on the display device 100 with substantially unpolarised state 370. The polariser 318B provides a polarisation state 360 that is incident on the first polar control retarder and is substantially unmodified for head-on ray 404 and off-axis ray 406. Thus the light rays are substantially not reflected by the display are absorbed in the spatial light modulator 48 and backlight 20 if present. The display reflectivity is maintained at a low level for a wide range of viewing directions and advantageously a high contrast image is seen by multiple display users.

The operation of the polar control retarders in a private mode of operation will now be described.

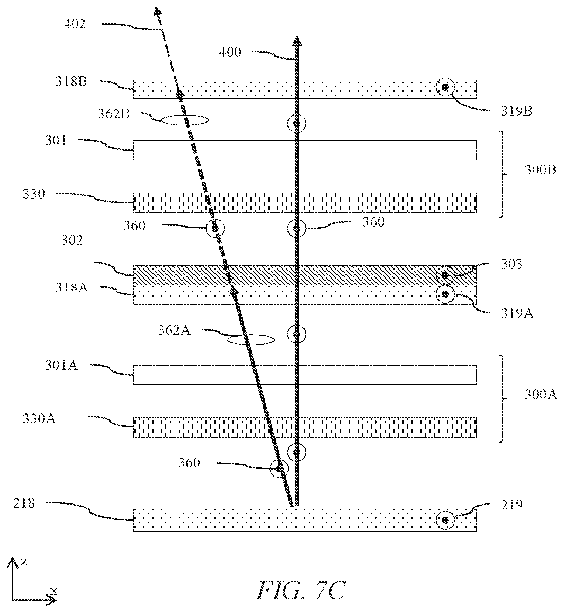

**FIGURE 7C** is a schematic diagram illustrating in side view the operation of the arrangement of FIGURE 1A for transmitted light from the spatial light modulator in a privacy mode of operation with high reflectivity of ambient light. Head-on light ray 400 has a polarisation state 360 that is substantially unmodified by polar control retarders 300A, 300B. By comparison, off-axis light ray 402 has an output from the first polar control retarder that has an imparted phase difference to provide in general an elliptical state 362A. On incidence with first additional polariser 318A the luminance of the ray 402 is reduced with output state 360. Said light ray 402 is transmitted through reflective polariser 302 with small loss and is incident on the second polar control retarder 300B at which further phase modulation is provided and an output polarisation state 362B is achieved. Such state 362B is at least in part absorbed by second additional polariser 318B. Ray 402 is thus transmitted at off-axis polar locations with reduced luminance compared to the ray 402 in FIGURE 7A.

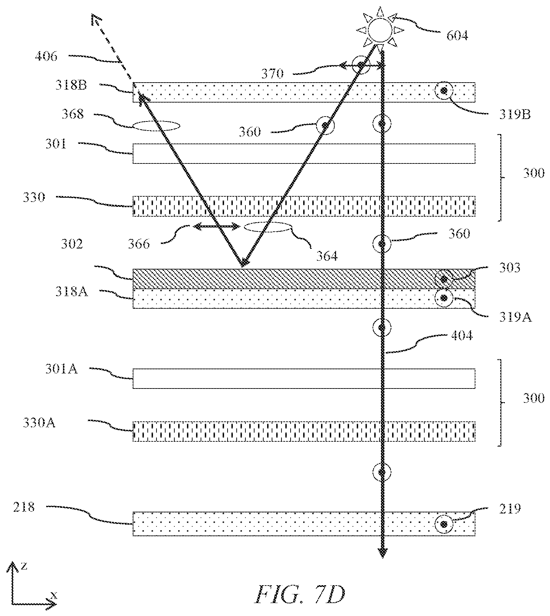

**FIGURE 7D** is a schematic diagram illustrating in side view the operation of the arrangement of FIGURE 1A for ambient light in a privacy mode of operation with high reflectivity of ambient light. Head-on incident ambient light ray 404 is transmitted with substantial reflection from the reflective polariser 302.

By comparison light ray 406 undergoes a phase modulation at the polar control retarder 300B such that state 364 illuminates the reflective polariser. The resolved polarisation state 366 that is orthogonal to the electric vector transmission direction 303 of the reflective polariser 302 is reflected and is passed through the polar retarder such that polarisation state 368 is incident on to the second additional polariser. The component of the state 368 that is parallel to the electric vector transmission direction of the polariser 318B is thus transmitted. To an off-axis observer, the display appears to have increased reflectivity. Said increased reflectivity advantageously achieves increased security factor, S as described above.

Features of the embodiments of FIGURES 7A-D not discussed in further detail may be assumed to correspond to the features with equivalent reference numerals as discussed above, including any potential variations in the features.

The operation of FIGURES 7A-D is common to the arrangements of FIGURES 1A-B and FIGURE 4A.

The embodiments of FIGURES 1A-B and FIGURE 4A may further be provided with no reflective polariser 302. In such non-reflective structures and in FIGURE 5A, the operation of FIGURES 7A and 7C only apply, that is the reflectivity does not increase in embodiments in which the reflective polariser 302 is omitted. Advantageously displays may be provided with low reflectivity in privacy mode of operation. For example displays for use in bright ambient environments such as for daytime operation in automotive vehicles may not provide a reflectivity enhancement in privacy mode.

It may be desirable to provide a switchable privacy display with narrow angle privacy switch-on and with a wide angle public mode.

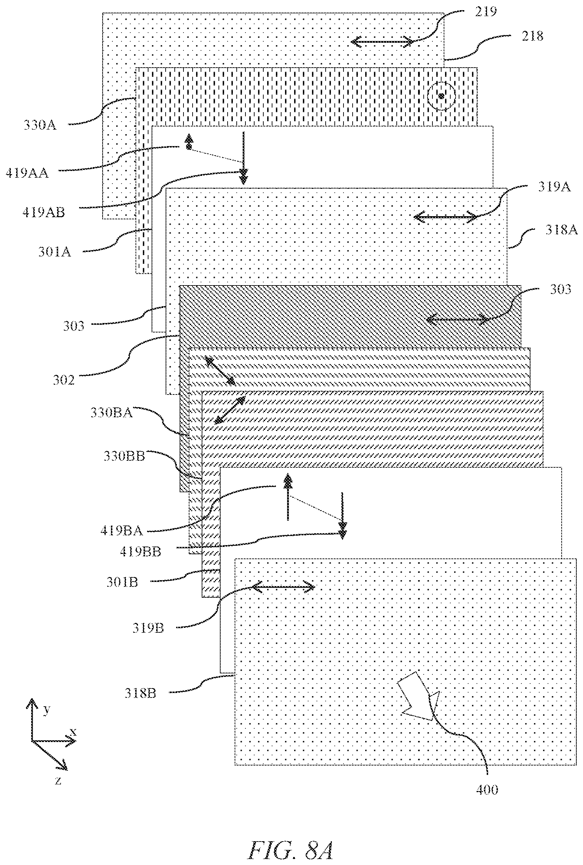

**FIGURE 8A** is a schematic diagram illustrating in front perspective view an arrangement polarisers and polar control retarders for the embodiment of FIGURE 1A wherein the first polar control retarder 300A comprises a homeotropic alignment 419AA and a homogeneous alignment layer 419AB and C-plate 330A; and the second polar control retarder 300B comprises two homogeneous alignment layers 419BA, 419BB and the passive control retarder comprises crossed A-plates 330BA, 330BB.

Features of the embodiment of FIGURE 8A not discussed in further detail may be assumed to correspond to the features with equivalent reference numerals as discussed above, including any potential variations in the features.

In the present embodiments, liquid crystal retarders 301 with two homeotropic alignment layers are preferably provided with passive retarder 330 comprising a negative C plate. In alternative embodiments such retarders may also be provided by crossed A-plates, however such embodiments are not described in further detail herein.

In the present embodiments, liquid crystal retarders 301 with two homogeneous alignment layers are preferably provided with passive retarder 330 comprising crossed A-plates or at least one negative C plate.

In the present embodiments, liquid crystal retarders 301 with one homogeneous alignment layer and one homeotropic alignment layer are preferably provided with passive retarder 330 comprising crossed at least one negative C plate. Preferably the negative C plate is on the same side of the liquid crystal layer 314 as the homeotropic alignment layer, that is the homeotropic alignment layer 417A is between the liquid crystal layer 314 and the passive retarder 330. In alternative embodiments such retarders may also be provided by crossed A-plates, however such embodiments are not described in further detail herein.

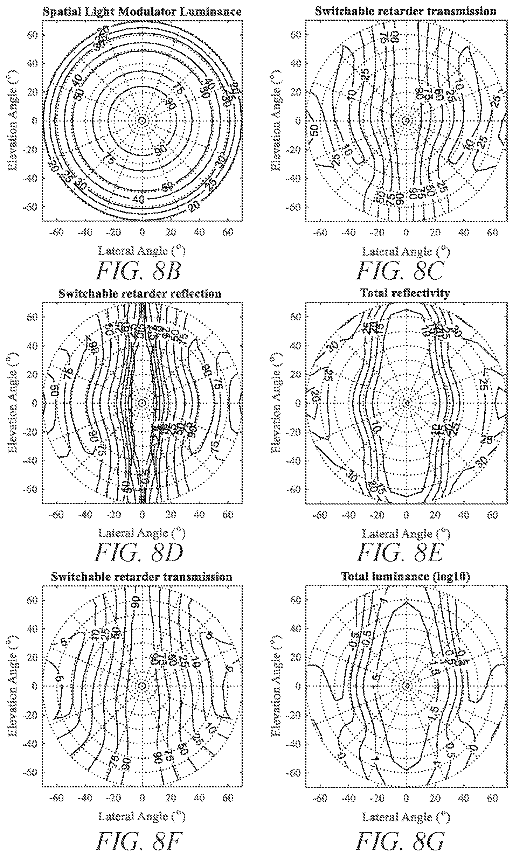

The illustrative embodiment of TABLE 1A will now be discussed with reference to FIGURES 8B-J.

**TABLE 1A**

| Item | Layer | Alignment type | Pretilt | In-plane alignment direction | LC layer 314 retardance | Additional passive retarder 330 type | Additional passive retarder 330 retardance |
|---|---|---|---|---|---|---|---|
| | | | | | {narrow range} | | {narrow range} |
| | | | | | (wide range) | | (wide range) |
| | 417BB | Homogeneous | 2 | 0 | 700nm | | |
| | 417BA | Homogeneous | 2 | 180 | {550nm~800nm} | | |
| | | | | | (450nm~900nm) | | |
| 300B | 330BA | | | | | Positive A-plate @ 45° | +570nm |
| | | | | | | | {+400 ~ 625nm} |
| | | | | | | | (+250nm ~ +800nm) |
| | 330BB | | | | | Positive A-plate @ 135° | +570nm |
| | | | | | | | {+400 ~ 625nm} |
| | | | | | | | (+250nm ~ +800nm) |
| 300A | 417AB | Homogeneous | 2 | 180 | 1250nm | | |
| | 417AA | Homeotropic | 88 | 0 | {850nm~1800nm} | | |
| | | | | | (700nm~2500nm) | | |
| | 330A | | | | | Negative C-plate | -1000nm |
| | | | | | | | {-700nm ~ -1700nm} |
| | | | | | | | (-400nm ~ -2100nm) |

In the present embodiments, the switchable liquid crystal retarder 314 of said one (with a homeotropic alignment layer and a homogeneous alignment layer) of the at least one first polar control retarder and the at least one second polar control retarder that is arranged to provide homogenous alignment in the adjacent liquid crystal material and the other of the surface alignment layers is arranged to provide homeotropic alignment in the adjacent liquid crystal material, is the first polar control retarder 300A. Said retarder has a liquid crystal retarder 314 that has a retardance for light of a wavelength of 550nm having a first retardance value in a range from 700nm to 2500nm, preferably in a range from 850nm to 1800nm. Said one 300A of the at least one first polar control retarder and the at least one second polar control retarder further comprises at least one passive compensation retarder.

As disclosed in TABLE 1A, the passive uniaxial retarder 330A has a retardance for light of a wavelength of 550nm in a range from -400nm to -2100nm, preferably in a range from -700nm to - 1700nm.

The switchable liquid crystal retarder 314A of said one (with a homeotropic alignment layer and a homogeneous alignment layer) first polar control retarder has a retardance for light of a wavelength of 550nm having a first retardance value and the switchable liquid crystal retarder of said other (with two homogeneous alignment layers) of the second polar control retarder 300B has a retardance for light of a wavelength of 550nm has a second retardance value, the first retardance value being greater than the second retardance value.

The magnitude of the difference between half the first retardance value and the second retardance value is at most 400nm and preferably at most 200nm.

**FIGURE 8B** is a graph illustrating a simulated polar profile of luminance output of an emissive spatial light modulator. As illustrated in FIGURE 1A, the spatial light modulator 48 comprises an emissive spatial light modulator arranged to output light, the display polariser is an output display polariser 218 arranged on the output side of the emissive spatial light modulator 48, the second additional polariser 318B is arranged on the output side of the spatial light modulator 48 outside the first additional polariser 318A, and the at least one second polar control retarder 300B is arranged between the first additional polariser 318A and the second additional polariser 318B. FIGURE 8B illustrates that the emissive spatial light modulator 48 has an output luminance profile having a full width half maximum that is at least 40 degrees, preferably at least 50 degrees.

In an alternative arrangement such as illustrated in FIGURE 3 the display device may further comprises a backlight 20 arranged to output light, and the spatial light modulator 48 comprises a transmissive spatial light modulator arranged to receive output light from the backlight 20. The backlight may have an output luminance profile having a full width half maximum that is at least 40 degrees, preferably at least 50 degrees.

**FIGURE 8C** is a graph illustrating a simulated polar profile of transmission of the second polar control retarder of FIGURE 8A and TABLE 1A arranged between the first and second additional polarisers wherein the electric vector transmission directions of the polarisers are parallel; **FIGURE 8D** is a graph illustrating a simulated polar profile of reflectivity of the second polar control retarder of FIGURE 8A arranged between a reflective polariser and the second additional polariser wherein the electric vector transmission directions of the polarisers are parallel; and **FIGURE 8E** is a graph illustrating a simulated polar profile of the total reflectivity comprising the reflectivity of FIGURE 8D and the Fresnel reflectivity from the front surface of the display device.

**FIGURE 8F** is a graph illustrating a simulated polar profile of transmission of the first polar control retarder of FIGURE 8A and TABLE 1A arranged between the display polariser and the first additional polariser wherein the electric vector transmission directions of the polarisers are parallel. The pretilt directions of the first polar control retarder 300A are parallel or anti-parallel to the pretilt directions of the second polar control retarder 300B.

**FIGURE 8G** is a graph illustrating a simulated polar profile of the logarithm of total output luminance of the spatial light modulator and first and second polar control retarders of FIGURE 8A and TABLE 1A for the polar profiles of FIGURES 8B-F.

As described above, the security performance of the display can be determined using the polar variation of visual security level, S with polar viewing angle.

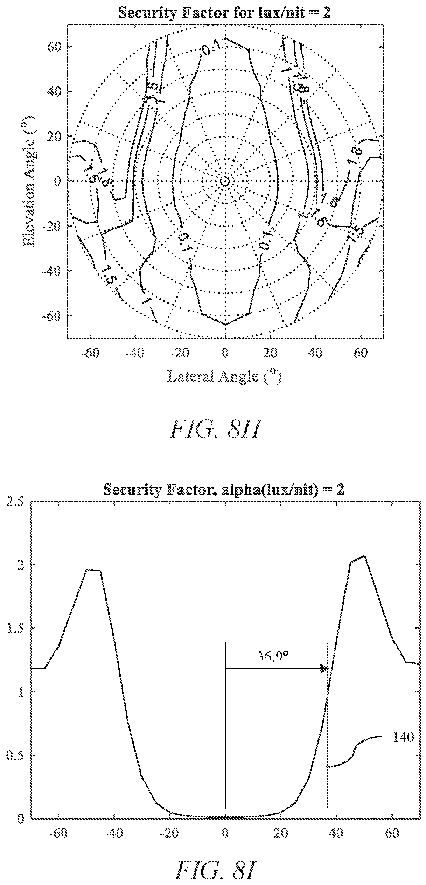

**FIGURE 8H** is a graph illustrating a simulated polar profile of the security level, S of the arrangement of FIGURE 8A and TABLE 1A for an ambient illuminance measured in lux that is twice the head-on display luminance measured in nits; and **FIGURE 8I** is a graph illustrating a simulated lateral profile for zero degrees elevation of the visual security factor of the arrangement of FIGURE 8A and TABLE 1A for an ambient illuminance measured in lux that is twice the head-on display luminance measured in nits. Thus the arrangement of FIGURE 8A and TABLE 1A using a typical luminance profile of an emissive display of FIGURE 1A can achieve a privacy switch-on angle 140 of approximately 37 degrees. Advantageously an observer at 45 degrees polar angle for zero degrees elevation can see substantially no image information, independent of image content for such ambient lighting conditions. Further the display achieves increased security level in the upper quadrants (azimuthal angles around +/- 45 degrees from the northerly azimuthal direction). In operation, privacy displays desirably provide higher security levels for snoopers in look-down viewing quadrants. In said look down quadrants high security factor is desirably achieved.

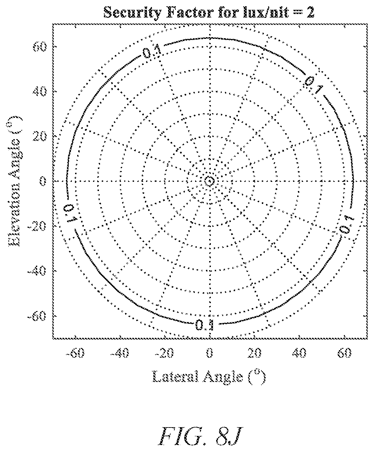

**FIGURE 8J** is a graph illustrating a simulated polar profile of the security level, S of the arrangement of FIGURE 8A for an ambient illuminance measured in lux that is twice the head-on display luminance measured in nits and operated in public mode. Advantageously image visibility (S < 0.1) is maintained to wide viewing angles so that the display can be easily seen with high contrast from polar viewing angles that are greater than 45 degrees.

Other illustrate embodiments are illustrated in TABLES 1B-F and TABLE 2 compares the privacy switch-on angle 140 for each illustrative embodiment. In comparison to the arrangement of TABLE 1A, embodiments comprising a C-plate in comparison to the crossed A-plates may advantageously be thinner and cheaper. Embodiments comprising two homeotropic alignment layers in comparison to the two homogeneous alignment layers may advantageously achieve public mode operation with zero volts, and may have lower power consumption. Embodiments wherein the first retarder 300A comprises a homeotropic alignment layer and a homogeneous alignment layer advantageously achieve lower privacy switch-on angle 140 while maintaining high security level at higher polar angles.

**TABLE 1B**

| Item | Layer | Alignment type | Pretilt | In-plane alignment direction | LC layer 314 retardance | Additional passive retarder 330 type | Additional passive retarder 330 retardance |
|---|---|---|---|---|---|---|---|
| | | | | | {narrow range} | | {narrow range} |
| | | | | | (wide range) | | (wide range) |
| 300B | 417BB | Homogeneous | 2 | 180 | 1250nm | | |
| | 417BA | Homeotropic | 88 | 0 | {850nm~1800nm} | | |
| | | | | | (700nm~2500nm) | | |
| | 330B | | | | | Negative C-plate | -1000nm |
| | | | | | | | {-700nm ~ -1700nm} |
| | | | | | | | (-400nm ~ -2100nm) |
| 300A | 417AB | Homogeneous | 2 | 0 | 700nm | | |
| | 417AA | Homogeneous | 2 | 180 | {550nm~800nm} | | |
| | | | | | (450nm~900nm) | | |
| | 330AA | | | | | Positive A-plate @ 45° | +570nm |
| | | | | | | | {+400 ~ 625nm} |
| | | | | | | | (+250nm ~ +800nm) |
| | 330AB | | | | | Positive A-plate @ 135° | +570nm |
| | | | | | | | {+400 ~ 625nm} |
| | | | | | | | (+250nm ~ +800nm) |

In respect of said other (with the same type of alignment layers) of the at least one first polar control retarder and the at least one second polar control retarder, both of the surface alignment layers are arranged to provide homogeneous alignment in the adjacent liquid crystal material.

By way of comparison with the illustrative embodiment of TABLE 1A, TABLE 1B provides the switchable liquid crystal retarder 314B of said one (with a homeotropic alignment layer and a homogeneous alignment layer) second polar control retarder has a retardance for light of a wavelength of 550nm having a first retardance value and the switchable liquid crystal retarder of said other (with two homogeneous alignment layers) of the first polar control retarder 300B has a retardance for light of a wavelength of 550nm has a second retardance value, the first retardance value being greater than the second retardance value.

In respect of said other (with the same type of alignment layers) of the at least one first polar control retarder and the at least one second polar control retarder, being the second polar control retarder 300A in TABLE 1A and the first polar control retarder in TABLE 1B, both of the surface alignment layers are arranged to provide homogenous alignment in the adjacent liquid crystal material which has a retardance for light of a wavelength of 550nm in a range from 450nm to 900nm, preferably in a range from 550nm to 800nm, and said other of the at least one first polar control retarder and the at least one second polar control retarder further comprises a pair of passive uniaxial retarders having optical axes in the plane of the retarders that are crossed and each having a retardance for light of a wavelength of 550nm in a range from 250nm to 800nm, preferably in a range from 400nm to 625nm.

**TABLE 1C**

| Item | Layer | Alignment type | Pretilt | In-plane alignment direction | LC layer 314 retardance | Additional passive retarder 330 type | Additional passive retarder 330 retardance |
|---|---|---|---|---|---|---|---|
| | | | | | {narrow range} | | {narrow range} |
| | | | | | (wide range) | | (wide range) |
| 300B | 417BB | Homogeneous | 2 | 0 | 750nm | | |
| | 417BA | Homogeneous | 2 | 180 | {600nm~850nm} | | |
| | | | | | (500nm~900nm) | | |
| | 330B | | | | | Negative C-plate | -440nm |
| | | | | | | | {-350nm ~ -600nm} |
| | | | | | | | (-300nm ~ -700nm) |
| 300A | 417AB | Homogeneous | 2 | 180 | 1250nm | | |
| | 417AA | Homeotropic | 88 | 0 | {850nm~1800nm } | | |
| | | | | | (700nm~2500nm) | | |
| | 330A | | | | | Negative C-plate | -1000nm |
| | | | | | | | {-700nm ~ -1700nm} |
| | | | | | | | (-400nm ~ -2100nm) |

**TABLE 1D**

| Item | Layer | Alignment type | Pretilt | In-plane alignment direction | LC layer 314 retardance | Additional passive retarder 330 type | Additional passive retarder 330 retardance |
|---|---|---|---|---|---|---|---|
| | | | | | {narrow range} | | {narrow range} |
| | | | | | (wide range) | | (wide range) |
| 300B | 417BB | Homogeneous | 2 | 180 | 1250nm | | |
| | 417BA | Homeotropic | 88 | 0 | {850nm~1800nm} | | |
| | | | | | (700nm~2500nm) | | |
| | 330B | | | | | Negative C-plate | -1000nm |
| | | | | | | | {-700nm ~ -1700nm} |
| | | | | | | | (-400nm ~ -2100nm) |
| 300A | 417AB | Homogeneous | 2 | 0 | 750nm | | |
| | 417AA | Homogeneous | 2 | 180 | {600nm~850nm} | | |
| | | | | | (500nm~900nm) | | |
| | 330A | | | | | Negative C-plate | -440nm |
| | | | | | | | {-350nm ~ -600nm} |
| | | | | | | | (-300nm ~ -700nm) |

For the illustrative embodiments of TABLES 1C-D in respect of the other of the at least one first polar control retarder and the at least one second polar control retarder, both of the surface alignment layers are arranged to provide homogenous alignment in the adjacent liquid crystal material which has a retardance for light of a wavelength of 550nm in a range from 500nm to 900nm, preferably 600nm to 850nm, and said other of the at least one first polar control retarder and the at least one second polar control retarder further comprises a passive uniaxial retarder having its optical axis perpendicular to the plane of the retarder and having a retardance for light of a wavelength of 550nm in a range from -300nm to -700nm, preferably in a range from -350nm to -600nm.

**TABLE 1E**

| Item | Layer | Alignment type | Pretilt | In-plane alignment direction | LC layer 314 retardance | Additional passive retarder 330 type | Additional passive retarder 330 retardance |
|---|---|---|---|---|---|---|---|
| | | | | | {narrow range} | | {narrow range} |
| | | | | | (wide range) | | (wide range) |
| 300B | 417BB | Homogeneous | 2 | 180 | 1250nm | | |
| | 417BA | Homeotropic | 88 | 0 | {850nm~1800nm} | | |
| | | | | | (700nm~2500nm) | | |
| | 330B | | | | | Negative C-plate | -1000nm |
| | | | | | | | {-700nm ~ -1700nm} |
| | | | | | | | (-400nm ~ -2100nm) |
| 300A | 417AB | Homeotropic | 88 | 0 | 750nm | | |
| | 417AA | Homeotropic | 88 | 180 | {600nm~850nm} | | |
| | | | | | (500nm~900nm) | | |
| | 330A | | | | | Negative C-plate | -660nm |
| | | | | | | | {-400nm ~ -800nm} |
| | | | | | | | (-300nm ~ -900nm) |

**TABLE 1F**

| Item | Layer | Alignment type | Pretilt | In-plane alignment direction | LC layer 314 retardance | Additional passive retarder 330 type | Additional passive retarder 330 retardance |
|---|---|---|---|---|---|---|---|
| | | | | | {narrow range} | | {narrow range} |
| | | | | | (wide range) | | (wide range) |
| 300B | 417BB | Homeotropic | 88 | 0 | 750nm | | |
| | 417BA | Homeotropic | 88 | 180 | {600nm~850nm} | | |
| | | | | | (500nm~900nm) | | |
| | 330B | | | | | Negative C-plate | -660nm |
| | | | | | | | {-400nm ~ -800nm} |
| | | | | | | | (-300nm ~ -900nm) |
| 300A | 417AB | Homogeneous | 2 | 180 | 1250nm | | |
| | 417AA | Homeotropic | 88 | 0 | {850nm~1800nm } | | |
| | | | | | (700nm~2500nm) | | |
| | 330A | | | | | Negative C-plate | -1000nm |
| | | | | | | | {-700nm ~ -1700nm} |
| | | | | | | | (-400nm ~ -2100nm) |

For the illustrative embodiments of TABLES 1E-F, in respect of the other of the at least one first polar control retarder and the at least one second polar control retarder, both of the surface alignment layers are arranged to provide homeotropic alignment in the adjacent liquid crystal material which has a retardance for light of a wavelength of 550nm in a range from 500nm to 900nm, preferably in a range from 600nm to 850nm, and said other of the at least one first polar control retarder and the at least one second polar control retarder further comprises a passive uniaxial retarder having its optical axis perpendicular to the plane of the retarder and having a retardance for light of a wavelength of 550nm in a range from -300nm to -900nm, preferably in a range from -400nm to - 800nm.

**TABLE 2**

| TABLE | 300A alignment layers & passive retarder(s) | 300B alignment layers & passive retarder(s) | 301A retardance /nm | 330A retardance /nm | 301B retardance /nm | 330B retardance /nm | Parallel cell half width angle 140 for S=1 @ 2lux/nit / deg |
|---|---|---|---|---|---|---|---|
| 1A | Homogeneous Homeotropic Negative C | Homogeneous Homogeneous Crossed A | 1250 | -1000 | 700 | 570 | 36.9 |
| 1B | Homogeneous Homogeneous Crossed A | Homogeneous Homeotropic Negative C | 700 | 570 | 1250 | -1000 | 37.2 |
| 1C | Homogeneous Homeotropic Negative C | Homogeneous Homogeneous Negative C | 1250 | -1000 | 750 | -440 | 37.8 |
| 1D | Homogeneous Homogeneous Negative C | Homogeneous Homeotropic Negative C | 750 | -440 | 1250 | -1000 | 37.9 |
| 1E | Homeotropic Homeotropic Negative C | Homogeneous Homeotropic Negative C | 750 | -660 | 1250 | -1000 | 39.2 |
| 1F | Homogeneous Homeotropic Negative C | Homeotropic Homeotropic Negative C | 1250 | -1000 | 750 | -660 | 39.6 |

TABLE 2 illustrates that privacy switch-on 140 may be achieved for angles of less than 40 degrees. Advantageously a snooper at 45 degrees polar angle may have low image visibility at at least some azimuthal angles.

In alternative embodiments of the present disclosure illustrated in FIGURE 4A and FIGURE 5A, the display device may further comprise a backlight 20 arranged to output light, the spatial light modulator 48 comprises a transmissive spatial light modulator 48 arranged to receive output light from the backlight 20, and said other (with alignment layers that are of the same type) of the at least one first polar control retarder and the at least one second polar control retarder is between the backlight 20 and the transmissive spatial light modulator 48. Advantageously the visibility of flow due to high restoration times of homeotropic alignment layers may be reduced.

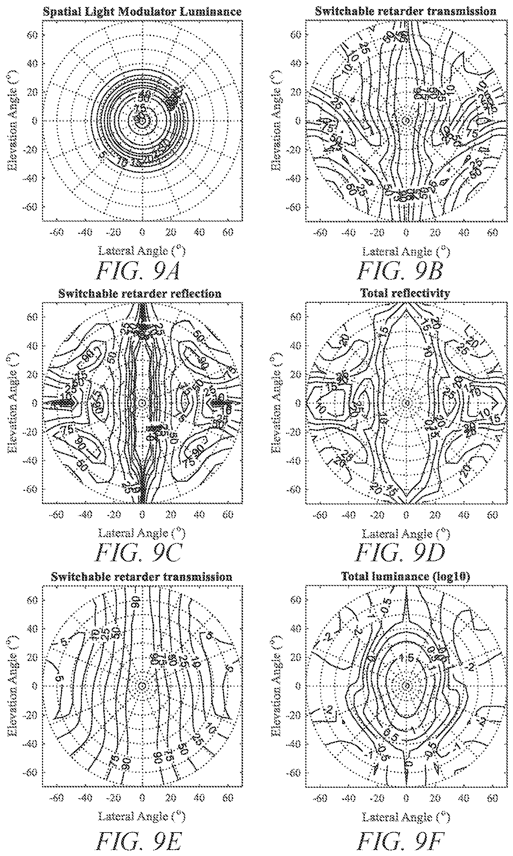

It may be desirable to provide a display with a small switch-on angle 140 while maintaining high security level for off-axis viewing. The illustrative embodiment of TABLE 3A will now be discussed with reference to FIGURES 9A-H.

In the embodiments of TABLES 3A-D, the switchable liquid crystal retarder of said one (with a homeotropic alignment layer and a homogeneous alignment layer) of the at least one first polar control retarder and the at least one second polar control retarder has a retardance for light of a wavelength of 550nm having a first retardance value and the switchable liquid crystal retarder of said other (with alignment layers that are of the same type) the at least one first polar control retarder and the at least one second polar control retarder has a retardance for light of a wavelength of 550nm has a second retardance value, half of the first retardance value being less than the second retardance value.

**TABLE 3A**

| Item | Layer | Alignment type | Pretilt | In-plane alignment direction | LC layer 314 retardance | Additional passive retarder 330 type | Additional passive retarder 330 retardance |
|---|---|---|---|---|---|---|---|
| | | | | | {narrow range} | | {narrow range} |
| | | | | | (wide range) | | (wide range) |
| 300B | 417BB | Homogeneous | 2 | 180 | 1480nm | | |
| | 417BA | Homogeneous | 2 | 0 | {850nm~1800nm} | | |
| | | | | | (700nm~2500nm) | | |
| | 330BA | | | | | Positive A-plate @ 45° | +1050nm |
| | | | | | | | {+750nm to +1300nm} |
| | | | | | | | (+600nm to +1600nm) |
| | 330BB | | | | | Positive A-plate @ 135° | +1050nm |
| | | | | | | | {+750nm to +1300nm} |
| | | | | | | | (+600nm to +1600nm) |
| 300A | 417AB | Homogeneous | 2 | 180 | 1250nm | | |
| | 417AA | Homeotropic | 88 | 0 | {850nm~1800nm} | | |
| | | | | | (700nm~2500nm) | | |
| | 330A | | | | | Negative C-plate | -1000nm |
| | | | | | | | {-700nm ~ -1700nm} |
| | | | | | | | (-400nm ~ -2100nm) |

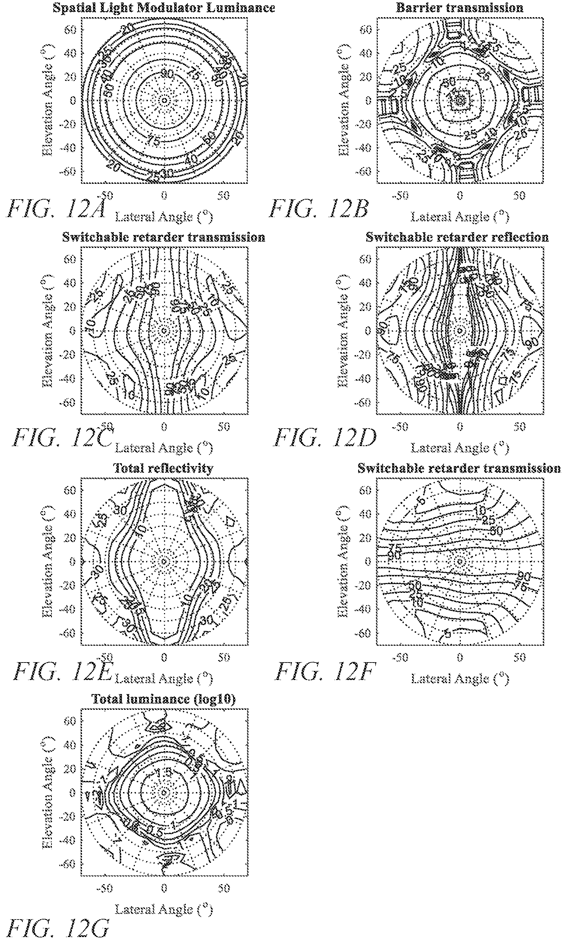

**FIGURE 9A** is a graph illustrating a simulated polar profile of luminance output of a transmissive spatial light modulator 48 that is illuminated by a collimated backlight 20. The display device 100 thus further comprises a backlight 20 arranged to output light, and the spatial light modulator 48 comprises a transmissive spatial light modulator arranged to receive output light from the backlight. The backlight has an output luminance profile having a full width half maximum that is at most 40 degrees. The spatial light modulator may alternatively comprise an emissive spatial light modulator and a parallax barrier 700 as described with respect to FIGURES 12A-B, below.

The optical stack of FIGURE 8A comprising the layers of TABLE 3A and a collimated backlight 20 will now be discussed.

**FIGURE 9B** is a graph illustrating a simulated polar profile of transmission of the second polar control retarder of TABLE 3A; **FIGURE 9C** is a graph illustrating a simulated polar profile of reflectivity of the second polar control retarder of TABLE 3A; **FIGURE 9D** is a graph illustrating a simulated polar profile of the total reflectivity comprising the reflectivity of FIGURE 9C and the Fresnel reflectivity from the front surface of the display device.

**FIGURE 9E** is a graph illustrating a simulated polar profile of transmission of the first polar control retarder of TABLE 3A. The pretilt directions of the first polar control retarder 300A are parallel or anti-parallel to the pretilt directions of the second polar control retarder 300B.

**FIGURE 9F** is a graph illustrating a simulated polar profile of the logarithm of total output luminance of the spatial light modulator and first and second polar control retarders for the polar profiles of FIGURES 9A-E.

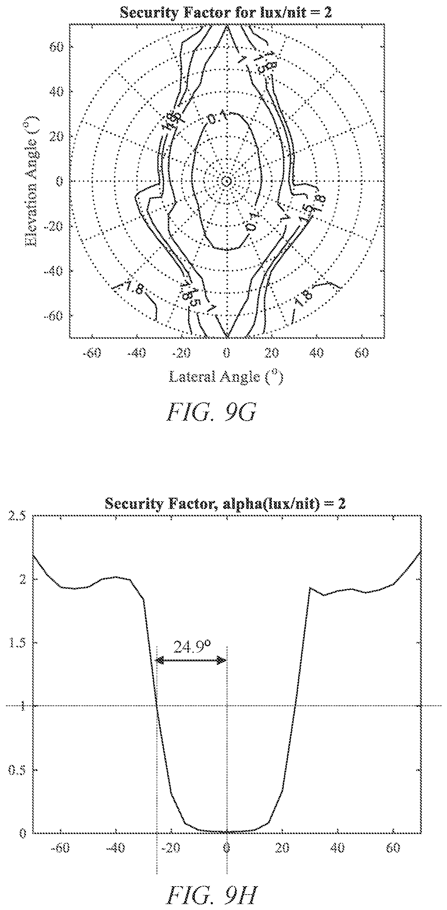

**FIGURE 9G** is a graph illustrating a simulated polar profile of the security level, S of the arrangement of FIGURE 8A, and the profiles of FIGURES 9A-F for an ambient illuminance measured in lux that is twice the head-on display luminance measured in nits for the polar profiles of FIGURES 9A-E.; and **FIGURE 9H** is a graph illustrating a simulated lateral profile for zero degrees elevation of the visual security factor of the arrangement for an ambient illuminance measured in lux that is twice the head-on display luminance measured in nits for the polar profiles of FIGURES 9A-E.

Other illustrate embodiments are illustrated in TABLES 3B-D and TABLE 4 compares the privacy switch-on angle 140 for each illustrative embodiment. The embodiments may be provided for the arrangements of FIGURES 1A-B or alternatively for the arrangements of FIGURES 4A-B, wherein the arrangements comprise reflective polariser 302.

In comparison to the arrangement of TABLE 3A, embodiments comprising a C-plate in comparison to the crossed A-plates may advantageously be thinner and cheaper. Embodiments comprising two homeotropic alignment layers in comparison to the two homogeneous alignment layers may advantageously achieve public mode operation with zero volts, and may have lower power consumption. Embodiments wherein the first retarder 300A comprises a homeotropic alignment layer and a homogeneous alignment layer advantageously achieve lower privacy switch-on angle 140 while maintaining high security level at higher polar angles.

**TABLE 3B**

| Item | Layer | Alignment type | Pretilt | In-plane alignment direction | LC layer 314 retardance | Additional passive retarder 330 type | Additional passive retarder 330 retardance |
|---|---|---|---|---|---|---|---|
| | | | | | {narrow range} | | {narrow range} |
| | | | | | (wide range) | | (wide range) |
| 300B | 417BB | Homeotropic | 88 | 0 | 1500nm | | |
| | 417BA | Homeotropic | 88 | 180 | {100nm~1800nm} | | |
| | | | | | (700nm~2500nm) | | |
| | 330B | | | | | Negative C-plate | -1400nm |
| | | | | | | | {-900nm ~ -1800nm} |
| | | | | | | | (-700nm ~ -2500nm) |
| 300A | 417AB | Homogeneous | 2 | 180 | 1250nm | | |
| | 417AA | Homeotropic | 88 | 0 | {850nm~1800nm} | | |
| | | | | | (700nm~2500nm) | | |
| | 330A | | | | | Negative C-plate | -1000nm |
| | | | | | | | {-700nm ~ -1700nm} |
| | | | | | | | (-400nm ~ -2100nm) |

**TABLE 3C**

| Item | Layer | Alignment type | Pretilt | In-plane alignment direction | LC layer 314 retardance | Additional passive retarder 330 type | Additional passive retarder 330 retardance |
|---|---|---|---|---|---|---|---|
| | | | | | {narrow range} | | {narrow range} |
| | | | | | (wide range) | | (wide range) |
| 300B | 417BB | Homogeneous | 2 | 180 | 1250nm | | |
| | 417BA | Homeotropic | 88 | 0 | {850nm~1800nm} | | |
| | | | | | (700nm~2500nm) | | |
| | 330B | | | | | Negative C-plate | -1000nm |
| | | | | | | | {-700nm ~ -1700nm} |
| | | | | | | | (-400nm ~ -2100nm) |
| 300A | 417AB | Homogeneous | 2 | 180 | 1480nm | | |
| | 417AA | Homogeneous | 2 | 0 | {850nm~1800nm} | | |
| | | | | | (700nm~2500nm) | | |
| | 330AB | | | | | Positive A-plate @ 45° | +1050nm |
| | | | | | | | {+750nm to +1300nm} |
| | | | | | | | (+600nm to +1600nm) |
| | 330AA | | | | | Positive A-plate @ 135° | +1050nm |
| | | | | | | | {+750nm to +1300nm} |
| | | | | | | | (+600nm to +1600nm) |

**TABLE 3D**

| Item | Layer | Alignment type | Pretilt | In-plane alignment direction | LC layer 314 retardance {narrow range} (wide range) | Additional passive retarder 330 type | Additional passive retarder 330 retardance {narrow range} (wide range) |
|---|---|---|---|---|---|---|---|
| 300B | 417BB | Homogeneous | 2 | 180 | 1250nm {850nm~1800nm} (700nm~2500nm) | | |
| | 417BA | Homeotropic | 88 | 0 | | | |
| | 330B | | | | | Negative C-plate | -1000nm {-700nm ~ -1700nm} (-400nm ~ -2100nm) |
| 300A | 417AB | Homeotropic | 88 | 0 | 1500nm {1000nm~1800nm} (700nm~2500nm) | | |
| | 417AA | Homeotropic | 88 | 180 | | | |
| | 330A | | | | | Negative C-plate | -1400nm {-900nm ~ -1800nm} (-700nm ~ -2500nm) |

For the illustrative embodiments of TABLES 3A-D, said one retarder (with a homeotropic alignment layer and a homogeneous alignment layer)has a liquid crystal retarder 314 that has a retardance for light of a wavelength of 550nm having a first retardance value in a range from 700nm to 2500nm, preferably in a range from 850nm to 1800nm.

In respect of the other of the at least one first polar control retarder and the at least one second polar control retarder, wherein both of the surface alignment layers are arranged to provide homogenous alignment in the adjacent liquid crystal material which has a retardance for light of a wavelength of 550nm in a range from 700nm to 2500nm, preferably in a range from 850nm to 1800nm, and said other of the at least one first polar control retarder and the at least one second polar control retarder further comprises a pair of passive uniaxial retarders having optical axes in the plane of the retarders that are crossed and each having a retardance for light of a wavelength of 550nm in a range from 600nm to 1600nm, preferably in a range from 750nm to 1300nm.

In respect of the other of the at least one first polar control retarder and the at least one second polar control retarder, wherein both of the surface alignment layers are arranged to provide homeotropic alignment in the adjacent liquid crystal material which has a retardance for light of a wavelength of 550nm in a range from 700nm to 2500nm, preferably in a range from 1000nm to 1800nm, and said other of the at least one first polar control retarder and the at least one second polar control retarder further comprises a passive uniaxial retarder having its optical axis perpendicular to the plane of the retarder and having a retardance for light of a wavelength of 550nm in a range from - 700nm to -2500nm, preferably in a range from -900nm to -1800nm.

**TABLE 4**

| TABLE | 300A alignment layers & passive retarder(s) | 300B alignment layers & passive retarder(s) | 301A retardance /nm | 330A retardance /nm | 301B retardance /nm | 330B retardance /nm | Parallel cell half width angle 140 for S=1 @ 2lux/nit / deg |
|---|---|---|---|---|---|---|---|
| 3A | Homogeneous Homeotropic Negative C | Homogeneous Homogeneous Crossed A | 1250 | -1000 | 1480 | 1050 | 24.9 |
| 3B | Homogeneous Homeotropic Negative C | Homeotropic Homeotropic Negative C | 1250 | -1000 | 1500 | -1400 | 26.4 |
| 3C | Homogeneous Homogeneous Crossed A | Homogeneous Homeotropic Negative C | 1480 | 1050 | 1250 | -1000 | 26.8 |
| 3D | Homeotropic Homeotropic Negative C | Homogeneous Homeotropic Negative C | 1500 | -1400 | 1250 | -1000 | 27.7 |

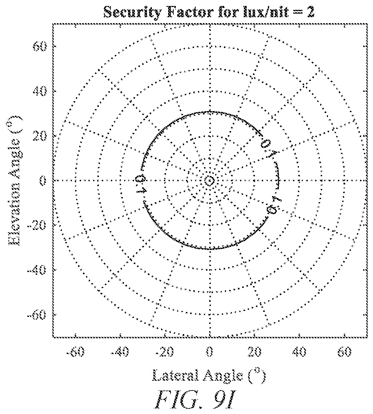

**FIGURE 9I** is a graph illustrating a simulated polar profile of the security level, S of the arrangement of FIGURE 9A for an ambient illuminance measured in lux that is twice the head-on display luminance measured in nits and operated in public mode. In comparison to the arrangement using the wide angle emission of FIGURE 8B, the collimated backlight with luminance profile of FIGURE 9A achieves improved privacy viewing angles, but has narrower polar range over which other observers can see a high contrast image (S < 0.1) in privacy mode. Such a display is well suited to display applications that are primarily for single viewers with occasional use by multiple users.

It may be desirable to provide a switchable privacy display with no reflective polariser 302. The illustrative embodiment of TABLE 3A will now be discussed with reference to FIGURES 10AH. Further The arrangements of TABLES 3B-D may be provided in such embodiments.

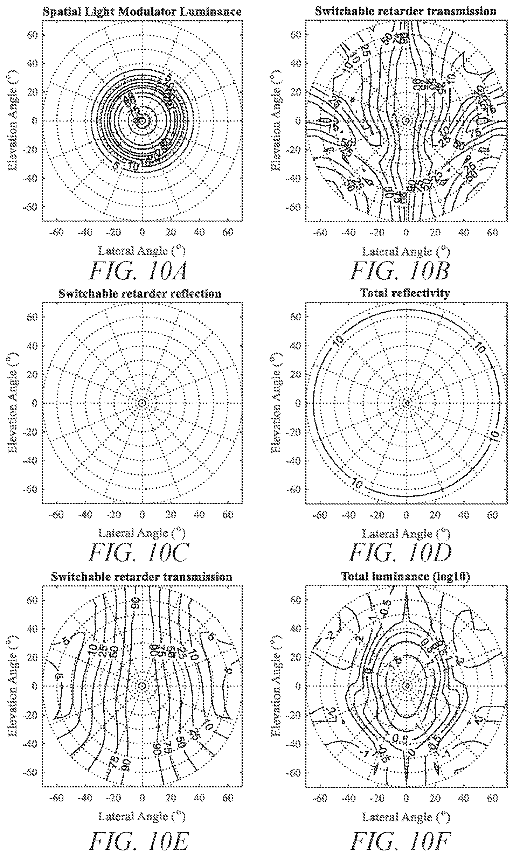

**FIGURE 10A** is a graph illustrating a simulated polar profile of luminance output of a transmissive spatial light modulator that is illuminated by a collimated backlight; The display may comprise the arrangement of FIGURES 5A-B. Alternatively the arrangement of FIGURES 1A-B provided with no reflective polariser 302 and with the spatial light modulator of FIGURE 3. Alternatively the arrangement of FIGURES 4A-B may be provided with no reflective polariser 302.

**FIGURE 10B** is a graph illustrating a simulated polar profile of transmission of the second polar control retarder; **FIGURE 10C** is a graph illustrating a simulated polar profile of reflectivity of the second polar control retarder for no reflective polariser; **FIGURE 10D** is a graph illustrating a simulated polar profile of the total reflectivity comprising the reflectivity of FIGURE 9C and the Fresnel reflectivity from the front surface of the display device for no reflective polariser.

**FIGURE 10E** is a graph illustrating a simulated polar profile of transmission of the first polar control retarder. The pretilt directions of the first polar control retarder 300A are parallel or antiparallel to the pretilt directions of the second polar control retarder 300B.

**FIGURE 10F** is a graph illustrating a simulated polar profile of the logarithm of total output luminance of the spatial light modulator and first and second polar control retarders for the polar profiles of FIGURES 10A-E.

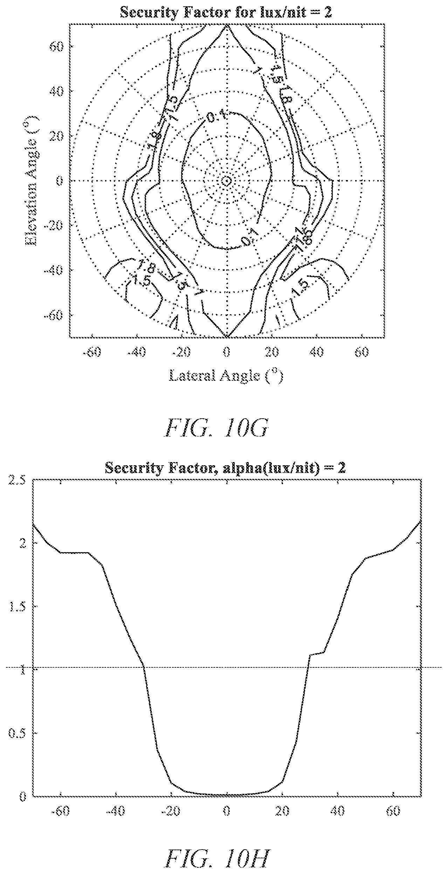

**FIGURE 10G** is a graph illustrating a simulated polar profile of the security level, S of the arrangement with no reflective polariser for an ambient illuminance measured in lux that is twice the head-on display luminance measured in nits; and **FIGURE 10H** is a graph illustrating a simulated lateral profile for zero degrees elevation of the visual security factor of the arrangement for an ambient illuminance measured in lux that is twice the head-on display luminance measured in nits.

The relative performance of switch-on angle 140 is illustrated in TABLE 5. The order of the first and second polar control retarders 300A, 300B does not change the output polar profiles.

**TABLE 5**

| TABLE | First alignment layers & passive retarder(s) | Second alignment layers & passive retarder(s) | First LC retardance /nm | First passive retarder(s) retardance/nm | Second LC retardance /nm | Second passive retarder(s) retardance/nm | Parallel cell half width angle 140 for S=1 @ 2lux/nit / deg |
|---|---|---|---|---|---|---|---|
| 3A, 3C | Homogeneous Homeotropic Negative C | Homogeneous Homogeneous Crossed A | 1250 | -1000 | 1480 | 1050 | 29.5 |
| 3B, 3D | | Homeotropic Homeotropic Negative C | | | 1500 | -1400 | 30.7 |

Advantageously a display may be provided with lower reflectivity in comparison to arrangements with reflective polariser 302. Such arrangements may be desirable in certain operating environments such as automotive cabins in bright sunlight.

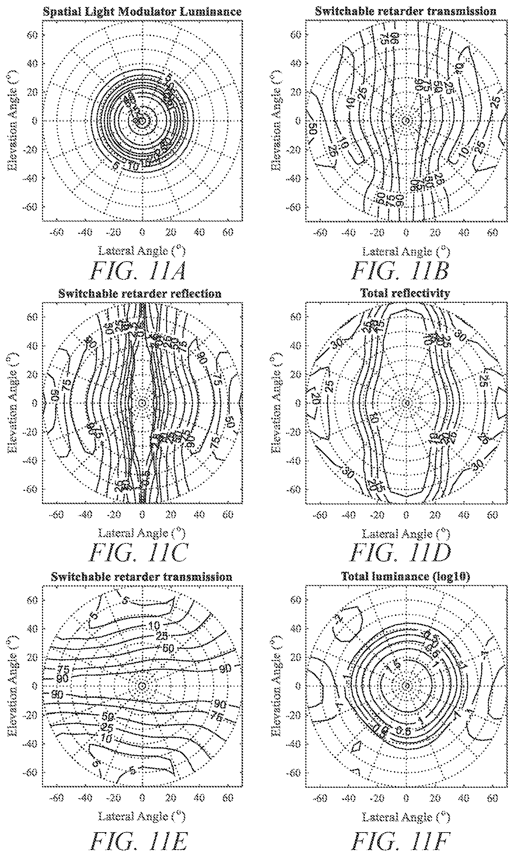

It may be desirable to provide privacy displays that achieve high security level for off-axis viewing in both landscape and portrait modes of operation. The illustrative embodiment of TABLE 6A will now be discussed with reference to FIGURES 11A-G.

**TABLE 6A**

| Item | Layer | Alignment type | Pretilt | In-plane alignment direction | LC layer 314 retardance {narrow range} (wide range) | Additional passive retarder 330 type | Additional passive retarder 330 retardance {narrow range} (wide range) |
|---|---|---|---|---|---|---|---|
| 300B | 417BB | Homogeneous | 2 | 0 | 700nm {550nm~800nm} (450nm~900nm) | | |
| | 417BA | Homogeneous | 2 | 180 | | | |
| | 330BA | | | | | Positive A-plate @ 45° | +570nm {+400 ~ 625nm} (+250nm ~ +800nm) |
| | 330BB | | | | | Positive A-plate @ 135° | +570nm {+400 ~ 625nm} (+250nm ~ +800nm) |
| 300A | 417AB | Homogeneous | 2 | 90 | 1250nm {850nm~1800nm} (700nm~2500nm) | | |
| | 417AA | Homeotropic | 88 | 270 | | | |
| | 330A | | | | | Negative C-plate | -1000nm {-700nm ~ -1700nm} (-400nm ~ -2100nm) |

In respect of the other (with alignment layers that are of the same type) of the at least one first polar control retarder and the at least one second polar control retarder, both of the surface alignment layers are arranged to provide homogenous alignment in the adjacent liquid crystal material which has a retardance for light of a wavelength of 550nm in a range from 450nm to 900nm, preferably in a range from 550nm to 800nm, and said other of the at least one first polar control retarder and the at least one second polar control retarder further comprises a pair of passive uniaxial retarders having optical axes in the plane of the retarders that are crossed and each having a retardance for light of a wavelength of 550nm in a range from 250nm to 800nm, preferably in a range from 400nm to 625nm.

**FIGURE 11A** is a graph illustrating a simulated polar profile of luminance output of a transmissive spatial light modulator that is illuminated by a collimated backlight; **FIGURE 11B** is a graph illustrating a simulated polar profile of transmission of the second polar control retarder; **FIGURE 11C** is a graph illustrating a simulated polar profile of reflectivity of the second polar control retarder; and **FIGURE 11D** is a graph illustrating a simulated polar profile of the total reflectivity comprising the reflectivity of FIGURE 11C and the Fresnel reflectivity from the front surface of the display device.

Said surface alignment layers of said other (with alignment layers that are of the same type) of the at least one first polar control retarder and the at least one second polar control retarder have pretilts having pretilt directions with components in the plane of the layer of liquid crystal material in a second pair of anti-parallel directions.

**FIGURE 11E** is a graph illustrating a simulated polar profile of transmission of the first polar control retarder wherein the pretilt directions of the first polar control retarder are orthogonal to the pretilt directions of the second polar control retarder. The pretilt directions of the first polar control retarder 300A are orthogonal to the pretilt directions of the second polar control retarder 300B. Said surface alignment layers of said one (with a homeotropic alignment layer and a homogeneous alignment layer) of the at least one first polar control retarder and the at least one second polar control retarder have pretilts having pretilt directions with components in the plane of the layer of liquid crystal material in a first pair of anti-parallel directions.

In the illustrative embodiments of FIGURES 11A-G and FIGURES 12A-J, the first pair of anti-parallel directions are crossed with the second pair of anti-parallel directions. The first pair of anti-parallel directions are at 90 degrees to the second pair of anti-parallel directions, as viewed normal the planes of the layers of liquid crystal material of the at least one first polar control retarder and the at least one second polar control retarder.

The switchable liquid crystal retarder of said one (with a homeotropic alignment layer and a homogeneous alignment layer) of the at least one first polar control retarder and the at least one second polar control retarder has a retardance for light of a wavelength of 550nm having a first retardance value and the switchable liquid crystal retarder of said other (with alignment layers that are of the same type) the at least one first polar control retarder and the at least one second polar control retarder has a retardance for light of a wavelength of 550nm has a second retardance value, the first retardance value being greater than the second retardance value.

The magnitude of the difference between half the first retardance value and the second retardance value is at most 400nm and preferably at most 200nm.

**FIGURE 11F** is a graph illustrating a simulated polar profile of the logarithm of total output luminance of the spatial light modulator and first and second polar control retarders.

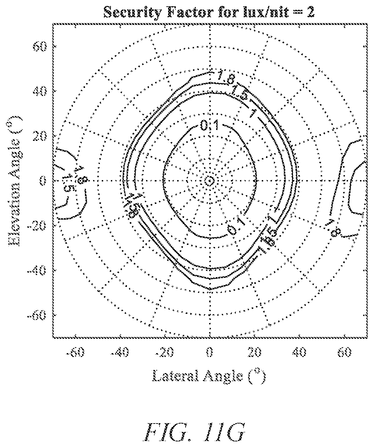

**FIGURE 11G** is a graph illustrating a simulated polar profile of the security level, S of the arrangement with no reflective polariser for an ambient illuminance measured in lux that is twice the head-on display luminance measured in nits for the polar profiles of FIGURES 11A-F.

Advantageously a display may be provided with high visual security for landscape and portrait operation of a display in privacy mode, with high security factor for off-axis viewing locations. Such a display may be switched to a public mode of operation with security level similar to that illustrated in FIGURE 9J.

Other illustrate embodiments are illustrated in TABLES 6B-C. The embodiments may be provided for the arrangements of FIGURES 1A-B or alternatively for the arrangements of FIGURES 4A-B, wherein the arrangements comprise reflective polariser 302. In other embodiments, reflective polariser 302 may be omitted.

In comparison to the arrangement of TABLE 6A, embodiments comprising a C-plate in comparison to the crossed A-plates may advantageously be thinner and cheaper. Embodiments comprising two homeotropic alignment layers in comparison to the two homogeneous alignment layers may advantageously achieve public mode operation with zero volts, and may have lower power consumption. Embodiments wherein the first retarder 300A comprises a homeotropic alignment layer and a homogeneous alignment layer advantageously achieve lower privacy switch-on angle 140 while maintaining high security level at higher polar angles.

**TABLE 6B**

| Item | Layer | Alignment type | Pretilt | In-plane alignment direction | LC layer 314 retardance {narrow range} (wide range) | Additional passive retarder 330 type | Additional passive retarder 330 retardance {narrow range} (wide range) |
|---|---|---|---|---|---|---|---|
| 300B | 417BB | Homogeneous | 2 | 0 | 750nm {600nm~850nm} (500nm~900nm) | | |
| | 417BA | Homogeneous | 2 | 180 | | | |
| | 330B | | | | | Negative C-plate | -440nm {-350nm ~ -600nm} (-300nm ~ -700nm) |
| 300A | 417AB | Homogeneous | 2 | 90 | 1250nm {850nm~1800nm} (700nm~2500nm) | | |
| | 417AA | Homeotropic | 88 | 270 | | | |
| | 330A | | | | | Negative C-plate | -1000nm {-700nm ~ -1700nm} (-400nm ~ -2100nm) |

In respect of the other (with alignment layers that are of the same type)of the at least one first polar control retarder and the at least one second polar control retarder, both of the surface alignment layers are arranged to provide homogenous alignment in the adjacent liquid crystal material which has a retardance for light of a wavelength of 550nm in a range from 500nm to 900nm, preferably in a range from 600nm to 850nm, and said other of the at least one first polar control retarder and the at least one second polar control retarder further comprises a passive uniaxial retarder having its optical axis perpendicular to the plane of the retarder and having a retardance for light of a wavelength of 550nm in a range from -300nm to -700nm, preferably in a range from -350nm to -600nm.

**TABLE 6C**

| Item | Layer | Alignment type | Pretilt | In-plane alignment direction | LC layer 314 retardance {narrow range} (wide range) | Additional passive retarder 330 type | Additional passive retarder 330 retardance {narrow range} (wide range) |
|---|---|---|---|---|---|---|---|
| 300B | 417BB | Homogeneous | 2 | 180 | 1250nm {850nm~1800nm} (700nm~2500nm) | | |
| | 417BA | Homeotropic | 88 | 0 | | | |
| | 330B | | | | | Negative C-plate | -1000nm {-700nm ~ -1700nm} (-400nm ~ -2100nm) |
| 300A | 417AB | Homeotropic | 88 | 90 | 750nm {600nm~850nm} (500nm~900nm) | | |
| | 417AA | Homeotropic | 88 | 270 | | | |
| | 330A | | | | | Negative C-plate | -660nm {-400nm ~ -800nm} (-300nm ~ -900nm) |

In respect of the other (with alignment layers that are of the same type) of the at least one first polar control retarder and the at least one second polar control retarder, both of the surface alignment layers are arranged to provide homeotropic alignment in the adjacent liquid crystal material which has a retardance for light of a wavelength of 550nm in a range from 500nm to 900nm, preferably in a range from 600nm to 850nm, and said other of the at least one first polar control retarder and the at least one second polar control retarder further comprises a passive uniaxial retarder having its optical axis perpendicular to the plane of the retarder and having a retardance for light of a wavelength of 550nm in a range from -300nm to -800nm, preferably in a range from -400nm to -800nm.

TABLE 7 compares the retardances of the embodiments of FIGURES 6A-C.

**TABLE 7**

| TABLE | First alignment layers & passive retarder(s) | Second alignment layers & passive retarder(s) | First LC retardance /nm | First passive retarder(s) retardance/nm | Second LC retardance /nm | Second passive retarder(s) retardance/nm |
|---|---|---|---|---|---|---|
| 6A | Homogeneous Homeotropic Negative C | Homogeneous Homogeneous Crossed A | 1250 | -1000 | 700 | 570 |
| 6B | | Homogeneous Homogeneous Negative C | | | 750 | -440 |
| 6C | | Homeotropic Homeotropic Negative C | | | 1500 | -1400 |

It may be desirable to provide privacy displays that achieve high security level for off-axis viewing in both landscape and portrait modes of operation for an emissive display. The illustrative embodiment of TABLE 9A will now be discussed with reference to FIGURES 12A-G for an illustrative pixel plane 214 and parallax barrier 700 arrangement of FIGURE 2.

**FIGURE 12A** is a graph illustrating a simulated polar profile of luminance output of an emissive spatial light modulator.

The spatial light modulator 48 comprises an emissive spatial light modulator arranged to output light, the display polariser is an output display polariser 218 arranged on the output side of the emissive spatial light modulator 48, as illustrated in FIGURE 1A. The emissive spatial light modulator comprises an array of pixels 220, 222, 224 arranged in a pixel layer 214, and the display device further comprises a parallax barrier 700 forming an array of apertures 702, wherein the parallax barrier 700 is separated from the pixel layer 214 by a parallax distance d along an axis along a normal to the plane of the pixel layer 214, each pixel 220, 222, 224 being aligned with an aperture 702.

**FIGURE 12B** is a graph illustrating a simulated polar profile of transmission of the barrier structure of FIGURE 2 of light from the pixels of the emissive spatial light modulator. An illustrative example is provided in TABLE 8 where the emissive spatial light modulator 48 and the aligned parallax barrier 700 has an output luminance profile having a full width half maximum that is at most 40 degrees.

**TABLE 8**

| **Parameter, x-axis direction** | **Illustrative value** |
|---|---|
| Pixel 224 pitch | 20 microns |
| Pixel 224 emitting width | 10 microns |
| Barrier aperture 702 width | 10 microns |
| Barrier separation, *d* | 20 microns |

**TABLE 9A**

| Item | Layer | Alignment type | Pretilt | In-plane alignment direction | LC layer 314 retardance {narrow range} (wide range) | Additional passive retarder 330 type | Additional passive retarder 330 retardance {narrow range} (wide range) |
|---|---|---|---|---|---|---|---|
| 300B | 417BB | Homogeneous | 2 | 0 | 480nm {400nm~600nm} (300nm~800nm) | | |
| | 417BA | Homogeneous | 2 | 180 | | | |
| | 330BA | | | | | Positive A-plate @ 45° | +570nm {+250 ~ 625nm} (+150nm ~ +800nm) |
| | 330BB | | | | | Positive A-plate @ 135° | +570nm {+250 ~ 625nm} (+150nm ~ +800nm) |
| 300A | 417AB | Homogeneous | 2 | 180 | 1250nm {850nm~1800nm} (700nm~2500nm) | | |
| | 417AA | Homeotropic | 88 | 0 | | | |
| | 330A | | | | | Negative C-plate | -1000nm {-700nm ~ -1700nm} (-400nm ~ -2100nm) |

**FIGURE 12C** is a graph illustrating a simulated polar profile of transmission of the second polar control retarder arranged between the first and second additional polarisers wherein the electric vector transmission directions of the polarisers are parallel; **FIGURE 12D** is a graph illustrating a simulated polar profile of reflectivity of the second polar control retarder arranged between a reflective polariser and the second additional polariser wherein the electric vector transmission directions of the polarisers are parallel; and **FIGURE 12E** is a graph illustrating a simulated polar profile of the total reflectivity comprising the reflectivity and the Fresnel reflectivity from the front surface of the display device.

**FIGURE 12F** is a graph illustrating a simulated polar profile of transmission of the first polar control retarder arranged between the display polariser and the first additional polariser wherein the electric vector transmission directions of the polarisers are parallel and the pretilt directions of the first polar control retarder 300A are orthogonal to the pretilt directions of the second polar control retarder 300B.

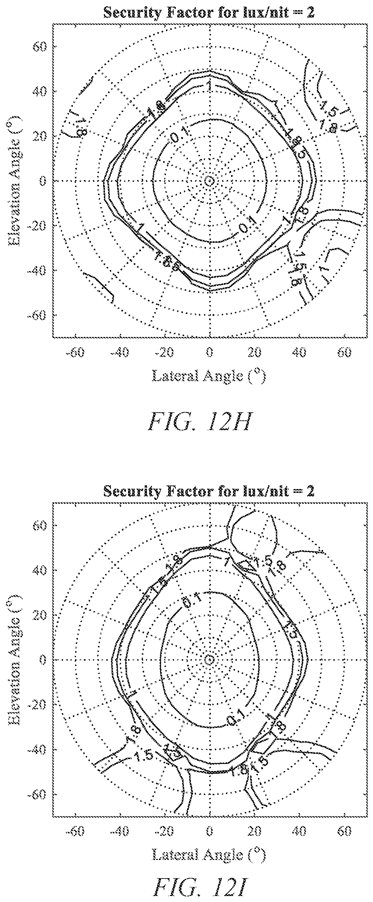

**FIGURE 12G** is a graph illustrating a simulated polar profile of the logarithm of total output luminance of the spatial light modulator and first and second polar control retarders as illustrated in FIGURES 12A-F; and **FIGURE 12H** is a graph illustrating a simulated polar profile of the security level, S of the arrangement for the polar profiles of FIGURES 12A-G for an ambient illuminance measured in lux that is twice the head-on display luminance measured in nits.

Advantageously a display that provides desirable security factor, S in landscape and portrait operation may be provided. In comparison to the embodiment of TABLE 6A, the desirable retardance of the first polar control retarder is reduced. Such a polar control retarder provides high angle luminance reduction, while the parallax barrier 700 provides lower angle luminance reduction. Advantageously increased uniformity of security level is achieved in an emissive display.

**FIGURE 12I** is a graph illustrating a simulated polar profile of the security level, S wherein the first polar control retarder is the second polar control retarder of FIGURE 11H and the second polar control retarder is the first polar control retarder of FIGURE 11H, as illustrated in TABLE 9B. In comparison to the arrangement of TABLE 9A, advantageously privacy switch-on angle is reduced in the lateral direction.

**TABLE 9B**

| Item | Layer | Alignment type | Pretilt | In-plane alignment direction | LC layer 314 retardance {narrow range} (wide range) | Additional passive retarder 330 type | Additional passive retarder 330 retardance {narrow range} (wide range) |
|---|---|---|---|---|---|---|---|
| 300B | 417BB | Homogeneous | 2 | 180 | 1250nm {850nm~1800nm} (700nm~2500nm) | | |
| | 417BA | Homeotropic | 88 | 0 | | | |
| | 330BA | | | | | Negative C-plate | -1000nm {-700nm ~ -1700nm} (-400nm ~ -2100nm) |
| 300A | 417AB | Homogeneous | 2 | 0 | 480nm {400nm~600nm} (300nm~800nm) | | |
| | 417AA | Homogeneous | 2 | 180 | | | |
| | 330AA | | | | | Positive A-plate @ 45° | +570nm {+250 ~ 625nm} (+150nm ~ +800nm) |
| | 330AB | | | | | Positive A-plate @ 135° | +570nm {+250 ~ 625nm} (+150nm ~ +800nm) |

In other embodiments the first polar control retarder may comprise homeotropic alignment layers, to advantageously achieve reduced power consumption. In other embodiments the first polar control retarder may comprise passive C-plate retarders to advantageously achieve reduced cost and complexity as described elsewhere herein.

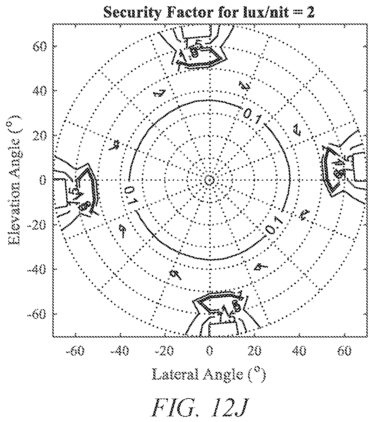

**FIGURE 12J** is a graph illustrating a simulated polar profile of the security level, S of the arrangement for an ambient illuminance measured in lux that is twice the head-on display luminance measured in nits and operated in public mode for the arrangements of FIGURES 12A-H. Advantageously image visibility (S < 0.1) is maintained to so that the display can be easily seen with high contrast from polar viewing angles that are greater than 30 degrees in both landscape and portrait orientations.

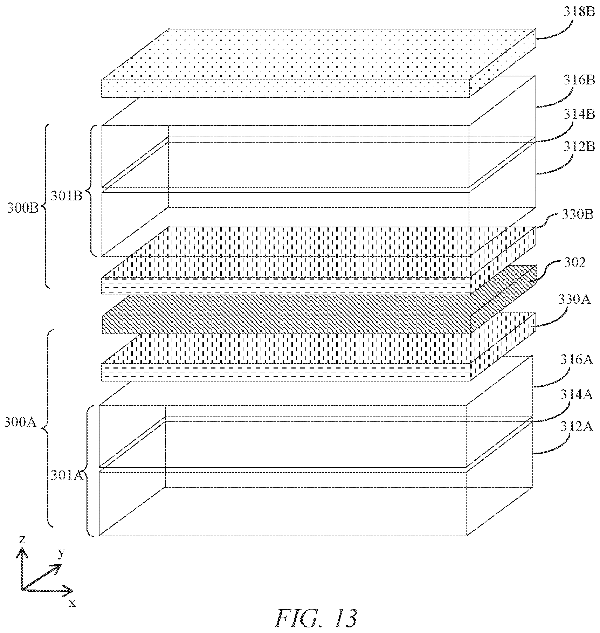

**FIGURE** 13 is a schematic diagram illustrating in side perspective view a switchable privacy display component 102 for use with a spatial light modulator 48 comprising a first polar control retarder 300A and a first additional polariser 318A, a reflective polariser 302; and a second polar control retarder 300B arranged between the first additional polariser 318A and a second additional polariser 318B. Advantageously a spatial light modulator 48 may be reconfigured in the factory or in the field for use as a switchable privacy display. Features of the embodiment of FIGURE 13 not discussed in further detail may be assumed to correspond to the features with equivalent reference numerals as discussed above, including any potential variations in the features.

Various alternatives for optical stackings of the present embodiments will now be described

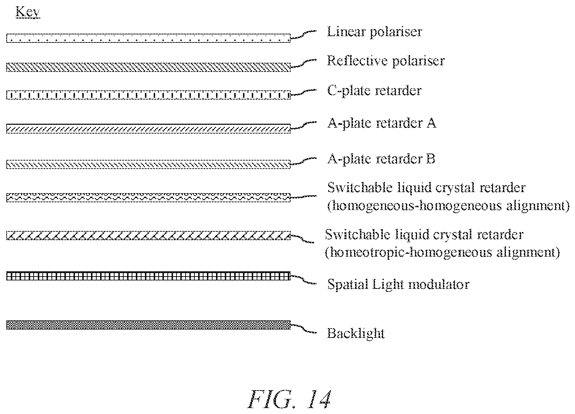

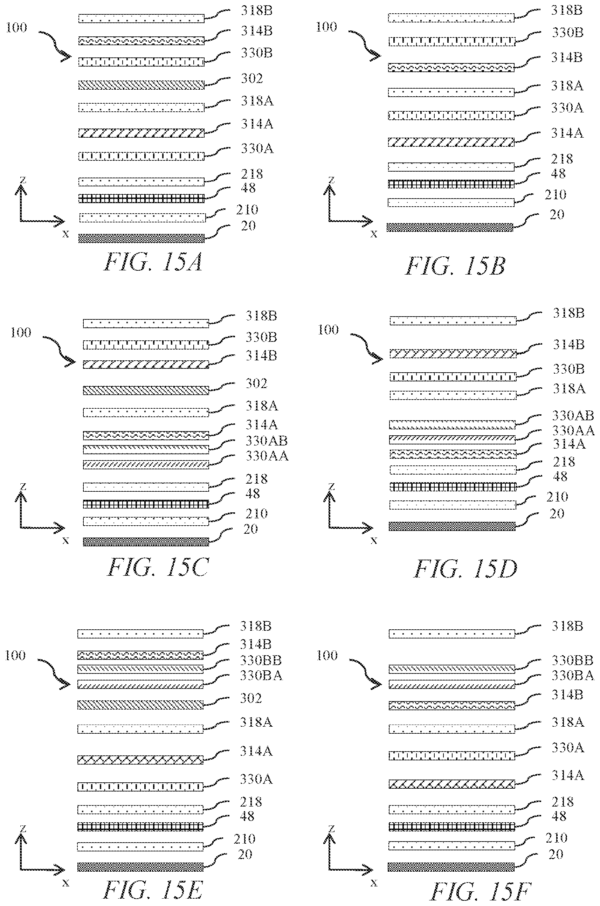

**FIGURE 14** is a key for the alternative stacking arrangements of FIGURES 15A-F, FIGURES 16A-F, FIGURES 17A-C and FIGURES 18A-F.

**FIGURES 15A-F** are schematic diagrams illustrating in side view alternatives for optical component stackings for a switchable privacy display 100 wherein the first and second polar control retarders 300A, 300B are arranged to receive light from a transmissive spatial light modulator 48 and backlight 20. Features of the embodiment of FIGURES 15A-F not discussed in further detail may be assumed to correspond to the features with equivalent reference numerals as discussed above, including any potential variations in the features.

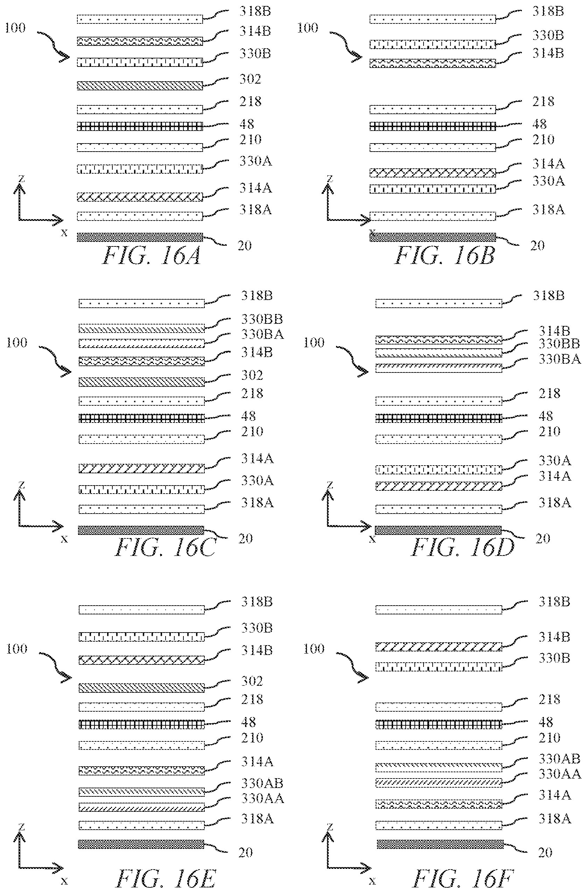

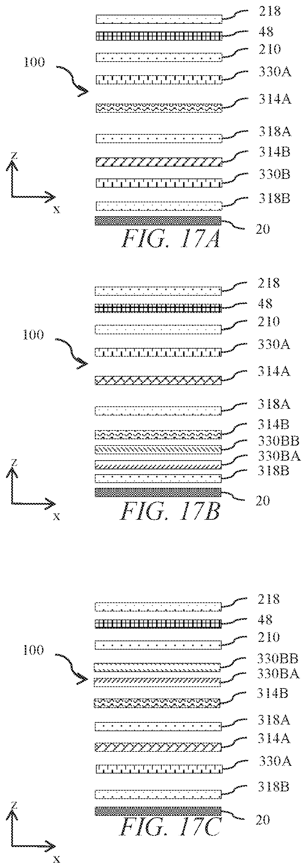

**FIGURES 16A-F** are schematic diagrams illustrating in side view alternatives for optical component stackings for a switchable privacy display 100 wherein one of the first and second polar control retarders 300A, 300B is arranged to receive light from the transmissive spatial light modulator 48 and the spatial light modulator 48 is arranged to receive light from the other of the first and second polar control retarders 300A, 300B and backlight 20; and **FIGURES 17A-C** are schematic diagrams illustrating in side view alternatives for optical component stackings for a switchable privacy display wherein the spatial light modulator 48 is arranged to receive light from the first and second polar control retarders 300A, 300B and backlight 20. Features of the embodiment of FIGURES 16A-F and FIGURES 17A-C not discussed in further detail may be assumed to correspond to the features with equivalent reference numerals as discussed above, including any potential variations in the features.

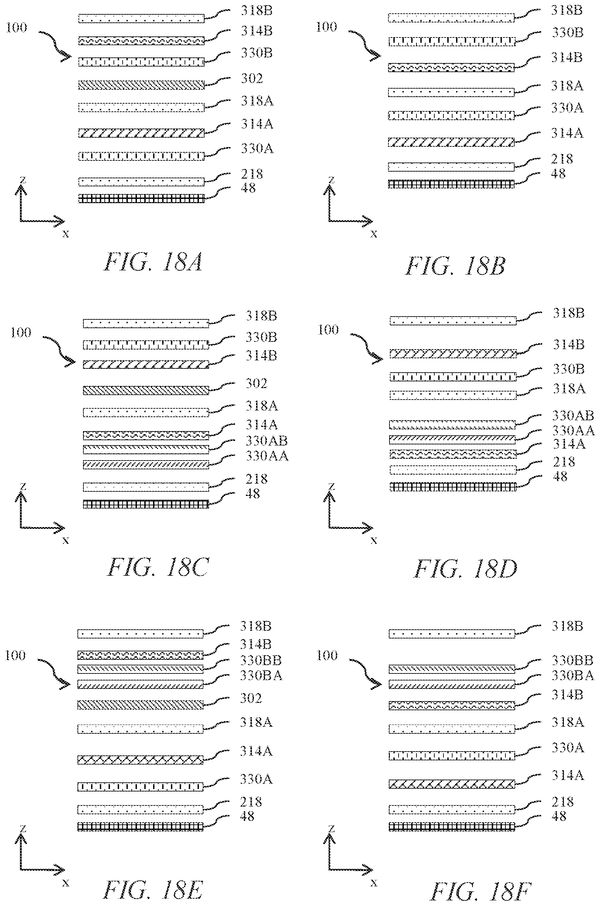

**FIGURES 18A-F** are schematic diagrams illustrating in side view alternatives for optical component stackings for a switchable privacy display 100 wherein the first and second polar control retarders 300A, 300B are arranged to receive light from an emissive spatial light modulator 48. Features of the embodiment of FIGURES 18A-F not discussed in further detail may be assumed to correspond to the features with equivalent reference numerals as discussed above, including any potential variations in the features.

In the alternatives of FIGURES 15A-F, FIGURES 16A-F, FIGURES 17A-C and FIGURES 18A-F, various alternatives are illustrated and can more generally be described as follows.

For each polar control retarder 300A, 300B that comprises a liquid crystal retarder 314A, 314B with two homogeneous alignment layers 417A, 417B then the respective passive retarder 330A, 330B or pair of crossed passive retarders 330AA, 330AB or 330BA, 330BB may be arranged to either receive light from the respective liquid crystal retarder 314A, 314B; or the liquid crystal retarder 314A, 314B may be arranged to receive light from the respective passive retarder 330A, 330B or pair of crossed passive retarders 330AA, 330AB or 330BA, 330BB.

For each polar control retarder 300A, 300B that comprises a liquid crystal retarder 314A, 314B with one homogeneous alignment layer and one homeotropic alignment layer 417A, 417B then preferably the homeotropic alignment layer is arranged between the respective layer of liquid crystal material 421A, 421B and the respective passive retarder 330A, 330B. Advantageously the size of the polar region for reduced luminance in privacy mode is increased.

For the alternatives of FIGURES 15A, 15C, 15E, FIGURES 16A, 16C, 16E, and FIGURES 18A, 18C, 18E, one of polar control retarders 300A, 300B may be arranged between reflective polariser 302 and further additional polariser 318B. Advantageously the reflectivity of the display 100 in privacy mode of operation may be increased, and security factor increased.

The alternatives of FIGURES 15A-F, FIGURES 16A-F and FIGURES 17A-C with the transmissive spatial light modulator 48 and backlight 20 omitted or the alternative of FIGURES 18A-F with the emissive spatial light modulator 48 omitted may provide alternative components such as that illustrated in FIGURE 13.

As may be used herein, the terms "substantially" and "approximately" provide an industry-accepted tolerance for its corresponding term and/or relativity between items. Such an industry-accepted tolerance ranges from zero percent to ten percent and corresponds to, but is not limited to, component values, angles, et cetera. Such relativity between items ranges between approximately zero percent to ten percent.

## Claims

1. A display device (100) comprising:
a spatial light modulator (48);
a display polariser (218) arranged on a side of the spatial light modulator (48), the display polariser (218) being a linear polariser;
a first additional polariser (318A) arranged on the same side of the spatial light modulator (48) as the display polariser (218), the first additional polariser (318A) being a linear polariser;
at least one first polar control retarder (300A) arranged between the first additional polariser (318A) and the display polariser (218),
a second additional polariser (318B), the second additional polariser (318B) being a linear polariser; and
at least one second polar control retarder (300B), wherein
either:
the second additional polariser (318B) is arranged on the same side of the spatial light modulator (48) as the first additional polariser (318A) outside the first additional polariser (318A), and the at least one second polar control retarder (300B) is arranged between the first additional polariser (318A) and the second additional polariser (318B); or
the display device (100) further comprises a backlight (20) arranged to output light, the spatial light modulator (48) comprises a transmissive spatial light modulator (48) arranged to receive output light from the backlight (20), said display polariser (218) is an input display polariser arranged on the input side of the spatial light modulator (48), and the display device further comprises an output display polariser arranged on the output side of the spatial light modulator (48), the second additional polariser (318B) is arranged on the output side of the spatial light modulator (48), and the at least one second polar control retarder (300B) is arranged between the second additional polariser (318B) and the output display polariser,
wherein:
each of the at least one first polar control retarder (300A) and the at least one second polar control retarder (300B) comprises a respective switchable liquid crystal retarder comprising a layer of liquid crystal material and two surface alignment layers disposed adjacent to the layer of liquid crystal material and on opposite sides thereof,
in respect of one of the at least one first polar control retarder (300A) and the at least one second polar control retarder (300B), one of the surface alignment layers is arranged to provide homogenous alignment in the adjacent liquid crystal material and the other of the surface alignment layers is arranged to provide homeotropic alignment in the adjacent liquid crystal material, and
in respect of the other of the at least one first polar control retarder (300A) and the at least one second polar control retarder (300B), both of the surface alignment layers are arranged to provide homogenous alignment in the adjacent liquid crystal material or both of the surface alignment layers are arranged to provide homeotropic alignment in the adjacent liquid crystal material.

2. A display device (100) according to claim 1, wherein the switchable liquid crystal retarder of said one of the at least one first polar control retarder (300A) and the at least one second polar control retarder (300B) has a retardance for light of a wavelength of 550nm having a first retardance value in a range from 700nm to 2500nm, preferably in a range from 850nm to 1800nm.

3. A display device (100) according to claim 1 or 2, wherein said one of the at least one first polar control retarder (300A) and the at least one second polar control retarder (300B) further comprises at least one passive compensation retarder.

4. A display device (100) according to claim 3, wherein the at least one passive compensation retarder of said one of the at least one first polar control retarder (300A) and the at least one second polar control retarder (300B) is arranged on the same side of the switchable liquid crystal retarder as the surface alignment layers that is arranged to provide homeotropic alignment in the adjacent liquid crystal material.

5. A display device (100) according to claim 3 or 4, wherein the at least one passive compensation retarder of said one of the at least one first polar control retarder (300A) and the at least one second polar control retarder (300B) comprises a passive uniaxial retarder having its optical axis perpendicular to the plane of the retarder, wherein optionally the passive uniaxial retarder has a retardance for light of a wavelength of 550nm in a range from -400nm to -2100nm, preferably in a range from -700nm to -1700nm.

6. A display device (100) according to any one of claims 1 to 5, wherein
the display device (100) further comprises a reflective polariser (302), the reflective polariser (302) being a linear polariser, and either:
in the case that the second additional polariser (318B) is arranged on the same side of the spatial light modulator (48) as the first additional polariser (318A) outside the first additional polariser (318A), and the at least one second polar control retarder (300B) is arranged between the first additional polariser (318A) and the second additional polariser (318B), said display polariser (218) is an output display polariser arranged on the output side of the spatial light modulator (48), the reflective polariser (302) is arranged between the first additional polariser (318A) and the at least one second polar control retarder (300B); or
in the case that the display device (100) further comprises a backlight (20) arranged to output light, the spatial light modulator (48) comprises a transmissive spatial light modulator (48) arranged to receive output light from the backlight (20), said display polariser (218) is an input display polariser arranged on the input side of the spatial light modulator (48), and the display device further comprises an output display polariser arranged on the output side of the spatial light modulator (48), the second additional polariser (318B) is arranged on the output side of the spatial light modulator (48), and the at least one second polar control retarder (300B) is arranged between the second additional polariser (318B) and the output display polariser, the reflective polariser (302) is arranged between the output display polariser and at least one second polar control retarder (300B).

7. A display device (100) according to claim 6, wherein said one of the at least one first polar control retarder (300A) and the at least one second polar control retarder (300B) is the at least one second polar control retarder (300B) and said other of the at least one first polar control retarder (300A) and the at least one second polar control retarder (300B) is the at least one first polar control retarder (300A).

8. A display device (100) according to any one of the preceding claims, wherein the switchable liquid crystal retarder of said one of the at least one first polar control retarder (300A) and the at least one second polar control retarder (300B) has a retardance for light of a wavelength of 550nm having a first retardance value and the switchable liquid crystal retarder of said other the at least one first polar control retarder (300A) and the at least one second polar control retarder (300B) has a retardance for light of a wavelength of 550nm has a second retardance value, the first retardance value being greater than the second retardance value, wherein optionally the magnitude of the difference between half the first retardance value and the second retardance value is at most 400 nm.

9. A display device (100) according to claim 8, wherein
in respect of said other of the at least one first polar control retarder (300A) and the at least one second polar control retarder (300B), both of the surface alignment layers are arranged to provide homogenous alignment in the adjacent liquid crystal material which has a retardance for light of a wavelength of 550nm in a range from 450nm to 900nm, preferably in a range from 550nm to 800nm, and
said other of the at least one first polar control retarder (300A) and the at least one second polar control retarder (300B) further comprises a pair of passive uniaxial retarders having optical axes in the plane of the retarders that are crossed and each having a retardance for light of a wavelength of 550nm in a range from 250nm to 800nm, preferably in a range from 400nm to 625nm.

10. A display device (100) according to any one of claims 8 or 9, wherein, in the case that the second additional polariser (318B) is arranged on the same side of the spatial light modulator (48) as the first additional polariser (318A) outside the first additional polariser (318A), and the at least one second polar control retarder (300B) is arranged between the first additional polariser (318A) and the second additional polariser (318B), the spatial light modulator (48) comprises an emissive spatial light modulator (48) arranged to output light, the display polariser (218) is an output display polariser arranged on the output side of the emissive spatial light modulator (48), the second additional polariser (318B) is arranged on the output side of the spatial light modulator (48) outside the first additional polariser (318A), and the at least one second polar control retarder (300B) is arranged between the first additional polariser (318A) and the second additional polariser (318B), wherein optionally the emissive spatial light modulator (48) has an output luminance profile having a full width half maximum that is at least 40 degrees, preferably at least 50 degrees.

11. A display device (100) according to any one of claims 8 or 9, wherein, in the case that the second additional polariser (318B) is arranged on the same side of the spatial light modulator (48) as the first additional polariser (318A) outside the first additional polariser (318A), and the at least one second polar control retarder (300B) is arranged between the first additional polariser (318A) and the second additional polariser (318B), the display device (100) further comprises a backlight (20) arranged to output light, and the spatial light modulator (48) comprises a transmissive spatial light modulator arranged to receive output light from the backlight (20), wherein optionally the backlight (20) has an output luminance profile having a full width half maximum that is at least 40 degrees, preferably at least 50 degrees.

12. A display device (100) according to any one of claims 1 to 7, wherein the switchable liquid crystal retarder of said one of the at least one first polar control retarder (300A) and the at least one second polar control retarder (300B) has a retardance for light of a wavelength of 550nm having a first retardance value and the switchable liquid crystal retarder of said other the at least one first polar control retarder (300A) and the at least one second polar control retarder (300B) has a retardance for light of a wavelength of 550nm has a second retardance value, half of the first retardance value being less than the second retardance value.

13. A display device (100) according to claim 12, wherein either:
in respect of the other of the at least one first polar control retarder (300A) and the at least one second polar control retarder (300B), both of the surface alignment layers are arranged to provide homogenous alignment in the adjacent liquid crystal material which has a retardance for light of a wavelength of 550nm in a range from 700nm to 2500nm, preferably in a range from 850nm to 1800nm, and
said other of the at least one first polar control retarder (300A) and the at least one second polar control retarder (300B) further comprises a pair of passive uniaxial retarders having optical axes in the plane of the retarders that are crossed and each having a retardance for light of a wavelength of 550nm in a range from 600nm to 1600nm, preferably in a range from 750nm to 1300nm; or
in respect of the other of the at least one first polar control retarder (300A) and the at least one second polar control retarder (300B), both of the surface alignment layers are arranged to provide homeotropic alignment in the adjacent liquid crystal material which has a retardance for light of a wavelength of 550nm in a range from 700nm to 2500nm, preferably in a range from 1000nm to 1800nm, and
said other of the at least one first polar control retarder (300A) and the at least one second polar control retarder (300B) further comprises a passive uniaxial retarder having its optical axis perpendicular to the plane of the retarder and having a retardance for light of a wavelength of 550nm in a range from -700nm to -2500nm, preferably in a range from -900nm to -1800nm.

14. A display device (100) according to claim 12 or 13, wherein, in the case that the second additional polariser (318B) is arranged on the same side of the spatial light modulator (48) as the first additional polariser (318A) outside the first additional polariser (318A), and the at least one second polar control retarder (300B) is arranged between the first additional polariser (318A) and the second additional polariser (318B), the spatial light modulator (48) comprises an emissive spatial light modulator (48) arranged to output light, the display polariser (218) is an output display polariser arranged on the output side of the emissive spatial light modulator (48), the second additional polariser (318B) is arranged on the output side of the spatial light modulator (48) outside the first additional polariser (318A), and the at least one second polar control retarder (300B) is arranged between the first additional polariser (318A) and the second additional polariser (318B).

## Patentansprüche

1. Anzeigevorrichtung (100), umfassend:
einen räumlichen Lichtmodulator (48);
einen Displaypolarisator (218), der auf einer Seite des räumlichen Lichtmodulators (48) angeordnet ist, wobei der Displaypolarisator (218) ein Linearpolarisator ist;
einen ersten Zusatzpolarisator (318A), der auf derselben Seite des räumlichen Lichtmodulators (48) wie der Displaypolarisator (218) angeordnet ist, wobei der erste Zusatzpolarisator (318A) ein Linearpolarisator ist;
mindestens einen ersten Polarisationsverzögerer (300A), der zwischen dem ersten zusätzlichen Polarisator (318A) und dem Displaypolarisator (218) angeordnet ist,
einen zweiten Zusatzpolarisator (318B), wobei der zweite Zusatzpolarisator (318B) ein Linearpolarisator ist; und
mindestens einen zweiten Polarisationsverzögerer (300B), wobei
entweder
der zweite Zusatzpolarisator (318B) auf derselben Seite des räumlichen Lichtmodulators (48) wie der erste Zusatzpolarisator (318A) außerhalb des ersten Zusatzpolarisators (318A) angeordnet ist und der mindestens eine zweite Polarisationsverzögerer (300B) zwischen dem ersten Zusatzpolarisator (318A) und dem zweiten Zusatzpolarisator (318B) angeordnet ist; oder
die Anzeigevorrichtung (100) ferner eine Hintergrundbeleuchtung (20) umfasst, die dazu angeordnet ist, Licht auszugeben, wobei der räumliche Lichtmodulator (48) einen transmissiven räumlichen Lichtmodulator (48) umfasst, der dazu angeordnet ist, von der Hintergrundbeleuchtung (20) ausgegebenes Licht zu empfangen, wobei der Displaypolarisator (218) ein Eingangs-Displaypolarisator ist, der auf der Eingangsseite des räumlichen Lichtmodulators (48) angeordnet ist, und die Anzeigevorrichtung ferner einen Ausgangs-Displaypolarisator umfasst, der auf der Ausgangsseite des räumlichen Lichtmodulators (48) angeordnet ist, wobei der zweite Zusatzpolarisator (318B) auf der Ausgangsseite des räumlichen Lichtmodulators (48) angeordnet ist und der mindestens eine zweite Polarisationsverzögerer (300B) zwischen dem zweiten Zusatzpolarisator (318B) und dem Ausgangs-Displaypolarisator angeordnet ist,
wobei:
jeder des mindestens einen ersten Polarisationsverzögerers (300A) und des mindestens einen zweiten Polarisationsverzögerers (300B) jeweils einen schaltbaren Flüssigkristallverzögerer umfasst, der eine Schicht aus Flüssigkristallmaterial und zwei Oberflächenausrichtungsschichten umfasst, die angrenzend an die Schicht aus Flüssigkristallmaterial und auf einander gegenüberliegenden Seiten davon angeordnet sind,
wobei bei einem des mindestens einen ersten Polarisationsverzögerers (300A) und dem mindestens einen zweiten Polarisationsverzögerers (300B) eine der Oberflächenausrichtungsschichten dazu angeordnet ist, eine homogene Ausrichtung im angrenzenden Flüssigkristallmaterial bereitzustellen, und die andere der Oberflächenausrichtungsschichten dazu angeordnet ist, eine homöotrope Ausrichtung im angrenzenden Flüssigkristallmaterial bereitzustellen, und
wobei bei einem des mindestens einen ersten Polarisationsverzögerers (300A) und des mindestens einen zweiten Polarisationsverzögerer (300B) beide Oberflächenausrichtungsschichten dazu angeordnet sind, eine homogene Ausrichtung im angrenzenden Flüssigkristallmaterial bereitzustellen, und die andere der Oberflächenausrichtungsschichten dazu angeordnet ist, eine homöotrope Ausrichtung im angrenzenden Flüssigkristallmaterial bereitzustellen.

2. Anzeigevorrichtung (100) nach Anspruch 1, wobei der schaltbare Flüssigkristallverzögerer des einen des mindestens einen ersten Polarisationsverzögerers (300A) oder des einen des mindestens einen zweiten Polarisationsverzögerers (300B) eine Verzögerung für Licht mit einer Wellenlänge von 550 nm aufweist, mit einem ersten Verzögerungswert in einem Bereich von 700 nm bis 2500 nm, vorzugsweise in einem Bereich von 850 nm bis 1800 nm.

3. Anzeigevorrichtung (100) nach Anspruch 1 oder 2, wobei der eine des mindestens einen ersten Polarisationsverzögerers (300A) und des mindestens einen zweiten Polarisationsverzögerer (300B) ferner mindestens einen passiven Kompensationsverzögerer umfasst.

4. Anzeigevorrichtung (100) nach Anspruch 3, wobei der mindestens eine passive Kompensationsverzögerer des einen des mindestens einen ersten Polarisationsverzögerers (300A) und des mindestens einen zweiten Polarisationsverzögerers (300B) auf derselben Seite des schaltbaren Flüssigkristallverzögerers wie die Oberflächenausrichtungsschichten angeordnet ist, die dazu angeordnet sind, eine homöotrope Ausrichtung in dem benachbarten Flüssigkristallmaterial bereitzustellen.

5. Anzeigevorrichtung (100) nach Anspruch 3 oder 4, wobei der mindestens eine passive Kompensationsverzögerer des einen des mindestens einen ersten Polarisationsverzögerers (300A) und des mindestens einen zweiten Polarisationsverzögerers (300B) einen passiven einachsigen Verzögerer umfasst, dessen optische Achse senkrecht zur Ebene des Verzögerers verläuft, wobei der passive einachsige Verzögerer optional eine Verzögerung für Licht mit einer Wellenlänge von 550 nm im Bereich von -400 nm bis -2100 nm, vorzugsweise im Bereich von -700 nm bis -1700 nm, aufweist.

6. Anzeigevorrichtung (100) nach einem der Ansprüche 1 bis 5, wobei
die Anzeigevorrichtung (100) ferner einen reflektierenden Polarisator (302) umfasst, wobei der reflektierende Polarisator (302) ein Linearpolarisator ist und wobei entweder:
für den Fall, dass der zweite zusätzliche Polarisator (318B) auf derselben Seite des räumlichen Lichtmodulators (48) wie der erste Zusatzpolarisator (318A) außerhalb des ersten Zusatzpolarisator (318A) angeordnet ist und der mindestens eine zweite Polarisationsverzögerer (300B) zwischen dem ersten Zusatzpolarisator (318A) und dem zweiten Zusatzpolarisator (318B) angeordnet ist, der Displaypolarisator (218) ein auf der Ausgangsseite des räumlichen Lichtmodulators (48) angeordneter Ausgangs-Displaypolarisator ist und der reflektierende Polarisator (302) zwischen dem ersten Zusatzpolarisator (318A) und dem mindestens einen zweiten Polarisationsverzögerer (300B) angeordnet ist; oder
für den Fall, dass die Anzeigevorrichtung (100) ferner eine Hintergrundbeleuchtung (20) umfasst, die dazu angeordnet ist, Licht auszugeben, wobei der räumliche Lichtmodulator (48) einen transmissiven räumlichen Lichtmodulator (48) umfasst, der dazu angeordnet ist, von der Hintergrundbeleuchtung (20) ausgegebenes Licht zu empfangen, wobei der Displaypolarisator (218) ein Eingangs-Displaypolarisator ist, der auf der Eingangsseite des räumlichen Lichtmodulators (48) angeordnet ist, und die Anzeigevorrichtung ferner einen Ausgangs-Displaypolarisator umfasst, der auf der Ausgangsseite des räumlichen Lichtmodulators (48) angeordnet ist, wobei der zweite Zusatzpolarisator (318B) auf der Ausgangsseite des räumlichen Lichtmodulators (48) angeordnet ist, und der mindestens eine zweite Polarisationsverzögerer (300B) zwischen dem zweiten zusätzlichen Polarisator (318B) und dem Ausgangs-Displaypolarisator angeordnet ist und der reflektierende Polarisator (302) zwischen dem Ausgangs-Displaypolarisator und dem mindestens einen zweiten Polarisationsverzögerer (300B) angeordnet ist.

7. Anzeigevorrichtung (100) nach Anspruch 6, wobei der eine des mindestens einen ersten Polarisationsverzögerers (300A) und des mindestens einen zweiten Polarisationsverzögerers (300B) der mindestens eine zweite Polarisationsverzögerer (300B) ist und der andere des mindestens einen ersten Polarisationsverzögerers (300A) und des mindestens einen zweiten Polarisationsverzögerers (300B) der mindestens eine erste Polarisationsverzögerer (300A) ist.

8. Anzeigevorrichtung (100) nach einem der vorhergehenden Ansprüche, wobei der schaltbare Flüssigkristallverzögerer des einen des mindestens einen ersten Polarisationsverzögerers (300A) und des mindestens einen zweiten Polarisationsverzögerers (300B) eine Verzögerung für Licht mit einer Wellenlänge von 550 nm mit einem ersten Verzögerungswert aufweist und der schaltbare Flüssigkristallverzögerer des anderen des mindestens einen ersten Polarisationsverzögerers (300A) und des mindestens einen zweiten Polarisationsverzögerers (300B) eine Verzögerung für Licht mit einer Wellenlänge von 550 nm mit einem zweiten Verzögerungswert aufweist, wobei der erste Verzögerungswert größer als der zweite Verzögerungswert ist, wobei optional der Betrag der Differenz zwischen der Hälfte des ersten Verzögerungswerts und dem zweiten Verzögerungswert höchstens 400 nm beträgt.

9. Anzeigevorrichtung (100) nach Anspruch 8, wobei
in Bezug auf den anderen des mindestens einen ersten Polarisationsverzögerers (300A) und des mindestens einen zweiten Polarisationsverzögerers (300B) beide Oberflächenausrichtungsschichten dazu eingerichtet sind, eine homogene Ausrichtung in dem benachbarten Flüssigkristallmaterial bereitzustellen, das eine Verzögerung für Licht mit einer Wellenlänge von 550 nm im Bereich von 450 nm bis 900 nm, vorzugsweise im Bereich von 550 nm bis 800 nm aufweist,
und
der andere des mindestens einen ersten Polarisationsverzögerers (300A) und des mindestens einen zweiten Polarisationsverzögerers (300B) ferner ein Paar passiver einachsiger Verzögerer umfasst, deren optische Achsen in der Ebene der Verzögerer liegen und gekreuzt sind und die jeweils eine Verzögerung für Licht mit einer Wellenlänge von 550 nm im Bereich von 250 nm bis 800 nm, vorzugsweise im Bereich von 400 nm bis 625 nm, aufweisen.

10. Anzeigevorrichtung (100) nach einem der Ansprüche 8 oder 9, wobei für den Fall, dass der zweite Zusatzpolarisator (318B) auf derselben Seite des räumlichen Lichtmodulators (48) wie der erste Zusatzpolarisator (318A) außerhalb des ersten Zusatzpolarisators (318A) angeordnet ist und der mindestens eine zweite Polarisationsverzögerer (300B) zwischen dem ersten Zusatzpolarisator (318A) und dem zweiten Zusatzpolarisator (318B) angeordnet ist, der räumliche Lichtmodulator (48) einen emittierenden räumlichen Lichtmodulator (48) umfasst, der dazu angeordnet ist, Licht auszugeben, wobei der Displaypolarisator (218) ein Ausgangs-Displaypolarisator ist, der auf der Ausgangsseite des emittierenden räumlichen Lichtmodulators (48) angeordnet ist, wobei der zweite Zusatzpolarisator (318B) auf der Ausgangsseite des räumlichen Lichtmodulators (48) außerhalb des ersten Zusatzpolarisators (318A) angeordnet ist und der mindestens eine zweite Polarisationsverzögerer (300B) zwischen dem ersten Zusatzpolarisator (318A) und dem zweiten Zusatzpolarisator (318B) angeordnet ist, wobei der emittierende räumliche Lichtmodulator (48) optional ein Ausgangs-Leuchtdichteprofil aufweist, dessen Halbwertsbreite mindestens 40 Grad, vorzugsweise mindestens 50 Grad, beträgt.

11. Anzeigevorrichtung (100) nach einem der Ansprüche 8 oder 9, wobei für den Fall, dass der zweite Zusatzpolarisator (318B) auf derselben Seite des räumlichen Lichtmodulators (48) wie der erste Zusatzpolarisator (318A) außerhalb des ersten Zusatzpolarisator (318A) angeordnet ist und der mindestens eine zweite Polarisationsverzögerer (300B) zwischen dem ersten Zusatzpolarisator (318A) und dem zweiten Zusatzpolarisator (318B) angeordnet ist, die Anzeigevorrichtung (100) ferner eine Hintergrundbeleuchtung (20) umfasst, die dazu angeordnet ist, Licht auszugeben, und der räumliche Lichtmodulator (48) einen transmissiven räumlichen Lichtmodulator umfasst, der dazu angeordnet ist, von der Hintergrundbeleuchtung (20) ausgegebenes Licht zu empfangen, wobei die Hintergrundbeleuchtung (20) optional ein Ausgangs-Leuchtdichteprofil aufweist, dessen Halbwertsbreite mindestens 40 Grad, vorzugsweise mindestens 50 Grad, beträgt.

12. Anzeigevorrichtung (100) nach einem der Ansprüche 1 bis 7, wobei der schaltbare Flüssigkristallverzögerer des mindestens einen ersten Polarisationsverzögerers (300A) und des mindestens einen zweiten Polarisationsverzögerers (300B) eine Verzögerung für Licht mit einer Wellenlänge von 550 nm mit einem ersten Verzögerungswert aufweist und der schaltbare Flüssigkristallverzögerer des anderen des mindestens einen ersten Polarisationsverzögerers (300A) und des mindestens einen zweiten Polarisationsverzögerers (300B) eine Verzögerung für Licht mit einer Wellenlänge von 550 nm einen zweiten Verzögerungswert aufweist, wobei die Hälfte des ersten Verzögerungswerts kleiner ist als der zweite Verzögerungswert.

13. Anzeigevorrichtung (100) nach Anspruch 12, wobei entweder:
in Bezug auf den anderen des mindestens einen ersten Polarisationsverzögerers (300A) und des mindestens einen zweiten Polarisationsverzögerers (300B) beide Oberflächenausrichtungsschichten dazu eingerichtet sind, eine homogene Ausrichtung in dem benachbarten Flüssigkristallmaterial bereitzustellen, das eine Verzögerung für Licht mit einer Wellenlänge von 550 nm in einem Bereich von 700 nm bis 2500 nm, vorzugsweise im Bereich von 850 nm bis 1800 nm aufweist, und
der andere des mindestens einen ersten Polarisationsverzögerers (300A) und des mindestens einen zweiten Polarisationsverzögerers (300B) ferner ein Paar passiver einachsiger Verzögerer umfasst, deren optische Achsen in der Ebene der Verzögerer liegen und gekreuzt sind und die jeweils eine Verzögerung für Licht mit einer Wellenlänge von 550 nm in einem Bereich von 600 nm bis 1600 nm, vorzugsweise im Bereich von 750 nm bis 1300 nm, aufweisen; oder
in Bezug auf den anderen des mindestens einen ersten Polarisationsverzögerers (300A) und des mindestens einen zweiten Polarisationsverzögerers (300B) beide Oberflächenausrichtungsschichten dazu eingerichtet sind, eine homöotrope Ausrichtung in dem benachbarten Flüssigkristallmaterial bereitzustellen, das eine Verzögerung für Licht mit einer Wellenlänge von 550 nm in einem Bereich von 700 nm bis 2500 nm, vorzugsweise im Bereich von 1000 nm bis 1800 nm aufweist, und
der andere des mindestens einen ersten Polarisationsverzögerers (300A) und des mindestens einen zweiten Polarisationsverzögerers (300B) ferner einen passiven einachsigen Verzögerer umfasst, dessen optische Achse senkrecht zur Ebene des Verzögerers verläuft und der eine Verzögerung für Licht mit einer Wellenlänge von 550 nm in einem Bereich von -700 nm bis -2500 nm, vorzugsweise im Bereich von -900 nm bis -1800 nm, aufweist.

14. Anzeigevorrichtung (100) nach einem der Ansprüche 12 oder 13, wobei für den Fall, dass der zweite Zusatzpolarisator (318B) auf derselben Seite des räumlichen Lichtmodulators (48) wie der erste Zusatzpolarisator (318A) außerhalb des ersten Zusatzpolarisators (318A) angeordnet ist und der mindestens eine zweite Polarisationsverzögerer (300B) zwischen dem ersten Zusatzpolarisator (318A) und dem zweiten Zusatzpolarisator (318B) angeordnet ist, der räumliche Lichtmodulator (48) einen emittierenden räumlichen Lichtmodulator (48) umfasst, der dazu angeordnet ist, Licht auszugeben, wobei der Displaypolarisator (218) ein Ausgangs-Displaypolarisator ist, der auf der Ausgangsseite des emittierenden räumlichen Lichtmodulators (48) angeordnet ist, wobei der zweite Zusatzpolarisator (318B) auf der Ausgangsseite des räumlichen Lichtmodulators (48) außerhalb des ersten Zusatzpolarisators (318A) angeordnet ist und der mindestens eine zweite Polarisationsverzögerer (300B) zwischen dem ersten Zusatzpolarisator (318A) und dem zweiten Zusatzpolarisator (318B) angeordnet ist.

## Revendications

1. Dispositif d'affichage (100) comprenant :
un modulateur de lumière spatial (48) ;
un polariseur d'affichage (218) agencé sur un côté du modulateur de lumière spatial (48), le polariseur d'affichage (218) étant un polariseur linéaire ;
un premier polariseur supplémentaire (318A) agencé sur le même côté du modulateur de lumière spatial (48) que le polariseur d'affichage (218), le premier polariseur supplémentaire (318A) étant un polariseur linéaire ;
au moins un premier retardateur de commande polaire (300A) agencé entre le premier polariseur supplémentaire (318A) et le polariseur d'affichage (218),
un deuxième polariseur supplémentaire (318B), le deuxième polariseur supplémentaire (318B) étant un polariseur linéaire ; et
au moins un deuxième retardateur de commande polaire (300B), dans lequel soit :
le deuxième polariseur supplémentaire (318B) est agencé sur le même côté du modulateur de lumière spatial (48) que le premier polariseur supplémentaire (318A) à l'extérieur du premier polariseur supplémentaire (318A), et l'au moins un deuxième retardateur de commande polaire (300B) est agencé entre le premier polariseur supplémentaire (318A) et le deuxième polariseur supplémentaire (318B) ; soit
le dispositif d'affichage (100) comprend en outre un rétroéclairage (20) agencé pour fournir en sortie de la lumière, le modulateur de lumière spatial (48) comprend un modulateur de lumière spatial (48) transmissif agencé pour recevoir de la lumière de sortie à partir du rétroéclairage (20), ledit polariseur d'affichage (218) est un polariseur d'affichage d'entrée agencé sur le côté entrée du modulateur de lumière spatial (48), et le dispositif d'affichage comprend en outre un polariseur d'affichage de sortie agencé sur le côté sortie du modulateur de lumière spatial (48), le deuxième polariseur supplémentaire (318B) est agencé sur le côté sortie du modulateur de lumière spatial (48), et l'au moins un deuxième retardateur de commande polaire (300B) est agencé entre le deuxième polariseur supplémentaire (318B) et le polariseur d'affichage de sortie,
dans lequel :
chacun de l'au moins un premier retardateur de commande polaire (300A) et de l'au moins un deuxième retardateur de commande polaire (300B) comprend un retardateur à cristaux liquides commutable respectif comprenant une couche de matériau à cristaux liquides et deux couches d'alignement de surface disposées adjacentes à la couche de matériau à cristaux liquides et sur des côtés opposés de celle-ci,
eu égard à l'un de l'au moins un premier retardateur de commande polaire (300A) et de l'au moins deuxième retardateur de commande polaire (300B), l'une des couches d'alignement de surface est agencée pour assurer un alignement homogène dans le matériau à cristaux liquides adjacent et l'autre des couches d'alignement de surface est agencée pour assurer un alignement homéotrope dans le matériau à cristaux liquides adjacent, et
eu égard à l'autre de l'au moins un premier retardateur de commande polaire (300A) et de l'au moins un deuxième retardateur de commande polaire (300B), les deux couches d'alignement de surface sont agencées pour assurer un alignement homogène dans le matériau à cristaux liquides adjacent ou les deux couches d'alignement de surface sont agencées pour assurer un alignement homéotrope dans le matériau à cristaux liquides adjacent.

2. Dispositif d'affichage (100) selon la revendication 1, dans lequel le retardateur à cristaux liquides commutable dudit un de l'au moins un premier retardateur de commande polaire (300A) et de l'au moins un deuxième retardateur de commande polaire (300B) a une retardance pour de la lumière d'une longueur d'onde de 550 nm ayant une première valeur de retardance dans une plage de 700 nm à 2500 nm, de préférence dans une plage de 850 nm à 1800 nm.

3. Dispositif d'affichage (100) selon la revendication 1 ou 2, dans lequel ledit un de l'au moins un premier retardateur de commande polaire (300A) et de l'au moins un deuxième retardateur de commande polaire (300B) comprend en outre au moins un retardateur de compensation passif.

4. Dispositif d'affichage (100) selon la revendication 3, dans lequel l'au moins un retardateur de compensation passif dudit un de l'au moins un premier retardateur de commande polaire (300A) et de l'au moins un deuxième retardateur de commande polaire (300B) est agencé sur le même côté du retardateur à cristaux liquides commutable que les couches d'alignement de surface qui sont agencées pour assurer un alignement homéotrope du matériau à cristaux liquides adjacent.

5. Dispositif d'affichage (100) selon la revendication 3 ou 4, dans lequel l'au moins un retardateur de compensation passif dudit un de l'au moins un premier retardateur de commande polaire (300A) et de l'au moins un deuxième retardateur de commande polaire (300B) comprend un retardateur uniaxial passif ayant son axe optique perpendiculaire au plan du retardateur, dans lequel éventuellement le retardateur uniaxial passif a une retardance pour de la lumière d'une longueur d'onde de 550 nm dans une plage de -400 nm à -2100 nm, de préférence dans une plage de -700 nm à -1700 nm.

6. Dispositif d'affichage (100) selon l'une quelconque des revendications 1 à 5, dans lequel
le dispositif d'affichage (100) comprend en outre un polariseur réfléchissant (302), le polariseur réfléchissant (302) étant un polariseur linéaire, et soit :
dans le cas où le deuxième polariseur supplémentaire (318B) est agencé sur le même côté du modulateur de lumière spatial (48) que le premier polariseur supplémentaire (318A) à l'extérieur du premier polariseur supplémentaire (318A), et l'au moins un deuxième retardateur de commande polaire (300B) est agencé entre le premier polariseur supplémentaire (318A) et le deuxième polariseur supplémentaire (318B), ledit polariseur d'affichage (218) est un polariseur d'affichage de sortie agencé sur le côté sortie du modulateur de lumière spatial (48), le polariseur réfléchissant (302) est agencé entre le premier polariseur supplémentaire (318A) et l'au moins un deuxième retardateur de commande polaire (300B) ; soit
dans le cas où le dispositif d'affichage (100) comprend en outre un rétroéclairage (20) agencé pour fournir en sortie de la lumière, le modulateur de lumière spatial (48) comprend un modulateur de lumière spatial (48) transmissif agencé pour recevoir de la lumière de sortie à partir du rétroéclairage (20), ledit polariseur d'affichage (218) est un polariseur d'affichage d'entrée agencé sur le côté entrée du modulateur de lumière spatial (48), et le dispositif d'affichage comprend en outre un polariseur d'affichage de sortie agencé sur le côté sortie du modulateur de lumière spatial (48), le deuxième polariseur supplémentaire (318B) est agencé sur le côté sortie du modulateur de lumière spatial (48), et l'au moins deuxième retardateur de commande polaire (300B) est agencé entre le deuxième polariseur supplémentaire (318B) et le polariseur d'affichage de sortie, le polariseur réfléchissant (302) est agencé entre le polariseur d'affichage de sortie et l'au moins deuxième retardateur de commande polaire (300B).

7. Dispositif d'affichage (100) selon la revendication 6, dans lequel ledit un de l'au moins un premier retardateur de commande polaire (300A) et de l'au moins un deuxième retardateur de commande polaire (300B) est l'au moins un deuxième retardateur de commande polaire (300B) et ledit autre de l'au moins un premier retardateur de commande polaire (300A) et de l'au moins un deuxième retardateur de commande polaire (300B) est l'au moins un premier retardateur de commande polaire (300A).

8. Dispositif d'affichage (100) selon l'une quelconque des revendications précédentes, dans lequel le retardateur à cristaux liquides commutable dudit un de l'au moins premier retardateur de commande polaire (300A) et de l'au moins un deuxième retardateur de commande polaire (300B) a une retardance pour de la lumière d'une longueur d'onde de 550 nm ayant une première valeur de retardance et le retardateur à cristaux liquides commutable dudit autre de l'au moins un premier retardateur de commande polaire (300A) et de l'au moins un deuxième retardateur de commande polaire (300B) a une retardance pour de la lumière d'une longueur d'onde de 550 nm a une deuxième valeur de retardance, la première valeur de retardance étant supérieure à la deuxième valeur de retardance, dans lequel éventuellement l'ampleur de la différence entre la moitié de la première valeur de retardance et la deuxième valeur de retardance est d'au plus 400 nm.

9. Dispositif d'affichage (100) selon la revendication 8, dans lequel
eu égard audit autre de l'au moins un premier retardateur de commande polaire (300A) et de l'au moins un deuxième polariseur supplémentaire (300B), les couches d'alignement de surface sont toutes deux agencées pour assurer un alignement homogène dans le matériau à cristaux liquides adjacent qui a une retardance pour de la lumière d'une longueur d'onde de 550 nm dans une plage de 450 nm à 900 nm, de préférence dans une plage de 550 nm à 800 nm, et
ledit autre de l'au moins un premier retardateur de commande polaire (300A) et de l'au moins un deuxième retardateur de commande polaire (300B) comprend en outre une paire de retardateurs uniaxiaux passifs ayant des axes optiques dans le plan des retardateurs qui sont croisés et ayant chacun une retardance pour de la lumière d'une longueur d'onde de 550 nm dans une plage de 250 nm à 800 nm, de préférence dans une plage de 400 nm à 625 nm.

10. Dispositif d'affichage (100) selon l'une quelconque des revendications 8 ou 9, dans lequel, dans le cas où le deuxième polariseur supplémentaire (318B) est agencé sur le même côté du modulateur de lumière spatial (48) que le premier polariseur supplémentaire (318A) à l'extérieur du premier polariseur supplémentaire (318A), et l'au moins un deuxième retardateur de commande polaire (300B) est agencé entre le premier polariseur supplémentaire (318A) et le deuxième polariseur supplémentaire (318B), le modulateur de lumière spatial (48) comprend un modulateur de lumière spatial (48) émissif agencé pour fournir en sortie de la lumière, le polariseur d'affichage (218) est polariseur d'affichage de sortie agencé sur le côté sortie du modulateur de lumière spatial (48) émissif, le deuxième polariseur supplémentaire (318B) est agencé sur le côté sortie du modulateur de lumière spatial (48) à l'extérieur du premier polariseur supplémentaire (318A), et l'au moins un deuxième retardateur de commande polaire (300B) est agencé entre le premier polariseur supplémentaire (318A) et le deuxième polariseur supplémentaire (318B), dans lequel éventuellement le modulateur de lumière spatial (48) émissif a un profil de luminance de sortie ayant une largeur à mi-hauteur qui est d'au moins 40 degrés, de préférence d'au moins 50 degrés.

11. Dispositif d'affichage (100) selon l'une quelconque des revendications 8 ou 9, dans lequel, dans le cas où le deuxième polariseur supplémentaire (318B) est agencé sur le même côté du modulateur de lumière spatial (48) que le premier polariseur supplémentaire (318A) à l'extérieur du premier polariseur supplémentaire (318A), et l'au moins un deuxième retardateur de commande polaire (300B) est agencé entre le premier polariseur supplémentaire (318A) et le deuxième polariseur supplémentaire (318B), le dispositif d'affichage (100) comprend en outre un rétroéclairage (20) agencé pour fournir en sortie de la lumière, et le modulateur de lumière spatial (48) comprend un modulateur de lumière spatial transmissif agencé pour recevoir de la lumière de sortie à partir du rétroéclairage (20), dans lequel éventuellement le rétroéclairage (20) a un profil de luminance de sortie ayant une largeur à mi-hauteur qui est d'au moins 40 degrés, de préférence d'au moins 50 degrés.

12. Dispositif d'affichage (100) selon l'une quelconque des revendications 1 à 7, dans lequel le retardateur à cristaux liquides commutable dudit un de l'au moins un premier retardateur de commande polaire (300A) et de l'au moins un deuxième retardateur de commande polaire (300B) a une retardance pour de la lumière d'une longueur d'onde de 550 nm ayant une première valeur de retardance et le retardateur à cristaux liquides commutable dudit autre de l'au moins un premier retardateur de commande polaire (300A) et de l'au moins un deuxième retardateur de commande polaire (300B) a une retardance pour de la lumière d'une longueur d'onde de 550 nm a une deuxième valeur de retardance, la moitié de la première valeur de retardance étant inférieure à la deuxième valeur de retardance.

13. Dispositif d'affichage (100) selon la revendication 12, dans lequel soit :
eu égard à l'autre de l'au moins un premier retardateur de commande polaire (300A) et de l'au moins un deuxième retardateur de commande polaire (300B), les couches d'alignement de surface sont toutes deux agencées pour assurer un alignement homogène du matériau à cristaux liquides adjacent qui a une retardance pour de la lumière d'une longueur d'onde de 550 nm dans une plage de 700 nm à 2500 nm, de préférence dans une plage de 850 nm à 1800 nm, et
ledit autre de l'au moins un premier retardateur de commande polaire (300A) et de l'au moins un deuxième retardateur de commande polaire (300B) comprend en outre une paire de retardateurs uniaxiaux passifs ayant des axes optiques dans le plan des retardateurs qui sont croisés et chacun ayant une retardance pour de la lumière d'une longueur d'onde de 550 nm dans une plage de 600 nm à 1600 nm, de préférence dans une plage de 750 nm à 1300 nm ; soit
eu égard à l'autre de l'au moins un premier retardateur de commande polaire (300A) et de l'au moins un deuxième retardateur de commande polaire (300B), les couches de surface d'alignement sont toutes deux agencées pour assurer un alignement homéotrope dans le matériau à cristaux liquides adjacent qui a une retardance pour de la lumière d'une longueur d'onde de 550 nm dans une plage de 700 nm à 2500 nm, de préférence dans une plage de 1000 nm à 1800 nm, et
ledit autre de l'au moins un premier retardateur de commande polaire (300A) et de l'au moins un deuxième retardateur de commande polaire (300B) comprend en outre un retardateur uniaxial passif ayant son axe optique perpendiculaire au plan du retardateur et ayant une retardance pour de la lumière d'une longueur d'onde de 550 nm dans une plage de -700 nm à -2500 nm, de préférence dans une plage de -900 nm à -1800 nm.

14. Dispositif d'affichage (100) selon la revendication 12 ou 13, dans lequel, dans le cas où le deuxième polariseur supplémentaire (318B) est agencé sur le même côté du modulateur de lumière spatial (48) que le premier polariseur supplémentaire (318A) à l'extérieur du premier polariseur supplémentaire (318A), et l'au moins un deuxième retardateur de commande polaire (300B) est agencé entre le premier polariseur supplémentaire (318A) et le deuxième polariseur supplémentaire (318B), le modulateur de lumière spatial (48) comprend un modulateur de lumière spatial (48) émissif agencé pour fournir en sortie de la lumière, le polariseur d'affichage (218) est un polariseur d'affichage de sortie agencé sur le côté sortie du modulateur de lumière spatial (48) émissif, le deuxième polariseur supplémentaire (318B) est agencé sur le côté sortie du modulateur de lumière spatial (48) à l'extérieur du premier polariseur supplémentaire (318A), et l'au moins un deuxième retardateur de commande polaire (300B) est agencé entre le premier polariseur supplémentaire (318A) et le deuxième polariseur supplémentaire (318B).
